(19) Europäisches Patentamt / European Patent Office / Office européen des brevets

(11) **EP 3 886 433 A2**

(12) **EUROPEAN PATENT APPLICATION**

(43) Date of publication:
**29.09.2021  Bulletin 2021/39**

(51) Int Cl.:
*H04N 19/11* (2014.01)      *H04N 19/40* (2014.01)
*H04N 19/56* (2014.01)      *H04N 19/96* (2014.01)
*H04N 19/119* (2014.01)    *H04N 19/122* (2014.01)
*H04N 19/176* (2014.01)

(21) Application number: **21172635.1**

(22) Date of filing: **18.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2013  US 201361773921 P**

(62) Document number(s) of the earlier application(s) in
accordance with Art. 76 EPC:
**14706976.9 / 2 965 512**

(71) Applicant: **Telefonaktiebolaget LM Ericsson (publ)
164 83 Stockholm (SE)**

(72) Inventors:
• **RUSERT, Thomas
  164 46 Kista (SE)**
• **TAMANNA, Sina
  125 42 Stockholm (SE)**

(74) Representative: **Zacco Sweden AB
P.O. Box 5581
114 85 Stockholm (SE)**

Remarks:
This application was filed on 07.05.2021 as a
divisional application to the application mentioned
under INID code 62.

(54)    **VIDEO TRANSCODING**

(57)    The embodiments relate to transcoding a coding tree unit (CTU) (10) in a picture (2) of a video sequence (1). The video sequence is High Efficiency Video Coding ,HEVC, video sequence and said coding tree unit (10) comprises one or multiple coding units of pixels. An input encoded representation of the CTU (10) is decoded to obtain coding parameters for the input encoded representation. The input encoded representation is an HEVC encoded representation and said coding tree unit (10) is recursively split in a quad-tree structure of coding units based on said coding parameters. The coding parameters are used to determine a search sub-space consisting of a subset of all possible combinations of candidate encoded representations of the CTU (10) in which each coding unit has a same or neighboring intra prediction mode as a coding unit: i) defined in said input encoded representation, ii) having intra prediction as prediction mode, and iii) occupying a same area of said picture (2) as said coding unit. The CTU (10) is encoded to get an output encoded representation of the CTU belonging to the search sub-space.

FIG. 14

EP 3 886 433 A2

**Description**

TECHNICAL FIELD

The present embodiments generally relate to video coding and decoding, and in particular to transcoding of video bit-streams.

BACKGROUND

High Efficiency Video Coding (HEVC) is a new video coding standard developed in a collaborative project between International Organization for Standardization/International Electrotechnical Commission (ISO/IEC) Moving Picture Experts Group (MPEG) and International Telecommunication Union Telecommunication standardization sector (ITU-T) Video Coding Experts Group (VCEG). The HEVC standard will become MPEG-H Part 2 in ISO/IEC and H.265 in ITU-T.

The HEVC standard introduces a new block structure called quad-tree block structure to efficiently organize picture data. Each block in the quad-tree structure, denoted coding unit (CU), has a prediction mode and a prediction-block-splitting into sub-blocks, called prediction units (PUs). Each such PU has further parameters such as motion vector(s) or intra prediction direction. The task of an encoder is, for a given video, to find the optimal settings of coding parameters so that the video is represented in an efficient way. The space of possible coding parameter combinations is huge. Thus finding the optimal quad-tree structure and other coding parameter settings that most efficiently represent a picture is a computationally expensive task.

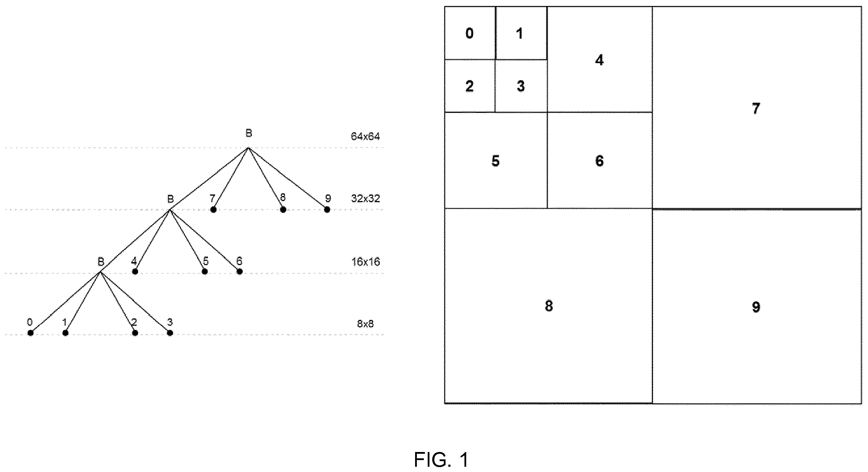

A major difference between prior video coding standards, such as MPEG-2 and H.264/MPEG-4 Advanced Video Coding (AVC), and the HEVC standard is the way coding units are defined and signaled. MPEG-2 and AVC have $16 \times 16$ luma pixel macroblocks. In AVC, each macroblock can have a prediction mode, e.g. inter or intra prediction, and can be further split into $8 \times 8$ blocks of pixels. Also $8 \times 8$ blocks can be further split into $4 \times 4$ blocks. Each sub-block in a macroblock can have a different motion vector for inter prediction or prediction direction for intra prediction. However all sub-blocks in a macroblock have the same prediction mode. In HEVC, a quad-tree block structure is used. The root in the quad-tree structure is a so called coding tree unit (CTU), which typically has a size of $64 \times 64$ luma pixels. Each of these CTUs can be split recursively in a quad-split manner, i.e. a $64 \times 64$ CTU can be split into four $32 \times 32$ blocks, each of which can further be split into four $16 \times 16$ blocks, each of which can be further split into $8 \times 8$ blocks. As an example, Fig. 1 illustrates an example of a CTU and the corresponding quad-tree structure according to the HEVC standard.

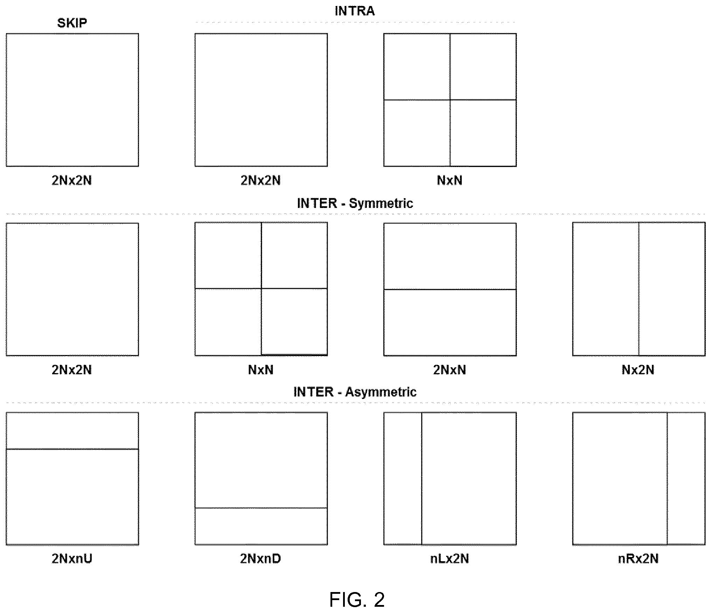

A leaf of the quad-tree structure, which is the resulting end block after splitting the CTU, is called CU. Each CU has a prediction mode, e.g. skip, inter prediction or intra prediction, and a PU split structure for prediction, typically denoted partitioning mode, as well as a transform unit (TU) split structure for applying a block transform to encode and decode the residual data after prediction. The possible PU splits with the corresponding prediction and partitioning modes are shown in Fig. 2.

As seen in Fig. 2, there are three prediction modes: 1) intra-predicted CU, 2) inter-predicted CU; 3) and skipped CU. Intra prediction uses pixel information available in the current picture as prediction reference, and a prediction direction is signaled as coding parameter for the PU. Inter prediction uses pixel information available in the past or future pictures as prediction reference, and for that purpose motion vectors are sent as coding parameters for the PUs to signal the motion relative to the prediction reference. A skipped CU is similar to an inter-predicted CU. However, no motion information is sent. Hence, a skipped CU reuses motion information already available from the current or from previous or future pictures. For intra- and inter-predicted CUs, residual pixel data is sent, whereas no such data is sent for skipped CUs.

In contrast to eight possible directional predictions of intra blocks in AVC, HEVC supports 35 intra prediction modes with 33 distinct prediction directions in addition to the planar and DC prediction modes.

A PU within a CU with inter prediction has a corresponding motion vector or vectors that point(s) to a (respective) prediction reference of a past or future picture. At the encoder, the prediction reference is chosen to be a block of pixels that closely matches the current PU. This matching is evaluated by finding the difference between the pixel values in the current PU and the pixel values in the prediction reference and choosing the prediction reference that gives the smallest residual according to someenergy measure or distortion measure, or considering both residual energy or distortion and the number of bits required for representing the coded data, or using similar strategies.

A picture could be partitioned into one or more slices. A slice could be dependent or independent. In the latter case, slices of a single picture could be decoded individually. Similar to the CU prediction mode, a slice could be predicted using the current picture (I-slice), previous pictures (P-slice), or past and future pictures (B-slice).

Finding the optimal quad-tree structure, prediction modes and partition or partitioning modes requires a computationally expensive search through the space of all possible splits and modes. When encoding source video for the first time this costly process of encoding must be carried out. An alternative to searching all possible combinations of coding parameters is to search a subset of such coding parameters. Searching such subset is less time consuming, but it will also lead to suboptimal compression performance. In general, the bigger the search space and, thus, the more time consuming the search, the better compression performance can be expected. It is very challenging to define a subset such that the search time is significantly reduced while good compression efficiency is retained.

Transcoding the bit-streams encoded with HEVC standard is required for interoperability. For example in video conferencing applications a source video bit-stream could be broadcasted over a network of heterogeneous devices. Assume two receivers A and B where receiver A is connected through a Local Area Network (LAN) and receiver B is connected through a wireless connection. It is known that receiver B has access to limited network bandwidth. Hence, the bit-rate of video stream must be reduced for receiver B.

There is, thus, a need for a technique that enables HEVC transcoding and in particular such a technique that can be computationally efficient, fast and provide good compression efficiency.

SUMMARY

It is a general objective to provide an efficient video transcoding.

This and other objectives are met by embodiments disclosed herein.

An aspect of the embodiments relates to a method of transcoding a coding tree unit of a picture in a video sequence. The video sequence is High Efficiency Video Coding ,HEVC, video sequence and the coding tree unit comprises one or multiple coding units of pixels. The method comprises decoding an input encoded representation of the coding tree unit to obtain coding parameters for the input encoded representation. The input encoded representation is an HEVC encoded representation and that the coding tree unit is recursively split in a quad-tree structure of coding units based on said coding parameters. The method also comprises determining, based on the coding parameters, a search sub-space consisting of a subset of all possible combinations of candidate encoded representations of the coding tree unit, where determining (S2) said search sub-space comprises determining, based on said coding parameters, said search sub-space consisting of the candidate encoded representation in which each coding unit has: a) a same depth, a same prediction mode and a same partitioning mode as a coding unit i) defined in said input encoded representation and ii) occupying a same area of said picture (2) as said coding unit, b) same or neighboring motion vector or vectors as a coding unit i) defined in said input encoded representation, ii) having inter prediction as prediction mode and iii) occupying a same area of said picture (2) as said coding unit or c) a same or neighboring intra prediction mode as a coding unit i) defined in said input encoded representation, ii) having intra prediction as prediction mode and iii) occupying a same area of said picture (2) as said coding unit. The method further comprises encoding the coding tree unit to get an output encoded representation of the coding tree unit belonging to the search sub-space.

Another aspect of the embodiments relates to a transcoder configured to transcode a coding tree unit of a picture in a video sequence. The video sequence is High Efficiency Video Coding ,HEVC, video sequence. The coding tree unit comprises one or multiple coding units of pixels. The transcoder comprises a decoder configured to decode an input encoded representation of the coding tree unit to obtain coding parameters for the input encoded representation. The input encoded representation is an HEVC encoded representation and that the coding tree unit is recursively split in a quad-tree structure of coding units based on said coding parameters. The transcoder also comprises a search-sub space determiner configured to determine, based on the coding parameters, a search sub-space consisting of a subset of all possible combinations of candidate encoded representations of the coding tree unit, where to determine said search sub-space comprises determining, based on said coding parameters, said search sub-space consisting of the candidate encoded representation in which each coding unit has: a) a same depth, a same prediction mode and a same partitioning mode as a coding unit i) defined in said input encoded representation and ii) occupying a same area of said picture (2) as said coding unit, b) same or neighboring motion vector or vectors as a coding unit i) defined in said input encoded representation, ii) having inter prediction as prediction mode and iii) occupying a same area of said picture (2) as said coding unit or c) a same or neighboring intra prediction mode as a coding unit i) defined in said input encoded representation, ii) having intra prediction as prediction mode and iii) occupying a same area of said picture (2) as said coding unit The transcoder further comprises an encoder configured to encode the coding tree unit to get an output encoded representation of the coding tree unit belonging to the search sub-space.

A further aspect of the embodiments relates to a transcoder configured to transcode a coding tree unit of a picture in a video sequence. The video sequence is High Efficiency Video Coding ,HEVC, video sequence. The coding tree unit comprises one or multiple coding units of pixels. The transcoder comprises a processor and a memory containing instructions executable by the processor. The processor is operable to decode an input encoded representation of the coding tree unit to obtain coding parameters for the input encoded representation. The input encoded representation is an HEVC encoded representation and that the coding tree unit is recursively split in a quad-tree structure of coding units based on said coding parameters. The processor is also operable to determine, based on the coding parameters, a search sub-space consisting of a subset of all possible combinations of candidate encoded representations of the coding tree unit, where to determine said search sub-space comprises determining, based on said coding parameters, said search sub-space consisting of the candidate encoded representation in which each coding unit has: a) a same depth, a same prediction mode and a same partitioning mode as a coding unit i) defined in said input encoded representation and ii) occupying a same area of said picture (2) as said coding unit, b) same or neighboring motion vector or vectors as a coding unit i) defined in said input encoded representation, ii) having inter prediction as prediction mode and iii) occupying a same area of said picture (2) as said coding unit or c) a same or neighboring intra prediction mode as a coding unit i) defined in said input encoded representation, ii) having intra prediction as prediction mode and iii) occupying a same area of said picture (2) as said coding unit. The processor is further operable to encode the coding tree unit to get an output encoded representation of the coding tree unit belonging to the search sub-space.

Yet another aspect of the embodiments relates to a transcoder for transcoding a coding tree unit of a picture in a video sequence. The video sequence is High Efficiency Video Coding ,HEVC, video sequence. The coding tree unit comprises one or multiple coding units of pixels. The transcoder comprises a decoding module for decoding an input encoded representation of the coding tree unit to obtain coding parameters for the input encoded representation. The input encoded representation is an HEVC encoded representation and that the coding tree unit is recursively split in a quad-tree structure of coding units based on said coding parameters. The transcoder also comprises a search-sub space determining module for determining, based on the coding parameters, a search sub-space consisting of a subset of all possible combinations of candidate encoded representations of the coding tree unit, where to determine said search sub-space comprises determining, based on said coding parameters, said search sub-space consisting of the candidate encoded representation in which each coding unit has: a) a same depth, a same prediction mode and a same partitioning mode as a coding unit i) defined in said input encoded representation and ii) occupying a same area of said picture (2) as said coding unit, b) same or neighboring motion vector or vectors as a coding unit i) defined in said input encoded representation, ii) having inter prediction as prediction mode and iii) occupying a same area of said picture (2) as said coding unit or c) a same or neighboring intra prediction mode as a coding unit i) defined in said input encoded representation, ii) having intra prediction as prediction mode and iii) occupying a same area of said picture (2) as said coding unit. The transcoder further comprises an encoding module for encoding the coding tree unit to get an output encoded representation of the coding tree unit belonging to the search sub-space.

Still another aspect of the embodiments relates to an apparatus, a transcoder, a user equipment or terminal configured to perform the method as described above.

Another aspect of the embodiments relates to a network device being or configured to be arranged in a network node in a communication network. The network device comprises a transcoder and the apparatus, as disclosed above.

A further aspect of the embodiments relates to a computer program configured to transcode a coding tree unit of a picture in a video sequence. The video sequence is High Efficiency Video Coding ,HEVC, video sequence and the coding tree unit comprises one or multiple coding units of pixels. The computer program comprises code means which when run on a computer causes the computer to decode an input encoded representation of the coding tree unit to obtain coding parameters for the input encoded representation. The input encoded representation is an HEVC encoded representation and that the coding tree unit is recursively split in a quad-tree structure of coding units based on said coding parameters .The code means also causes the computer to determine, based on the coding parameters, a search sub-space consisting of a subset of all possible combinations of candidate encoded representations of the coding tree unit, where to determining said search sub-space comprises determining, based on said coding parameters, said search sub-space consisting of the candidate encoded representation in which each coding unit has: a) a same depth, a same prediction mode and a same partitioning mode as a coding unit i) defined in said input encoded representation and ii) occupying a same area of said picture (2) as said coding unit, b) same or neighboring motion vector or vectors as a coding unit i) defined in said input encoded representation, ii) having inter prediction as prediction mode and iii) occupying a same area of said picture (2) as said coding unit or c) a same or neighboring intra prediction mode as a coding unit i) defined in said input encoded representation, ii) having intra prediction as prediction mode and iii) occupying a same area of said picture (2) as said coding unit The code means further causes the computer to encode the coding tree unit to get an output encoded representation of the coding tree unit belonging to the search sub-space.

A related aspect of the embodiments defines a computer program product comprising computer readable code means and a computer program according to above stored on the computer readable code means. Another related aspect of the embodiments defines carrier comprising a computer program according to above. The carrier is one of an electronic signal, an optical signal, an electromagnetic signal, a magnetic signal, an electric signal, a radio signal, a microwave signal, or a computer-readable storage medium.

BRIEF DESCRIPTION OF THE DRAWINGS

The embodiments, together with further objects and advantages thereof, may best be understood by making reference to the following description taken together with the accompanying drawings, in which:

Fig. 1 is an example of a HEVC quad-tree structure with a corresponding coding tree unit;

Fig. 2 schematically illustrates prediction modes and partitioning modes available in HEVC;

Fig. 3 schematically illustrates a video sequence of pictures;

Fig. 4 is a flow diagram illustrating a method of transcoding a coding tree unit of a picture in a video sequence according to an embodiment;

Fig. 5 schematically illustrates a general transcoder data flow;

Fig. 6 is a schematic block diagram of a simple cascaded transcoder performing an exhaustive search during transcoding of an input video bit-stream;

Fig. 7 schematically illustrates a coding tree unit in which every coding unit is split;

Fig. 8 schematically illustrates an example of a coding tree unit and corresponding quad-tree structure when re-using coding unit depths, prediction modes and partitioning modes according to an embodiment;

Fig. 9 schematically illustrates an example of a coding tree unit and corresponding quad-tree structure when re-using coding unit depths according to an embodiment;

Fig. 10 schematically illustrates an example of a quad-tree structure when re-using prediction modes according to an embodiment;

Fig. 11 schematically illustrates an example of a quad-tree structure when re-using partitioning modes according to an embodiment;

Fig. 12 schematically illustrates an example of a quad-tree structure when re-using intra prediction modes according to an embodiment;

Fig. 13 schematically illustrates an example of a coding tree unit and corresponding quad-tree structure when re-using motion vectors according to an embodiment;

Fig. 14 is a schematic block diagram of a transcoder according to an embodiment;

Fig. 15 is a schematic block diagram of a transcoder according to another embodiment;

Fig. 16 is a schematic block diagram of a transcoder according to a further embodiment;

Fig. 17 is a schematic block diagram of an encoder according to an embodiment;

Fig. 18 is a schematic block diagram of a decoder according to an embodiment;

Fig. 19 is a schematic block diagram of a computer according to an embodiment;

Fig. 20 is a schematic block diagram of a user equipment or terminal according to an embodiment;

Fig. 21 is a schematic block diagram of a network device according to an embodiment;

Fig. 22 is a diagram comparing transcoder bit-rate ratio and overhead performance for a transcoder according to an embodiment (AT) and a simple cascaded transcoder (ST);

Fig. 23 is a diagram comparing transcoder encoding time for a transcoder according to an embodiment (AT) and a simple cascaded transcoder (ST);

Fig. 24 is a diagram comparing peak-signal-to-noise-ratio (PSNR) and bit-rate performance for a transcoder according to an embodiment (AT) and a simple cascaded transcoder (ST);

Fig. 25 is an overview of various transcoding scenarios;

Fig. 26 is an overview of a video coding and decoding process;

Fig. 27 is an overview of a video encoding process;

Fig. 28 is a diagram schematically illustrating transcoding loss;

Fig. 29 is a diagram illustrating bit-rate ratio and overhead performance for Kimono 1920 × 1080;

Fig. 30 is a diagram illustrating average bit-rate ratio and overhead performance for Kimono 1920 × 1080;

Fig. 31 is a diagram illustrating transcoders performance through average bit-rate ratio and overhead;

Fig. 32 is a SCT model Rate-Distortion plot for Johnny 1280 × 720;

Fig. 33 is a Rate-Distortion plot for Johnny 1280 × 720;

Figs. 34A and 34B are diagrams illustrating FPR and MV transcoding performance with LDM configuration for sequence Johnny;

Figs. 35A and 35B are diagrams illustrating FPR and MV transcoding performance with LDM configuration for sequence Johnny;

Figs. 36A to 36E are diagrams illustrating class average bit-rate ratio and overhead transcoding performance with LDM configuration;

Figs. 37A to 37E are diagrams illustrating class average bit-rate ratio and overhead transcoding performance with RAM configuration;

Figs. 38A to 38E are diagrams illustrating transcoding time with LDM configuration;

Figs. 39A to 39E are diagrams illustrating transcoding time with RAM configuration;

Fig. 40 is a schematic block diagram of a transcoder according to a further embodiment; and

Fig. 41 is a schematic block diagram of a transcoder according to yet another embodiment.

DETAILED DESCRIPTION

Throughout the drawings, the same reference numbers are used for similar or corresponding elements.

The embodiments generally relate to encoding and decoding of pictures in a video sequence, and in particular to transcoding of video bit-streams into transcoded video bit-streams.

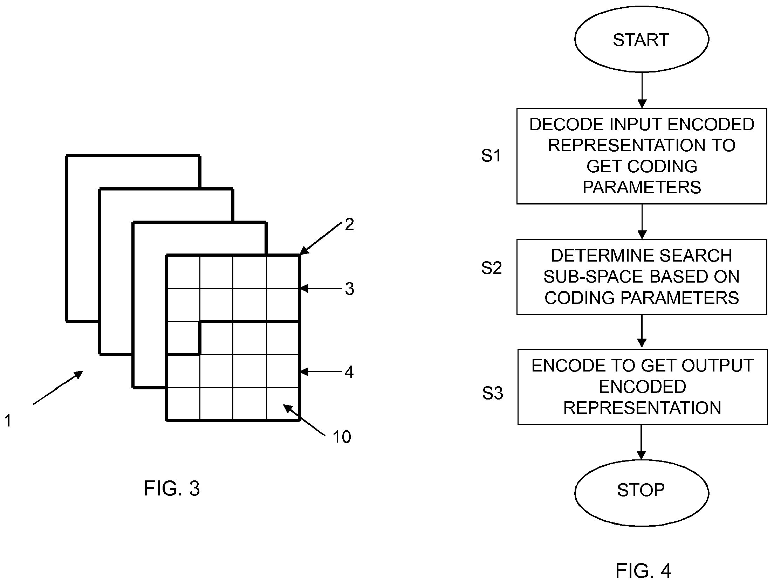

Fig. 3 is a schematic overview of an example of a video sequence 1 comprising multiple pictures 2, sometimes denoted frames in the art. A picture 2 of the video sequence 1 may optionally be partitioned into one or more so-called slices 3, 4. A slice 3, 4 of a picture 2 could be dependent or independent. An independent slice 3, 4 can be decoded without data from other slices in the picture 2. Hence, even if one or more slices of the picture 2 become lost during the transmission from an encoder to a decoder, the decoder can still decode correctly received independent slices of the picture 2.

According to a particular embodiment a picture 2 comprises one or, more typically, multiple, i.e. at least two, so called coding tree units (CTUs) or coding tree blocks (CTBs). As is well known in the art, pixels of a picture 2, also denoted samples, generally have a respective pixel value, or sample value, typically representing a color of the pixel. Various color formats and corresponding color components are available including luminance (luma) and chrominance (chroma). Hence, generally a pixel has two components: luminance and chrominance, which is defined according to the color space. Luminance or luma is the brightness. Chrominance, or chroma, is the color. In such a case, a picture 2 could be decomposed into luma CTBs and chroma CTBs. Thus, a given block of pixels occupying an area of the picture 2 constitutes a luma CTB if the pixels have a respective luma value. Two corresponding chroma CTBs occupy the same area of the picture 2 and have pixels with respective chroma values. A CTU comprises such a luma CTB and the corresponding two chroma CTBs. Reference number 10 in Fig. 3 indicates such a CTU 10 in the picture 2.

The size of a CTU 10, and thereby of a luma CTB could be fixed or predefined, such as 64×64 pixels. Alternatively, the size of the CTU 10 is set by the encoder and signaled to decoder in the video bit-stream, such as 64×64 pixels, 32×32 pixels or 16×16 pixels.

In the following, the embodiments will be further discussed in connection with transcoding a CTU of a picture in a video sequence. As discussed in the foregoing, the size of a CTU and the size of its including luma CTB are identical. Hence, the embodiments likewise relate to transcoding of a CTB, such as a luma CTB or more generally a block of pixels in a picture.

A CTU comprises one or more so-called coding units (CUs) of pixels and a luma/chroma CTB correspondingly comprises one or more so-called luma/chroma coding blocks (CBs) of pixels.

In a particular embodiment, a CTU (CTB) is partitioned into one or more CUs (CBs) to form a quad-tree structure as shown in Fig. 1. Hence, each CTU in a picture can be split recursively in a quad-split manner, e.g. a CTU of 64×64 pixels can be split into four CUs of 32×32 pixels, each of which can be split into four CUs of 16×16 pixels, each of which can be further split into four CUs of 8×8 pixels. This recursively splitting of a CTU can take place in a number of steps or depths from a largest coding unit (LCU) size, i.e. CTU, such as 64×64 pixels, generally having depth 0, down to a smallest coding unit (SCU) size, such as 8×8 pixels. The size of the SCU can be fixed or predefined, such as 8×8 pixels. Alternatively, it is determined by the encoder and signaled to the decoder as part of the video bit-steam.

The left part of Fig. 1 illustrates the quad-tree structure of the CTU shown to the right. In the illustrative example, CUs numbers 7-9 are of depth 1, i.e. 32×32 pixels, CUs number 4-6 are of depth 2, i.e. 16×16 pixels and CUs numbers 0-3 are of depth 3, i.e. 8×8 pixels.

A CTU (L×L pixels) recursively split in a quad-tree structure of CUs implies, herein, that the CTU can be split into four equally sized CUs (L/4×L/4 pixels). Each such CU may be further split into four equally sized CUs (L/16×L/16) and so on down to a smallest coding unit size or lowest depth.

Fig. 4 is a flow diagram illustrating a method of transcoding a CTU of a picture in a video sequence. The CTU comprises one or multiple CUs of pixels. The method comprises decoding, in step S1, an input encoded representation of the CTU to obtain coding parameters for the input encoded representation. A next step S2 comprises determining a search sub-space based on the coding parameters obtained in step S1. The search sub-space consists of a subset of all possible combinations of candidate encoded representations of the CTU. The CTU is then encoded in step S3 to get an output encoded representation of the CTU belonging to the search sub-space determined in step S2.

In a particular embodiment, the method of Fig. 4 comprises transcoding a CTB of a picture in a video sequence, such as a luma CTB. The CTB comprises one or more CBs of pixels. The method comprises decoding, in step S1, an input encoded representation of the CTB to obtain coding parameters for the input encoded representation. A next step S2 comprises determining a search sub-space based on the coding parameters obtained in step S1. The search sub-space consists of a subset of all possible combinations of candidate encoded representations of the CTB. The CTB is then encoded in step S3 to get an output encoded representation of the CTB belonging to the search sub-space determined in step S2.

Hence, the transcoding method as shown in Fig. 4 uses or re-uses coding parameters retrieved during the decoding of an input encoded representation in order to limit the search space of all possible combinations of candidate encoded representations of the CTU/CTB. This means that the transcoding method limits or restricts the number of candidate encoded representations that need to be tested as suitable output encoded representation for the CTU/CTB to merely a subset of all the available candidate encoded representations.

The limitation or restriction of the search sub-space in step S2 based on retrieved coding parameters implies that the transcoding method will be computationally less complex and faster as compared to using an exhaustive search or encoding, which basically involves testing all available candidate encoded representations for the CTU.

In a particular embodiment, step S1 comprises decoding the input encoded representation of the CTU to obtain pixel values of the pixels and the coding parameters. The encoding in step S3 then preferably comprises encoding the pixel values of the pixels to get the output encoded representation belonging to the search sub-space.

The pixel values could be color values, such as one luma value and two chroma values per pixel for a CTU, one luma value per pixel for a luma CTB, or one or two chroma values per pixel for a chroma CTB.

In an embodiment, step S3 of Fig. 4 comprises selecting, as the output encoded representation, the candidate encoded representation i) belonging to the search sub-space and ii) optimizing a rate-distortion quality metric.

Thus, in this embodiment the candidate encoded representation that results in the best rate-distortion quality metric of the candidate encoded representations belonging to the search sub-space is selected and used as output encoded representation of the CTU. Various rate-distortion quality metrics are known in the art and can be used according to the embodiments. The rate-distortion quality metric acts as a video quality metric measuring both the deviation from a source material, i.e. raw/decoded video data, and the bit cost for each possible decision outcome, i.e. candidate encoded representation. In an example, the bits are mathematically measured by multiplying the bits cost by the Langrangian, a value representing the relationship between bit cost and quality for particular quality level. The deviation from the source material is usually measured as the mean squared error in order to maximize the peak-signal-to-noise-ratio (PSNR) video quality metric.

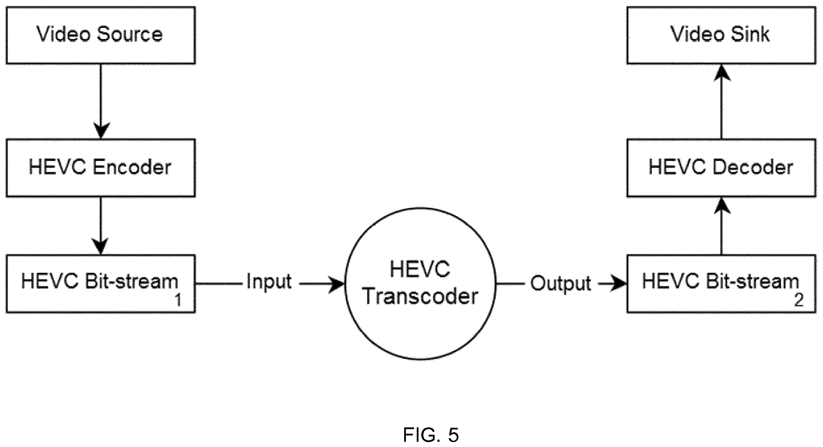

Fig. 5 is a schematic overview of the general data flow in connection with a HEVC transcoding operation. A video sequence of pictures is generated in a video source and encoded by a HEVC encoder into a first or input HEVC bit-stream (HEVC Bit-streami). This input HEVC bit-stream is sent to a HEVC transcoder according to an embodiment to generate a second or output HEVC bit-stream (HEVC Bit-stream$_2$). The output HEVC bit-stream is sent to a HEVC decoder, where it is decoded to generate video data that can be processed, such as rendered or played in a video sink.

Hence, in a preferred embodiment the method in Fig. 4 is a method of transcoding a picture in a HEVC (H.265 or MPEG-H Part 2) video sequence. The input and output encoded representations are then input and output HEVC (H.265 or MPEG-H Part 2) encoded representations.

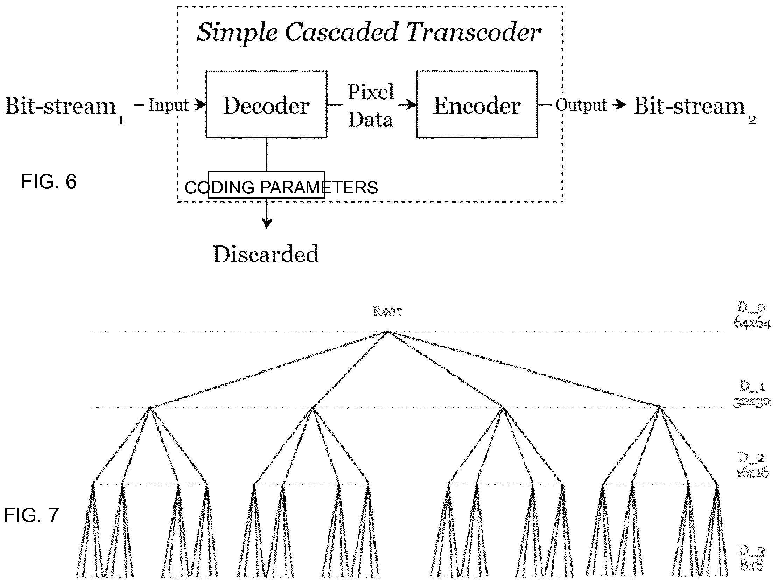

Generally, a transcoder can be seen as a cascaded combination of a decoder and an encoder. A "simple", in terms of implementation but not in terms of computational complexity, cascaded transcoder (SCT or ST) would decode the input bitstream, using a decoder, see Fig. 6, and then encode the decoded video based on the decoded pixels (raw video), using an encoder. In order to determine the output bitstream, the encoder would search a search space of all combinations of quad-tree structures for the CTU, prediction modes, partitioning modes, intra prediction modes and motion vectors. As illustrated in Fig. 6 the simple cascaded transcoder fully decodes the input bit-stream and discards any information except the pixel data, i.e. the raw video sequence. The encoder of the simple cascaded transcoder will exhaustively search the space of all quad-tree structures and prediction and partitioning modes regardless of how the initial input bit-stream was encoded.

Hence, the simple cascaded transcoder will try splitting the CTU from depth zero to maximum depth and trying each prediction and partitioning mode. Common maximum depth for HEVC encoder configurations is four levels. Assuming a maximum CU size of 64×64 pixels and splitting every CU would produce the quad-tree shown in Fig. 7. Without any optimization, the simple cascaded transcoder has to try every enumeration of this tree in order to achieve a best possible compression performance.

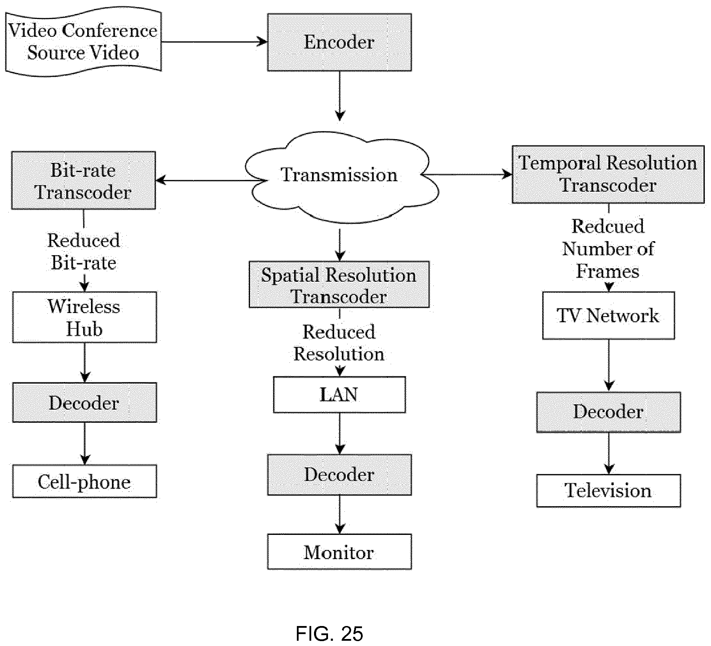

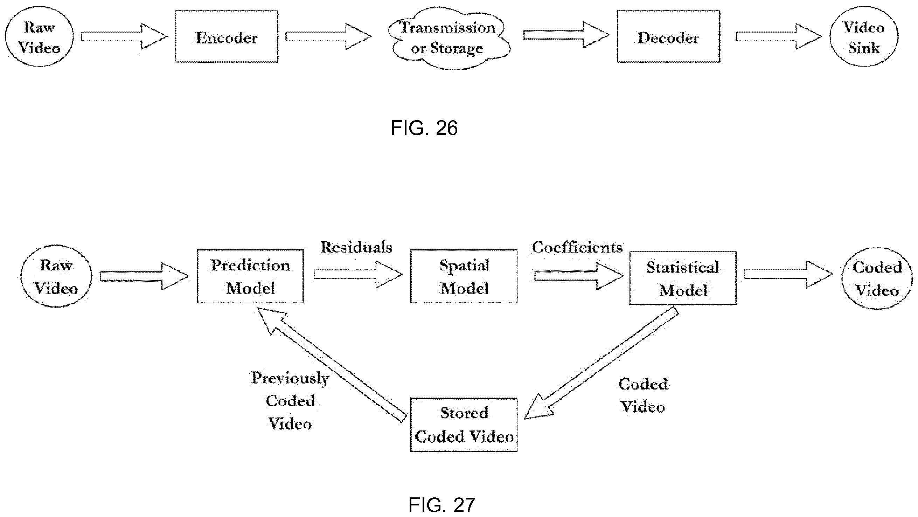

Fig. 25 is an overview of various transcoding scenarios, Fig. 26 is an overview of a video coding and decoding process and Fig. 27 is an overview of a video encoding process.

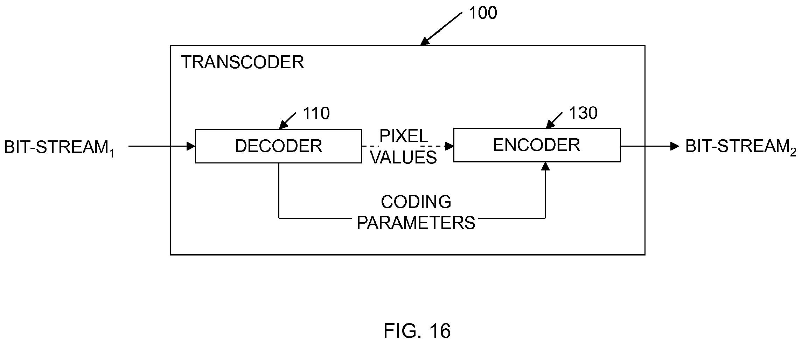

Fig. 16 schematically illustrates a transcoder 100 operating according to an embodiment. Hence, in clear contrast to the simple cascaded transcoder as shown in Fig. 6, the transcoder 100 will use coding parameters obtained during decoding of the input bit-stream by the deocoder 110 to avoid exhaustive search. The extracted coding parameters are used during the encoding of the pixel values in the encoder 130 in order to restrict the search space of available candidate encoded representations to merely a subset of all possible such candidate encoded representations. Hence, coding parameters from the input bit-stream can be copied and re-used by the encoder 130. The encoder 130 can then re-calculate the pixel value residuals, perform quantization, transformation and entropy coding to produce the output bit-stream.

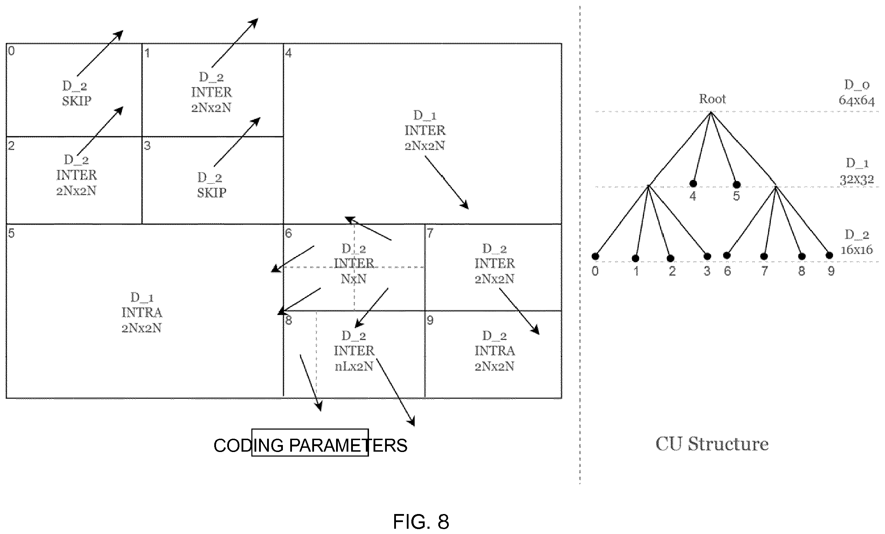

Herein, various embodiments of using coding parameters extracted from an input encoded representation in the transcoding of the input encoded representation will be presented. In these embodiments, a CTU as exemplified by Fig. 8 has been used. As is seen from Fig. 8, the CTU is recursively split in a quad-tree structure of CUs having a respective depth within the quad-tree structure. The respective depths preferably extend from depth 0, i.e. no split of the CTU, down to a maximum depth, which is either predefined, such as 4, or defined in the video bit-stream. In Fig. 8 the depths are denoted as D_?, e.g. D_1, D_2. Each CU of the CTU has a respective prediction mode, such as intra prediction (intra), inter prediction (inter) or skipped mode (skip), see Fig. 2. A CU also has a partitioning mode such as shown in Fig. 2. Thus, the decision whether to code a picture area using skip, inter or intra prediction is made at the CU level. A prediction unit (PU) partitioning structure has its root at the CU level. Depending on the basic prediction type decision, the luma and chroma CBs can then be further split in size and predicted from luma and chroma prediction blocks (PBs). Each such PU has at least one associated motion vector (indicated by arrow in Fig. 8) if present in an inter-predicted CU or an associated intra prediction mode, i.e. one of 33 available intra prediction directions, planar mode or DC mode, if present in an intra-predicted CU.

In a first embodiment, the at least one CTU of the picture is recursively split in a quad-tree structure of CUs having a respective depth within the quad-tree structure. Each CU has a respective prediction mode and a respective partitioning mode. In this embodiment, the coding parameters extracted in step S1 of Fig. 4 define the respective depths, the respective prediction modes, the respective partitioning modes, at least one motion vector for any CU having inter prediction as prediction mode and intra prediction mode for any coding unit having intra prediction as prediction mode.

In this embodiment step S2 of Fig. 4 comprises determining, based on the coding parameters, the search sub-space consisting of candidate encoded representations in which a, preferably each CU of the CTU has

a) a same depth, a same prediction mode and a same partitioning mode as a coding unit i) defined in the input encoded representation and ii) occupying a same area of the picture as the coding unit; and
b) a same motion vector (P prediction) or same motion vectors (B prediction) as a coding unit i) defined in the input encoded representation, ii) having inter prediction as prediction mode and iii) occupying a same area of the picture as the coding unit; or

c) a same intra prediction mode as a coding unit i) defined in the input encoded representation, ii) having intra prediction as prediction mode and iii) occupying a same area of the picture as the coding unit.

Hence, in this embodiment the quad-tree structure of the output encoded representation will be identical to the input encoded representation. Hence, this means that the quad-tree structure, prediction and partitioning modes, motion vectors and intra prediction modes as shown in Fig. 8 for the CTU in the input encoded representation will be re-used for the corresponding picture area, i.e. CTU, in the output encoded representation. The coding parameters will therefore be copied for the output encoded representation and then the normal encoding procedure is carried on by re-calculating the residuals, quantization, transformation and entropy coding to produce the output encoded representation.

In an alternative embodiment, b) above involves b) a same or neighboring motion vector (P prediction) or same or neighboring motion vectors (B prediction) as a coding unit i) defined in the input encoded representation, ii) having inter prediction as prediction mode and iii) occupying a same area of the picture as the coding unit. Correspondingly, c) above involves c) a same or neighboring intra prediction mode as a coding unit i) defined in the input encoded representation, ii) having intra prediction as prediction mode and iii) occupying a same area of the picture as the coding unit. Neighboring intra prediction mode is defined further in the sixth embodiment here below and neighboring motion vector is defined further in the seventh embodiment here below.

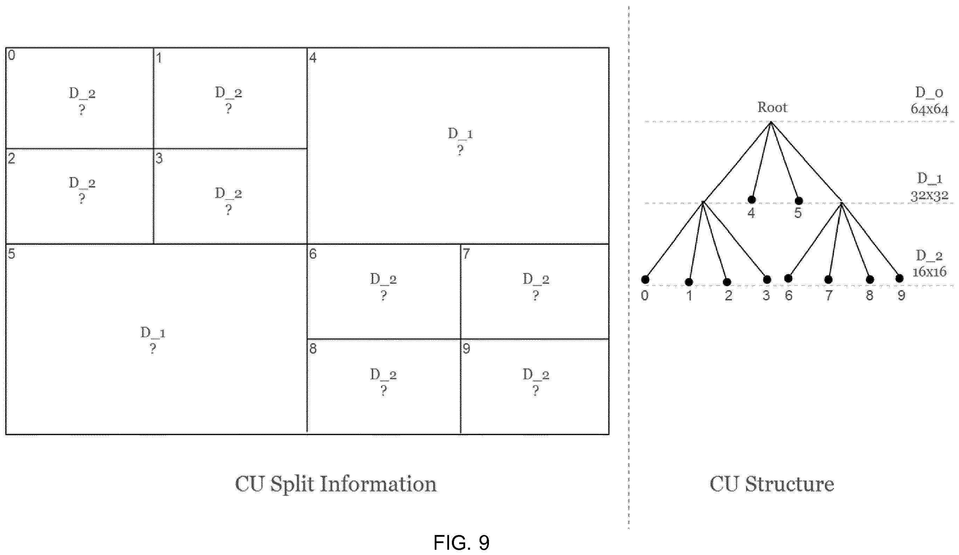

In a second embodiment, the at least one CTU of the picture is recursively split in a quad-tree structure of CUs. In this second embodiment, the coding parameters extracted in step S1 define the quad-tree structure. Hence, the coding parameters define or enable generation of information defining the quad-tree structure and the split of the CTU into CUs. For instance, the coding parameters could define the quad-tree structure as shown in Fig. 9.

In this embodiment, step S2 comprises determining, based on the coding parameters, the search sub-space consisting of candidate encoded representations re-using the quad-tree structure defining the split of the CTU into CUs.

Thus, if the current CTU of the input encoded representation had a quad-tree structure and CU split as shown in Fig. 9 then only candidate encoded representations having such a quad-tree structure and CU split will be tested in order to select the output encoded representation of the CTU. This means that the search sub-space will be limited to candidate encoded representations having this particular quad-tree structure.

In a third embodiment, the at least one CTU of the picture is recursively split in a quad-tree structure of CUs having a respective depth within the quad-tree structure. In the third embodiment, the coding parameters extracted in step S1 define the respective depths of the coding units in the quad-tree structure.

In this embodiment, step S2 comprises determining, based on the coding parameters, the search sub-space consisting of candidate encoded representations in which a, preferably each, CU of the CTU has a same or shallower depth as compared to a CU i) defined in the input encoded representation and ii) occupying an area or portion of the picture encompassed by an area or portion occupied by the CU. Shallower depth implies that the CU has a depth value that is closer to the minimum depth, i.e. zero, as compared to the CU defined in the input encoded representation. For instance, CU number 0 in Fig. 9 has depth value 2. A same depth value implies a depth value 2, i.e. a CU size of 16×16 pixels if depth value zero indicates a CTU size of 64×64 pixels. A shallower depth implies a depth value of 1 or 0, i.e. a CU size of 32×32 pixels or 64×64 pixels.

Fig. 9 schematically illustrates the concept of the first and second embodiments where information determining CU splits and the quad-tree structure is re-used.

Compared to the space of all possible quad-tree splits, Fig. 7, this embodiment has a significantly smaller sub-space to search. However, in each leaf the prediction information, e.g. prediction and partitioning mode, motion vectors, intra prediction modes, are re-estimated, which requires greater number of calculations compared to the first embodiment. Notice that there will be no further splits once a leaf node of the input encoded representation is copied in an implementation example. Therefore, as an example, CU number 4 and 5 will be at depth 1 (32×32) in available candidate encoded representations of the search sub-space.

An alternative to copying the quad-tree structure from the input encoded representation is to consider both the quad-tree structure of the input encoded representation and one or more alternative quad-tree structures in the search space. With reference to Fig. 9, the search sub-space could consist of the candidate encoded presentations with the quad-tree structure given in Fig. 9 and, additionally, the candidate encoded representations with coarser quad-tree structure, i.e. shallower CUs. For instance, since CUs numbers 0-3 are of size 16×16 pixels (depth level 2), a 32×32 block (depth level 1) covering the area in the picture occupied by these CUs numbers 0-3 could be evaluated as well. Additionally, a 64×64 CU (depth level 0) could be evaluated, too.

An intuitive motivation for evaluating more "shallow" trees is that when an input encoded representation is transcoded to a lower bit rate, the quad-tree structure could be expected to become coarser, since that will reduce the number of bits to signal CTU splits. At the same time, if the bit rate is reduced, the quantization step size is typically increased, so that even if a coarser CU split should model the video content less accurately, there may not be more transform coefficients to code.

In a particular embodiment, step S2 comprises determining, based on the coding parameters, the search sub-space consisting of candidate encoded representations in which each coding unit has a same depth as a coding unit i) defined in the input encoded representation and ii) occupying a same area in the picture as the coding unit. Thus, in this particular embodiment no coarser quad-tree structures are evaluated.

The depth of a CU defines, in an embodiment, the size of the CU in terms of a number of pixels relative to the size of the CTU.

Coding parameters defining the quad-tree structure or the respective depths of the coding units in the quad-tree structure typically include so-called split flags. For instance, the following set of split flags would represent the quad-tree structure of Fig. 9: 1, 1, 0, 0, 0, 0, 0, 0, 1, 0, 0, 0, 0. The first $1_{bin}$ indicates that the CTU is split into four $32 \times 32$ CUs (depth 1 CUs). The second $1_{bit}$ indicates that the first depth 1 CU is split into four $16 \times 16$ CUs (depth 2 CUs). The following four $0_{bin}$ indicate that these four depth 2 CUs are not split further. The fifth and sixth $0_{bin}$ indicate that the second and third depth 1 CUs are not split further. The following $1_{bin}$ indicates that the fourth depth 1 CU is split into four depth 2 CUs and the following four $0_{bin}$ indicate that these are not further split.

In a fourth embodiment, the CTU is recursively split in a quad-tree structure of CUs having a respective prediction mode. In this embodiment, the coding parameters extracted in step S1 define the respective prediction modes. Step S2 then preferably comprises determining, based on the coding parameters, the search sub-space consisting of candidate encoded representations in which a, preferably each, CU of the CTU has a same prediction mode as a CU i) defined in the input encoded representation and ii) occupying an area of the picture encompassing an area occupied by the CU.

In a particular embodiment the prediction mode is selected from a group consisting of intra prediction, inter prediction and skip mode.

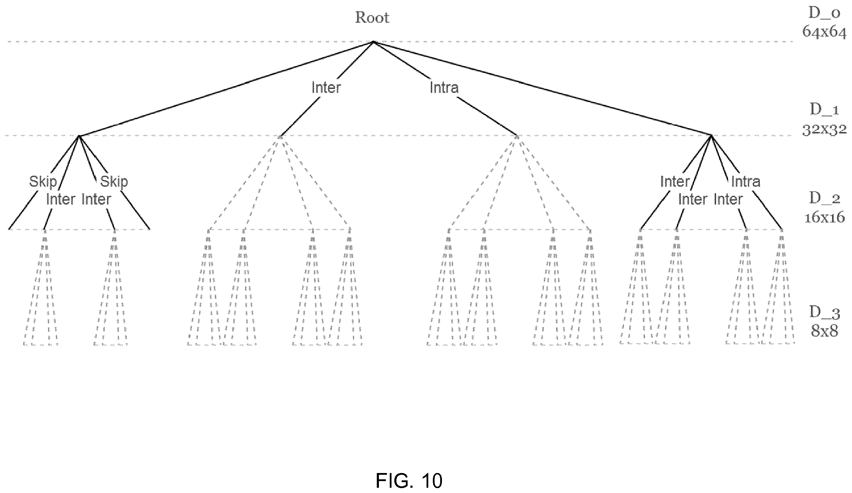

The fourth embodiment reduces the search space by re-using the prediction modes. Consider the example CTU of Fig. 8. Extracting the prediction modes and superimposing it on the full quad-tree structure of possible CU splits produces the quad-tree structure in Fig. 10.

This quad-tree tree is smaller than the full quad-tree tree shown in Fig. 7. The dashed lines in Fig. 10 denote the potential finer splits. The transcoder will re-use the available prediction modes if it decides to split the corresponding parent node. Child nodes of the parent nodes, to which the prediction mode is known, must, in a preferred embodiment, inherit the prediction mode of the parent node, and therefore, the search space will shrink. In an embodiment, this applies to inter and intra prediction modes only since skipped CUs are not split further. While re-using prediction mode the transcoder still has to evaluate various partitioning modes, e.g., $2N \times N$, $N \times 2N$, etc, for inter prediction. If skip mode pops up, the splitting will be stopped and the CU will be encoded with $2N \times 2N$ skip mode.

In a fifth embodiment, the CTU is recursively split in a quad-tree structure of CUs having a respective partitioning mode. In this embodiment, the coding parameters extracted in step S1 define the respective partitioning modes. Step S2 then preferably comprises determining, based on the coding parameters, the search sub-space consisting of candidate encoded representations in which a, preferably each, CU of the CTU has a same or shallower partitioning mode as compared to a CU i) defined in the input encoded representation and ii) occupying an area of the picture encompassing an area occupied by the CU.

In a particular embodiment, a partitioning mode of a CU (CB) defines a respective size of one or more PUs (PBs) in terms of a number of pixels into which the CU (CB) is split. In another particular embodiment, the one or more PUs of the CU have a same prediction mode selected from intra prediction or inter prediction but may have different intra prediction modes or different motion vectors.

Table 1 below indicates the search sub-space of same or shallower partitioning modes for various input partitioning modes.

Table 1 - search space of partitioning modes

| Input partitioning mode | Search sub-space |
| --- | --- |
| $2N \times 2N$ | $2N \times 2N$ (intra, inter) |
| $N \times N$ | $N \times N$, $2N \times 2N$ (intra) <br> $NxN$, $2N \times N$, $N \times 2N$, $2N \times 2N$ (inter) |
| $2N \times N$ | $2N \times N$, $2N \times 2N$ (inter) |
| $N \times 2N$ | $N \times 2N$, $2N \times 2N$ (inter) |
| $2N \times nU$ | $2N \times nU$, $2N \times 2N$ (inter) |
| $2N \times nD$ | $2N \times nD$, $2N \times 2N$ (inter) |
| $nL \times 2N$ | $nL \times 2N$, $2N \times 2N$ (inter) |
| $nR \times 2N$ | $nR \times 2N$, $2N \times 2N$ (inter) |

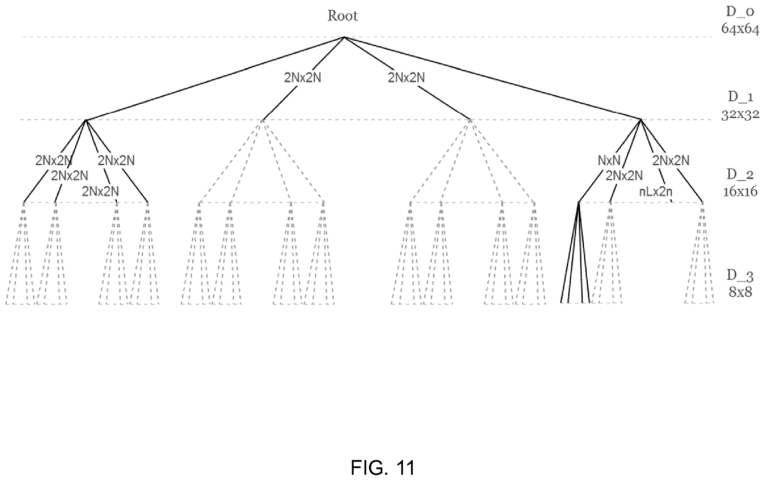

The search space is reduced in similar way as in fourth embodiment. An example of search space is shown in Fig. 11. Using this embodiment, on every node the input partitioning mode will be used, and this would reduce the search space from eight possible partitioning to one or, if shallower partitioning modes are allowed, at most four. Notice that the N×N partitioning mode is only allowed in the lowest depth. Hence, as seen in Fig. 11, re-using the partitioning modes reduces the CU split possibilities of the child nodes.

For example, a transcoder that decides to split the 64×64 CTU has to evaluate three prediction modes for 2N×2N nodes, i.e. inter 2N×2N and intra 2N×2N, skip 2N×2N. This search space is smaller as compared to the full search space in which the transcoder also had to try possible inter and intra PU splits, e.g. 2N×N, N×2N, etc.

In a sixth embodiment, the CTU is recursively split in a quad-tree structure of CUs having a respective prediction mode. In this embodiment, the coding parameters extracted in step S1 define at least one respective intra prediction mode of any CU having intra prediction as prediction mode. Step S2 preferably comprises determining, based on the coding parameters, the search sub-space consisting of candidate encoded representations in which a, preferably each, CU, occupying an area of the picture encompassed by an area occupied by a CU i) defined in the input encoded representation and ii) having intra prediction as prediction mode, has a same or neighboring intra prediction mode as the CU i) defined in the input encoded representation and ii) having intra prediction as prediction mode.

In an embodiment, neighboring intra prediction mode refers to the available intra prediction directions. Generally, there are 35 intra prediction modes: mode 0 represents planar mode, mode 1 represents DC mode and modes 2-34 represent 33 different intra prediction directions. For instance, if the CU i) defined in the input encoded representation and ii) having intra prediction as prediction mode has intra prediction mode number $X \in [2,34]$ then a neighboring intra prediction mode include intra prediction mode number within the interval $[X - Y, X + Y] \in [2,34]$, where Y is a defined integer. Hence, in particular embodiments Y=1 or Y=2 or Y=3 as illustrative but non-limiting examples. Thus, neighboring intra prediction modes have similar intra prediction directions. For instance, intra prediction mode number 6, 8 could be regarded as neighboring intra prediction modes for intra prediction mode number 7.

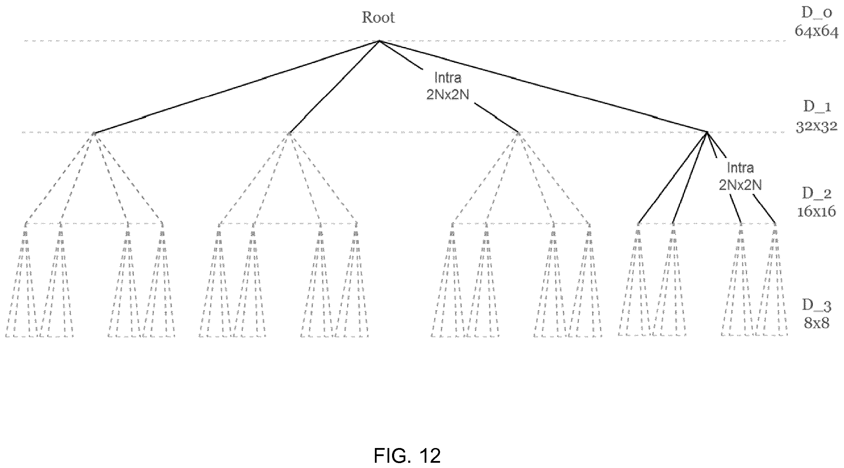

For each I-picture and intra coded CUs in P-pictures and B-pictures, intra directions of the intra-coded input CUs will be re-used. As shown in Fig. 12, CU splits are also re-used until a leaf node with intra prediction mode is reached. Further potential splits are determined by dashed lines. For instance, assume that the quad-tree structure corresponds to a CTU of B-picture. A node in level D_1 is intra predicted. The transcoder will encode that CU with intra prediction and copy the intra prediction modes, typically intra prediction directions. For other nodes of level D_1, prediction modes, partitioning modes and everything else will be re-estimated from scratch. The decision to split D_1 nodes further has to be made by the transcoder regardless of input encoded representation. Dashed lines show potential CU splits.

In a seventh embodiment, the CTU is recursively split in a quad-tree structure of CUs having a respective prediction mode. In this embodiment, the coding parameters extracted in step S1 define at least one motion vector of any CU having inter prediction as prediction mode. Step S2 preferably comprises determining, based on the coding parameters, the search sub-space consisting of candidate encoded representations in which a, preferably each, CU, occupying an area of the picture encompassed by an area occupied by a CU i) defined in the input encoded representation and ii) having inter prediction as prediction mode, has same or neighboring motion vector or vectors as the CU i) defined in the input encoded representation and ii) having inter prediction as prediction mode.

A motion vector could, in an embodiment, be represented by an X-component and a Y-component [X, Y]. In such a case, a neighboring motion vector could be defined as a motion vector within a range of motion vectors [X-x, Y-y] to [X+x, Y+y], such as [X-x, Y-x] to [X+x, Y+x]. In such a case, the parameters x, y or only x, if the same interval is used for both vector components, could be signaled in the video bit-stream or be pre-defined and thereby known to the transcoder. The parameters x, y define the search space of motion vectors around the motion vector [X, Y] that could be used if neighboring motion vectors are available.

A P-predicted CU has a single motion vector, whereas a B-predicted CU has two motion vectors.

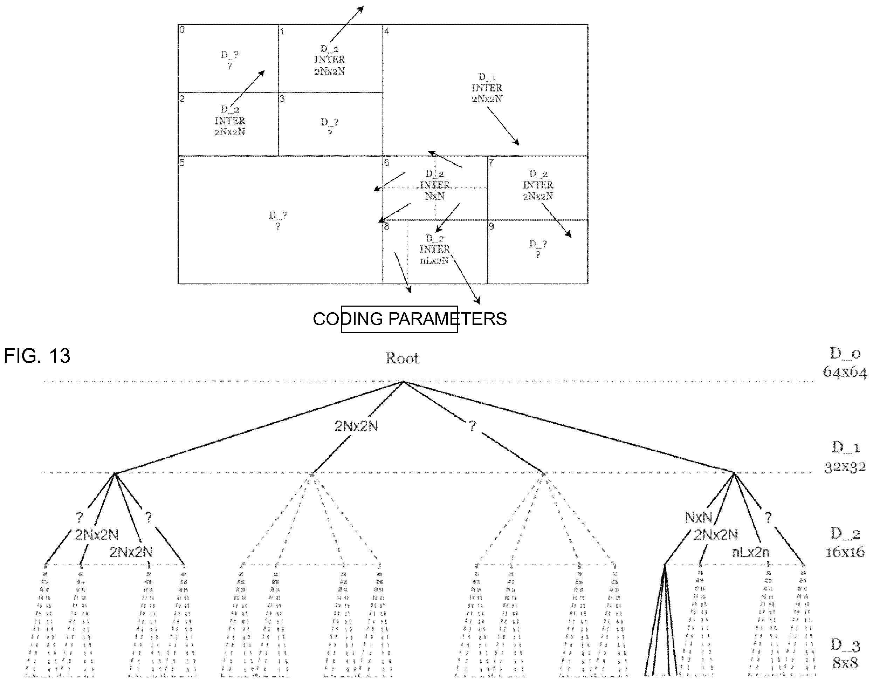

For each B- or P-picture, motion vectors from inter-coded input CUs will be re-used. For successful re-use, the corresponding CUs will, preferably, also re-use the PU split (partitioning mode) and prediction mode. Fig. 13 illustrates the search space. For the dashed lines and lines with unknown modes, every possibility is preferably evaluated.

Fig. 13 demonstrates the corresponding CTU structure and the motion vectors for the quad-tree structure. For CU number 0, 3, 5, and 9, prediction modes, partitioning modes and motion information (motion vectors or intra prediction modes) must be re-evaluated since they did not have associated with motion vectors, i.e. intra predicted or skipped blocks. The (inter) prediction mode, partitioning modes and motion vectors for other CUs, i.e. CU number 1, 2, 4, 6, 7 and 8 are copied and re-used during transcoding.

In an eight embodiment, the CTU is recursively split in a quad-tree structure of CUs comprising one or more transform units (TUs) for which a block transform is applied during decoding. In this embodiment, the coding parameters extracted in step S1 define the TU sizes. Step S2 preferably comprises determining, based on the coding parameters, the search sub-space consisting of candidate encoded representations in which one or more TUs of a, preferably each, CU of the CTU has a same or larger size in terms of number of pixels as compared to a CU i) defined in the input encoded representation and ii) occupying a same area of the picture as the CU.

In a particular embodiment, step S2 comprises determining, based on the coding parameters, the search sub-space consisting of candidate encoded representations in which one or more TUs of a, preferably each, CU of the CTU has a same size in terms of number of pixels as compared to a CU i) defined in the input encoded representation and ii) occupying a same area of the picture as the CU.

Prediction residuals of CUs are coded using block transforms. A TU tree structure has its root at the CU level. The luma CB residual may be identical to the luma transform block (TB) or may be further split into smaller luma TBs. The same applies to the chroma TBs.

In an implementation embodiment, TU sizes may be re-used (copied) from the input bit-stream. That would require the least amount of evaluations and thus be fast, although generally not lead to very good compression results. Alternatively, for each CU, all possible TU sizes could be evaluated by the encoder. That would require the most amount of TU evaluations and thus be the most computational expensive, while it may lead to the best compression results. As an intermediate alternative, the TU sizes to be evaluated could be derived based on the TU size in the input stream. For instance, if a $16 \times 16$ CU uses $8 \times 8$ TUs, then both a $8 \times 8$ TU size and a $16 \times 16$ TU size could be evaluated. The motivation for evaluating coarser TU partitions is that coarser TUs may require less signaling, in particular if the quantization step size used in the input bitstream is larger than the quantization step size used in the output bitstream. Thus this intermediate alternative could be almost as good in compression efficiency as the exhaustive alternative while not much slower than re-using TU sizes.

In a ninth embodiment the search sub-space is restricted by adopting any of four base methods defined below or any combination of two, three or, preferably, all four base methods.

While traversing the quad-tree structure the transcoder:

1) should not try CU splits that create lower, i.e. deeper, CU depths than the input CU depth;
2) should try skip mode as prediction mode at the root and one node before a leaf in the quad-tree structure;
3) should try intra prediction as prediction mode and $2N \times 2N$ as partitioning mode, i.e. intra $2N \times 2N$, on every node; and
4) should try inter prediction as prediction mode and $2N \times 2N$ as partitioning mode, i.e. inter $2N \times 2N$, on every node.

In an alternative variant of this ninth embodiment the transcoder, while traversing the quad-tree structure:

1) should not try CU splits that create lower, i.e. deeper, CU depths than the input CU depth;
2) should try skip mode as prediction mode at the root and one node before a leaf in the quad-tree structure;
3) should try intra and inter prediction as prediction modes and $2N \times 2N$ as partitioning mode, i.e. intra $2N \times 2N$ and inter $2N \times 2N$, on every non-leaf node; and
4) should try input prediction mode and partitioning mode on leaf nodes.

In yet another variant of this ninth embodiment the transcoder, while traversing the quad-tree structure:

1) should not try CU splits that create lower, i.e. deeper, CU depths than the input CU depth;
2) should try skip mode as prediction mode at the root and one node before a leaf in the quad-tree structure;
3) should try intra and inter prediction as prediction modes and $2N \times 2N$ as partitioning mode, i.e. intra $2N \times 2N$ and inter $2N \times 2N$, on every non-leaf node; and
4) should try input prediction mode and partitioning mode, inter $2N \times 2N$ and intra $2N \times 2N$ on leaf nodes.

In a further variant of this ninth embodiment the transcoder, while traversing the quad-tree structure:

1) should not try CU splits that create lower, i.e. deeper, CU depths than the input CU depth;
2) should try skip mode as prediction mode at the root and one node before a leaf in the quad-tree structure;
3) should try intra and inter prediction as prediction modes and $2N \times 2N$ as partitioning mode, i.e. intra $2N \times 2N$ and inter $2N \times 2N$, on every non-leaf node; and
4) should try input prediction mode and partitioning mode, inter $2N \times 2N$, intra $2N \times 2N$ and skip mode on leaf nodes.

In these variants the transcoder then selects the candidate encoded representation that provides the best encoding according a video quality metric, such as based on a rate-distortion criterion.

A pseudo-code for implementing a variant the ninth embodiment is presented below. This pseudo-code or algorithm implemented in the transcoder is then preferably called for each CTU and it traverses the nodes in the quad-tree structure of the CTU until it reaches a leaf node. If split flags are used to define the quad-tree structure and $1_{bin}$ indicates a CU split and $0_{bin}$ indicates no further CU split then a leaf node is reached when a split flag has value $0_{bin}$ or a smallest coding unit size has been reached and no further CU splitting is possible.

The traversed nodes are potential leafs in the output quad-tree structure and on each traversed node different coding options are tested and the best is selected.

In the following pseudo-code do and $d_I$ indicate the depth in the quad-tree structure of an output (transcoded) CU and an input CU, respectively.

```
if dO < dI                              //this is a non-leaf node in the input CTU quad-tree

    try splitting and transcoding each CU separately

    try intra 2N×2N

    if P/B slice

        try inter 2N×2N

        if (dI-1 = dO) || dI = 0          //root node or node before the leaf node

            try skip

else                                    //dO = dI, i.e. this is a leaf node in the input CTU quad-tree

    if P/B slice

        try skip


    if input predMode = inter            //prediction mode of input CU is inter prediction

        try inter partSize               //inter prediction using same partitioning mode as input CU

        try inter 2N×2N

    else                                 //prediction mode of input CU is intra prediction

        try intra partSize               //intra prediction using same partitioning mode as input CU

        try intra 2N×2N

    select the best CU based on video quality metric
```

In this embodiment, the input CTU is recursively split in a quad-tree structure of CUs and the coding parameters extracted in step S1 define the quad-tree structure.

Step S2 preferably comprises determining, based on the coding parameters, the search sub-space consisting of candidate encoded representations in which

a) a, preferably each, CU of the CTU has a same or shallower depth as compared to a CU i) defined in the input encoded representation and ii) occupying an area of the picture encompassed by an area occupied by the CU, and
b) a root CU and each CU at a depth directly above a leaf CU in the quad-tree structure has skip as prediction mode, or
c) a CU has intra prediction as prediction mode and 2N×2N as partitioning mode, or
d) a CU has inter prediction as prediction mode and 2N×2N as partitioning mode.

In an optional embodiment, step S2 comprises determining, based on the coding parameters, the search sub-space consisting of candidate encoded representations in which

a) a, preferably each, CU of the CTU has a same or shallower depth as compared to a CU i) defined in the input encoded representation and ii) occupying an area of the picture encompassed by an area occupied by the CU, and
b) a root CU and each CU at a depth directly above a leaf CU in the quad-tree structure and each leaf CU has skip as prediction mode, or
c) a CU has intra prediction as prediction mode and 2N×2N or a same portioning mode as the CU i) defined in the input encoded representation and ii) occupying an area of the picture encompassed by an area occupied by the CU, or

d) a CU has inter prediction as prediction mode and 2N×2N or a same portioning mode as the CU i) defined in the input encoded representation and ii) occupying an area of the picture encompassed by an area occupied by the CU.

In another optional embodiment, step S2 comprises determining, based on the coding parameters, the search sub-space consisting of candidate encoded representations in which

a) a, preferably each, CU of the CTU has a same or shallower depth as compared to a CU i) defined in the input encoded representation and ii) occupying an area of the picture encompassed by an area occupied by the CU, and

b) a root CU and each CU at a depth directly above a leaf CU in the quad-tree structure has skip as prediction mode, or

c) a non-leaf CU has intra prediction as prediction mode and 2N×2N as partitioning mode, or

d) a non-leaf CU has inter prediction as prediction mode and 2N×2N as partitioning mode, or

e) a leaf CU has a same prediction and partitioning modes as the CU i) defined in the input encoded representation and ii) occupying an area of the picture encompassed by an area occupied by the CU.

The various embodiments discussed in the foregoing could be used separately or combined. For instance, the coding parameters could include any combination of parameters or information i) defining the quad-tree structure or respective depths of the CUs in the CTU, ii) defining the respective prediction modes of the CUs in the CTU, iii) defining the respective partitioning modes of the CUs in the CTU, iv) defining the intra prediction modes of any intra predicted CU of the CTU, v) defining the motion vector(s) of any inter predicted CU in the CTU, and vi) defining TU sizes of the CUs in the CTU. When implementing embodiments as combinations of i) to vi) above the combination could use coding parameters being a combination of two of i) to vi), three of i) to vi), four of i) to vi), five of i) to vi) or all of i) to vi).

Generally, intra prediction mode and motion vectors are defined on a PU basis. Hence, a CU that is restricted to have a same or neighboring prediction mode as a CU defined in the input encoded representation and having intra prediction as prediction preferably implies that the PU(s) of the CU has/have a same or neighboring prediction mode as the corresponding PU(s) of the CU defined in the input encoded representation and having intra prediction as prediction mode. Corresponding, a CU that is restricted to have same or neighboring motion vector or vectors as a CU defined in the input encoded representation and having inter prediction as prediction mode preferably implies that the PU(s) of the CU has/have same or neighboring motion vector or vectors as the corresponding PU(s) of the CU defined in the input encoded representation and having inter prediction as prediction mode. Hence, in a particular embodiment, the at least one CTU is recursively split in a quad-tree structure of CU having a respective prediction mode and at least one PU. The coding parameters define at least one respective intra prediction mode of any CU having intra prediction as prediction mode. Determining the search sub-space preferably comprises, in a particular embodiment, determining, based on the coding parameters, the search sub-space consisting of candidate encoded representations in which a, preferably each, PU belonging to a CU having intra prediction as prediction mode and occupying an area of the picture encompassed by an area occupied by a PU i) defined in the input encoded representation and ii) belonging to a CU having intra prediction as prediction mode has a same or neighboring prediction mode as the PU i) defined in the input encoded representation and ii) belonging to a CU having intra prediction as prediction mode.

In another particular embodiment, the at least one CTU is recursively split in a quad-tree structure of CU having a respective prediction mode and at least one PU. The coding parameters define at least one motion vector for any PU belonging to a CU having inter prediction as prediction mode. Determining the search sub-space preferably comprises, in a particular embodiment, determining, based on the coding parameters, the search sub-space consisting of candidate encoded representations in which a, preferably each, PU belonging to a CU having inter prediction as prediction mode and occupying an area of the picture encompassed by an area occupied by a PU i) defined in the input encoded representation and ii) belonging to a CU having inter prediction as prediction mode has same or neighboring motion vector or vectors as the PU i) defined in the input encoded representation and ii) belonging to a CU having inter prediction as prediction mode

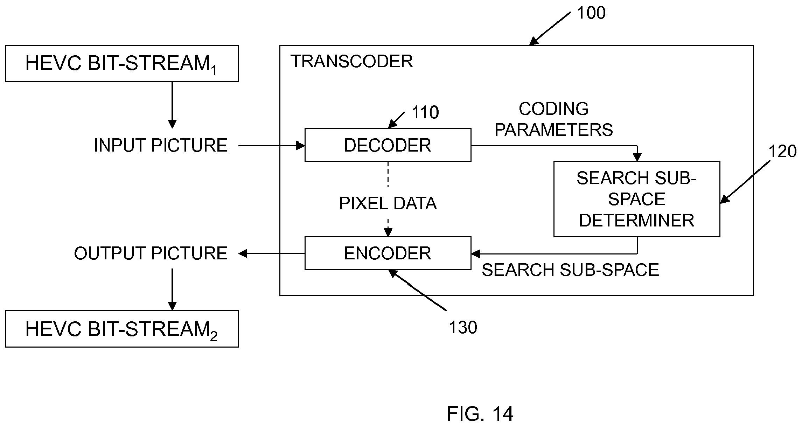

Fig. 14 is a schematic block diagram of a transcoder 100 configured to transcode a CTU of a picture in a video sequence according to an embodiment. The transcoder 100 comprises a decoder 110 configured to decode an input encoded representation of a CTU, represented by an input picture of an input video, here HEVC coded, bit-stream in the figure. The decoder 110 is configured to decode the input encoded representation to obtain coding parameters for the input encoded representation. A search-sub space determiner 120 is configured to determine, based on the parameters, a search sub-space consisting of a subset of all possible combinations of candidate encoded representations of the CTU. The transcoder 100 also comprises an encoder 130 configured to encode the CTU to get an output encoded representation of the CTU belonging to the search sub-space. In Fig. 14, the output encoded representation is indicated as an output picture of an output video, here HEVC coded, bit-stream.

In an embodiment, the decoder 110 is configured to decode the input encoded representation to obtain pixel values or data of the pixels and the coding parameters. The coding parameters are then preferably input to the search sub-space determiner 120 and the pixel values are preferably input to the encoder 130. The encoder 130 is, in this embodiment, configured to encode the pixel values to get the output encoded representation belonging to the search sub-space determined by the search sub-space determiner 120.

In a particular embodiment, the encoder 130 is configured to select, as the output encoded representation, the candidate encoded representation belonging to the search sub-space and optimizing a rate-distortion quality metric.

In the embodiment as shown in Fig. 14 the search sub-space determiner 120 is illustrated as a separate entity or unit of the transcoder 14. In an alternative approach as shown in Fig. 16, the operation of the search sub-space determiner is performed by the encoder 130. Hence, in this embodiment the encoder receives the coding parameters and preferably the pixel values from the decoder 110 and uses the coding parameters when encoding the CTU and its pixels values to get the output encoded representation.

In an embodiment, the at least one coding tree unit is recursively split in a quad-tree structure of coding units. In this embodiment, the coding parameters define the quad-tree structure. The search sub-space determiner 120 is, in this embodiment, configured to determine, based on the coding parameters, the search sub-space consisting of candidate encoded representations re-using the quad-tree structure defining the split of the coding tree unit into coding units.

In an embodiment, the at least one coding tree unit is recursively split in a quad-tree structure of coding units having a respective depth within the quad-tree structure. In this embodiment, the coding parameters define the respective depths of the coding units in the quad-tree structure. The search sub-space determiner 120 is, in this embodiment, configured to determine, based on the coding parameters, the search sub-space consisting of candidate encoded representations in which a, preferably each, coding unit has a same or shallower depth as compared to a coding unit i) defined in the input encoded representation and ii) occupying an area of the picture encompassed by an area occupied by the coding unit.

In a particular embodiment, the search sub-space determiner 120 is configured to determine, based on the coding parameters, the search sub-space consisting of candidate encoded representations in which each coding unit has a same depth as a coding unit i) defined in the input encoded representation and ii) occupying a same area in the picture as the coding unit.

In an embodiment, the at least one coding tree unit is recursively split in a quad-tree structure of coding units having a respective prediction mode. In this embodiment, the coding parameters define the respective prediction modes. The search sub-space determiner 120 is, in this embodiment, configured to determine, based on the coding parameters, the search sub-space consisting of candidate encoded representations in which a, preferably each, coding unit has a same prediction mode as a coding unit i) defined in the input encoded representation and ii) occupying an area of the picture encompassing an area occupied by the coding unit.

In an embodiment, the at least one coding tree unit is recursively split in a quad-tree structure of coding units having a respective partitioning mode. In this embodiment, the coding parameters define the respective partitioning modes. The search sub-space determiner 120 is, in this embodiment, configured to determine, based on the coding parameters, the search sub-space consisting of candidate encoded representations in which a, preferably each, coding unit has a same or shallower partitioning mode as compared to a coding unit ii) defined in the input encoded representation and ii) occupying an area of the picture encompassing an area occupied by the coding unit.

In an embodiment, the at least one coding tree unit is recursively split in a quad-tree structure of coding units having a respective prediction mode. In this embodiment, the prediction parameters define at least one respective intra prediction mode of any coding unit having intra prediction as prediction mode. The search sub-space determiner 120 is, in this embodiment, configured to determine, based on the coding parameters, the search sub-space consisting of candidate encoded representations in which a, preferably each, coding unit occupying an area of the picture encompassed by an area occupied by a coding unit i) defined in the input encoded representation and ii) having intra prediction as prediction mode has a same or neighboring intra prediction mode as the coding unit i) defined in the input encoded representation and ii) having intra prediction as prediction mode.

In an embodiment, the at least one coding tree unit is recursively split in a quad-tree structure of coding units having a respective prediction mode. In this embodiment, the coding parameters define at least one motion vector of any coding unit having inter prediction as prediction mode. The search sub-space determiner 120 is, in this embodiment, configured to determine, based on the coding parameters, the search sub-space consisting of candidate encoded representations in which a, preferably each, coding unit occupying an area of the picture encompassed by an area occupied by a coding unit i) defined in the input encoded representation and ii) having inter prediction as prediction mode has same or neighboring motion vector or vectors as the coding unit i) defined in the input encoded representation and ii) having inter prediction as prediction mode.

In an embodiment, the at least one coding tree unit is recursively split in a quad-tree structure of coding units having a respective depth within the quad-tree structure. Each coding unit has a respective prediction mode and a respective partitioning mode. In this embodiment, the coding parameters define the respective depths, the respective prediction modes, the respective partitioning modes, at least one motion vector for any coding unit having inter prediction as prediction mode and at least one intra prediction mode for any coding units having intra prediction as prediction mode. The search sub-space determiner 120 is, in this embodiment, configured to determine, based on the coding parameters, the search sub-space consisting of candidate encoded representations in which a, preferably each, coding unit has

a) a same depth, a same prediction mode and a same partitioning mode as a coding unit i) defined in the input encoded representation and ii) occupying a same area of the picture as the coding unit, and

b) same, or optionally neighboring, motion vector or vectors as a coding unit i) defined in the input encoded representation, ii) having inter prediction as prediction mode and iii) occupying a same area of the picture as the coding unit, or

c) a same, or optionally neighboring, intra prediction mode as a coding unit i) defined in the input encoded representation, ii) having intra prediction as prediction mode and iii) occupying a same area of the picture as the coding unit.

In an embodiment, the at least one coding tree unit is recursively split in a quad-tree structure of coding units comprising one or more transform units for which a block transform is applied during decoding. In this embodiment, the coding parameters define the transform unit sizes. The search sub-space determiner 120 is, in this embodiment, configured to determine, based on the coding parameters, the search sub-space consisting of candidate encoded representations in which one or more transform units of a, preferably each, coding unit has a same or larger size in terms of number of pixels as compared to a coding unit i) defined in the input encoded representation and ii) occupying a same area of the picture as the coding unit.

In a particular embodiment, the search sub-space determiner 120 is configured to determine, based on the coding parameters, the search sub-space consisting of candidate encoded representations in which one or more transform units of a, preferably each, coding unit has a same size in terms of number of pixels as a coding unit i) defined in the input encoded representation and ii) occupying a same area of the picture as the coding unit.

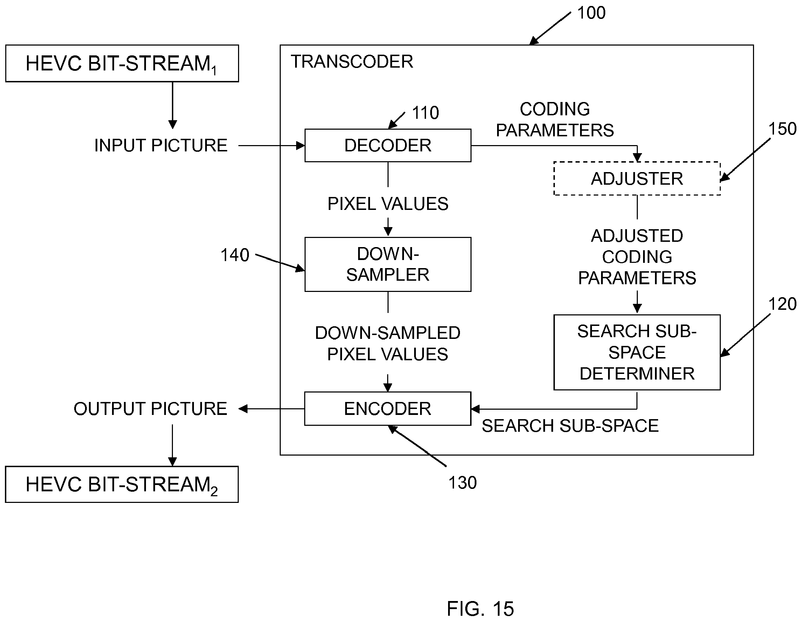

Fig. 15 is block diagram of an embodiment of a transcoder 100 configured to transcode a CTU of a picture in a video sequence by spatial resolution reduction. The decoded pixel values of the pixels output from the decoder 110 are in this embodiment input to a down-sampler 140. The down-sampler 140 is configured to down-sample the input pixel values to get down-sampled pixel values of a spatially lower resolution. For instance, every block of four pixels in the CTU could be down-sampled to a single pixel in the down-sampled CTU, thereby lowering the resolution by half in the X-direction and by half in the Y-direction. Down-sampling may involve filtering and sub-sampling operations.

Coding parameters obtained by the decoder 110 while decoding the input encoded representation are forwarded to an optional adjuster 150 that adjusts the coding parameters to match the down-sampling in pixels. Hence, the adjuster 150 could be used to correspondingly down-sample the coding parameters to match the down-sampled layout of pixels and CUs in the CTU. The optionally adjusted coding parameters are input to the search sub-space determiner 120 to determine the search sub-space for the candidate encoded representations.

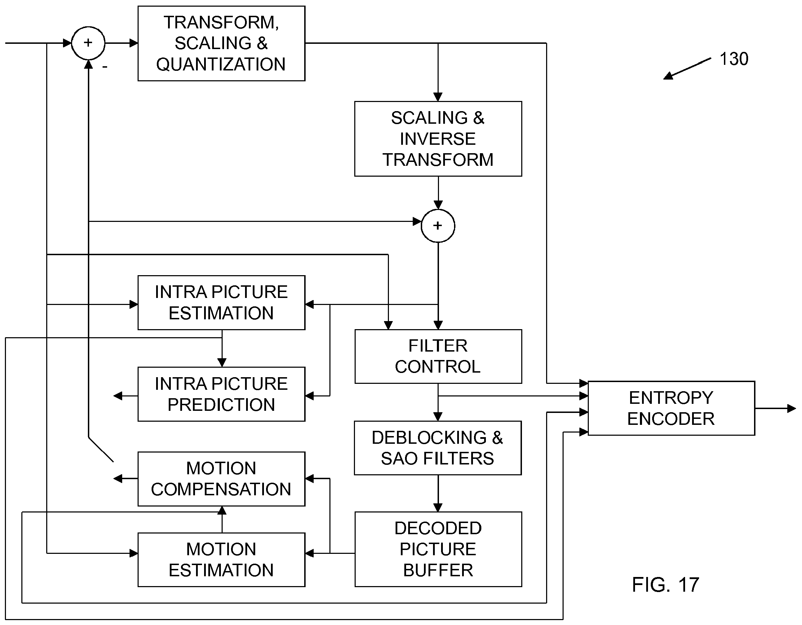

Fig. 17 is a schematic block diagram of an encoder 130, such as an encoder 130 of the transcoder 100 in Figs. 14-16.

A current block of pixels, i.e. PU, is predicted by performing a motion estimation from an already provided block of pixels in the same picture or in a previous or future picture obtained from a decoded picture buffer. The result of the motion estimation is a motion vector allowing identification of the reference block of pixels. The motion vector is utilized in a motion compensation for outputting an inter prediction of the PU.

An intra picture estimation is performed for the PU according to various available intra prediction modes. The result of the intra prediction is an intra prediction mode number. This intra prediction mode number is utilized in an intra picture prediction for outputting an intra prediction of the PU.

Either the output from the motion compensation or the output from the intra picture prediction is selected for the PU. The selected output is input to an error calculator in the form of an adder that also receives the pixel values of the PU. The adder calculates and outputs a residual error as the difference in pixel values between the PU and its prediction.

The error is transformed, scaled and quantized to form quantized transform coefficients that are encoded by an encoder, such as by entropy encoder. In inter coding, also the estimated motion vectors are brought to the entropy encoder as is intra prediction data for intra coding.

The transformed, scaled and quantized residual error for the PU is also subject to an inverse scaling, quantization and transform to retrieve the original residual error. This error is added by an adder to the PU prediction output from the motion compensation or the intra picture prediction to create a reference PU of pixels that can be used in the prediction and coding of a next PU of pixels. This new reference PU is first processed by deblocking and sample adaptive offset (SAO) filters to combat any artifact. The processed new reference PU is then temporarily stored in the decoded picture buffer.

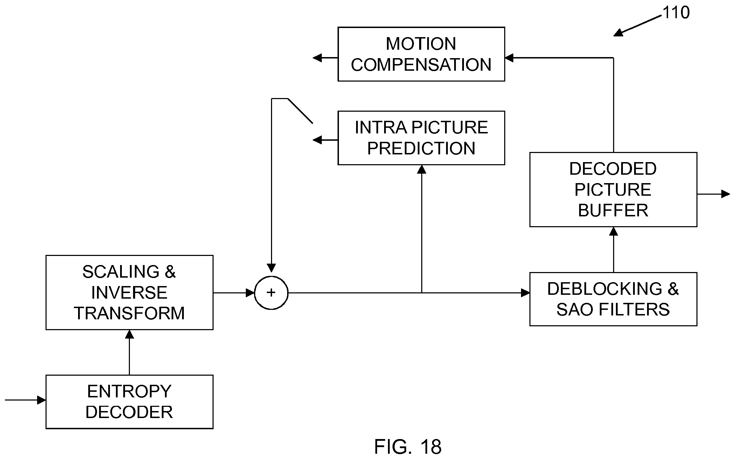

Fig. 18 is a corresponding schematic block diagram of a decoder 110, such as a decoder 110 of the transcoder 100 in Figs. 14-16. The decoder 110 comprises a decoder, such as entropy decoder, for decoding an encoded representation of a PU of pixels to get a set of quantized and transformed residual errors. These residual errors are scaled, dequantized in an inverse transformed to get a set of residual errors.

These residual errors are added in an adder to the pixel values of a reference block of pixels. The reference block is determined in a motion estimation or intra prediction depending on whether inter or intra prediction is performed. The resulting decoded PU of pixels output from the adder is input to SAO and deblocking filters to combat any artifacts. The filtered PU is temporarily stored in a decoded picture buffer and can be used as reference block of pixels for any subsequent PU to be decoded. The output from the adder is preferably also input to the intra prediction to be used as an unfiltered reference block of pixels.

The transcoder 100 of Figs. 14-16 with its including units 110-130 (and optional units 140, 150) could be implemented in hardware. There are numerous variants of circuitry elements that can be used and combined to achieve the functions of the units 110-130 of the transcoder 100. Such variants are encompassed by the embodiments. Particular examples of hardware implementation of the transcoder 100 is implementation in digital signal processor (DSP) hardware and integrated circuit technology, including both general-purpose electronic circuitry and application-specific circuitry.

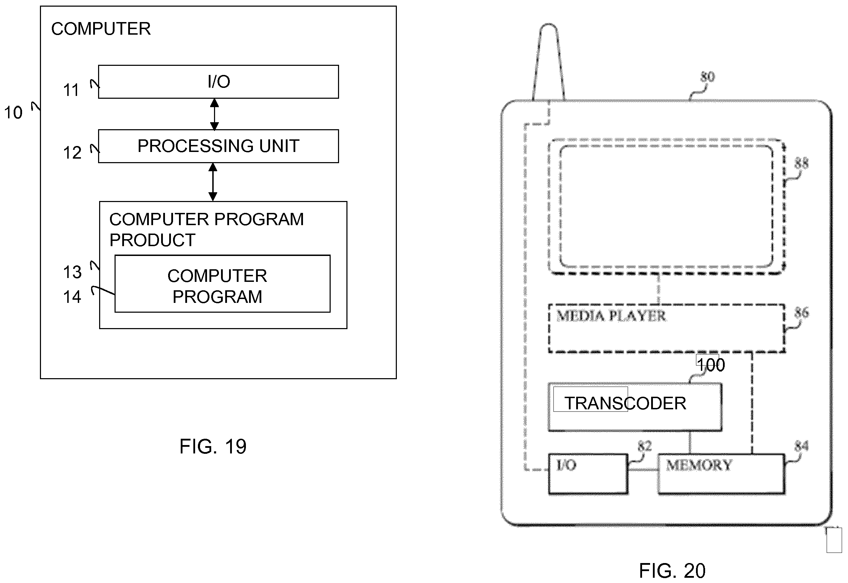

The transcoder 100 described herein could alternatively be implemented e.g. by one or more of a processing unit 12 in a computer 10 and adequate software with suitable storage or memory therefore, a programmable logic device (PLD) or other electronic component(s) as shown in Fig. 19.

The steps, functions and/or units described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions and/or units described herein may be implemented in software such as a computer program for execution by suitable processing circuitry such as one or more processors or processing units.

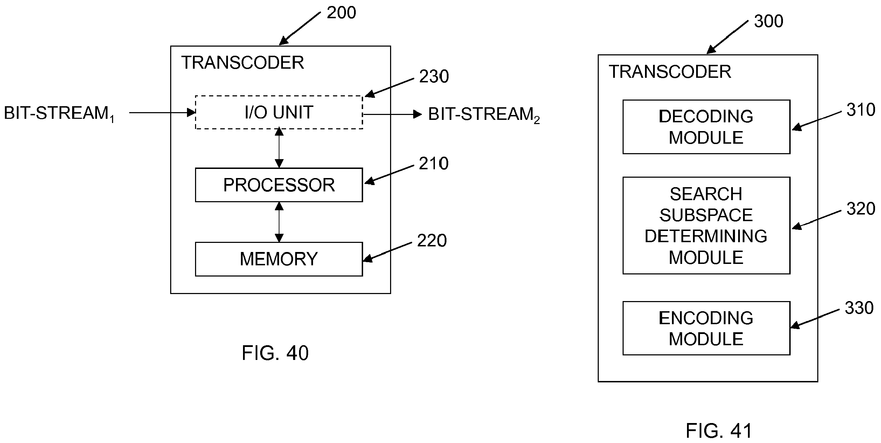

The flow charts presented herein may therefore be regarded as a computer flow diagrams, when performed by one or more processors. A corresponding apparatus may be defined as a group of function modules or units, see Fig. 41, where each step performed by the processor corresponds to a function module or unit. In this case, the function modules or units are implemented as a computer program running on the processor.

Thus, Fig. 41 illustrates a transcoder 300 for transcoding a coding tree unit of a picture in a video sequence. The coding tree unit comprises one or multiple coding units of pixels. The transcoder 300 comprises a decoding module 310 for decoding an input encoded representation of the coding tree unit to obtain coding parameters for the input encoded representation. The transcoder 300 also comprises a search-sub space determining module 320 for determining, based on the coding parameters, a search sub-space consisting of a subset of all possible combinations of candidate encoded representations of the coding tree unit. The transcoder 300 further comprises an encoding module 330 for encoding the coding tree unit to get an output encoded representation of the coding tree unit belonging to the search sub-space.

Examples of processing circuitry and processors includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

Fig. 40 illustrates an implementation embodiment of the transcoder 200 configured to transcode a coding tree unit of a picture in a video sequence. The coding tree unit comprises one or multiple coding units of pixels. In this embodiment, the transcoder 200 comprises a processor 210 and a memory 220 containing instructions executable by the processor (110). The processor 210 is operable to decode an input encoded representation of the coding tree unit to obtain coding parameters for the input encoded representation. The processor 210 is also operable to determine, based on the coding parameters, a search sub-space consisting of a subset of all possible combinations of candidate encoded representations of the coding tree unit. The processor 210 is further operable to encode the coding tree unit to get an output encoded representation of the coding tree unit belonging to the search sub-space.

In an embodiment, the processor 210 and the memory 220 are interconnected to each other to enable normal software execution. An optional input/output (I/O) unit 230 may also be interconnected to the processor 210 and/or the memory 220 to enable input of the bit-stream to be transcoded and output of the transcoded bitstream.

It should also be understood that it may be possible to re-use the general processing capabilities of any conventional device or unit in which the proposed technology is implemented. It may also be possible to re-use existing software, e.g. by reprogramming of the existing software or by adding new software components.

Fig. 19 schematically illustrates an embodiment of a computer 10 having a processing unit 12, such as a DSP (Digital Signal Processor) or CPU (Central Processing Unit). The processing unit 12 can be a single unit or a plurality of units for performing different steps of the method described herein. The computer 10 also comprises an input/output (I/O) unit 11 for receiving input encoded representations and outputting output encoded representations. The I/O unit 11 has been illustrated as a single unit in Fig. 19 but can likewise be in the form of a separate input unit and a separate output unit.

Furthermore, the computer 10 comprises at least one computer program product 13 in the form of a nonvolatile memory, for instance an EEPROM (Electrically Erasable Programmable Read-Only Memory), a flash memory or a disk drive. The computer program product 13 comprises a computer program 14, which comprises code means which when run on or executed by the computer 10, such as by the processing unit 12, causes the computer 10 to perform the steps of the method described in the foregoing in connection with Fig. 4.

In an embodiment the computer program 14 is a computer program 14 configured to transcode a CTU of a picture in a video sequence. The CTU comprises one or multiple CUs of pixels. The computer program 14 comprises code means, also referred to as program code, which when run on the computer 10 causes the computer to decode an input encoded representation of the CTU to obtain coding parameters for the input encoded representation. The code means also causes the computer 10 to determine, based on the coding parameters, a search sub-space consisting of a subset of all possible combinations of candidate encoded representations of the CTU. The code means further causes the computer 10 to encode the CTU to get an output encoded representation of the CTU belonging to the search sub-space.

An embodiment also relates to a computer program product 13 comprising computer readable code means and a computer program 14 as defined according to above stored on the computer readable code means.

Another embodiment relates to a carrier comprising a computer program as defined above. The carrier is one of an electronic signal, an optical signal, an electromagnetic signal, a magnetic signal, an electric signal, a radio signal, a microwave signal, or a computer-readable storage medium.

An electric signal could be a digital electric signal, such as represented by a series of $0_{bin}$ and $1_{bin}$, or an analogue electric signal. Electromagnetic signals include various types of electromagnetic signals, including infrared (IR) signals. A radio signal could be either a radio signal adapted for short range communication, such as Bluetooth®, or for long range.

In an embodiment, the transcoder 100 is implemented in a user equipment or terminal 80 as shown in Fig. 20. The user equipment 80 can be any device having media transcoding functions that operates on an input encoded video stream of encoded pictures to thereby transcode the encoded video stream. Non-limiting examples of such devices include mobile telephones and other portable media players, tablets, desktops, notebooks, personal video recorders, multimedia players, video streaming servers, set-top boxes, TVs, computers, decoders, game consoles, etc. The user equipment 80 comprises a memory 84 configured to store input encoded representations of CTUs in pictures of the video sequence. These encoded representations can have been generated by the user equipment 80 itself. Alternatively, the encoded representations are generated by some other device and wirelessly transmitted or transmitted by wire to the user equipment 80. The user equipment 80 then comprises a transceiver (transmitter and receiver) or input and output (I/O) unit or port 82 to achieve the data transfer.

The encoded representations are brought from the memory 84 to a transcoder 100, such as the transcoder illustrated in any of Figs. 14-16, 40, 41. The transcoder 100 is configured to transcode the input encoded representation to get an output encoded representation as disclosed herein. The output transcoded representation could be transmitted using the I/O unit 82 to some other device, such as having decoding and media rendering functionality. Alternatively, or in addition, the transcoded output encoded representations are input to a media player 86 comprising a decoder that decodes the output encoded representations into decoded video data. The decoded video data is rendered by the media player 86 and displayed a screen 88 of or connected to the user equipment 80.

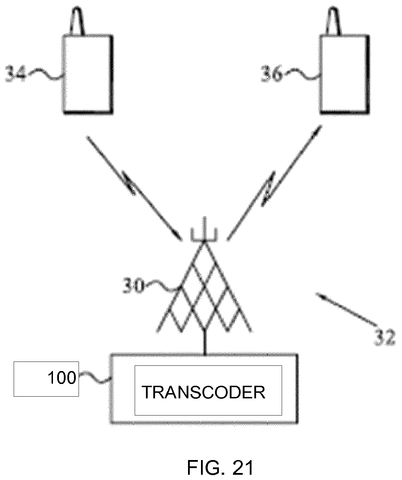

As illustrated in Fig. 21, the transcoder 100, such as illustrated in Figs. 14-16, 40, 41, may be implemented in a network device 30 being or belonging to a network node in a communication network 32 between a sending unit 34 and a receiving unit 36. Such a network device 30 may be a device for bit-rate adaptation by transcoding the video data from the sending unit 34 to the receiving unit 36. The network device 30 can be in the form of or comprised in a radio base station, a Node-B or any other network node in a communication network 32, such as a radio-based network.

The present embodiments are particularly suitable for the HEVC video coding standard. In such a case, the HEVC transcoder or transcoding method is configured to transcode an input HEVC encoded representation of a CTU of a picture in a HEVC video sequence into an output HEVC encoded representation.

The embodiments could, however, also be applied to other video coding standards using a quad-tree structure of defining blocks of pixels in a picture. An example of such another video coding standard is VP9.

Herein follows a particular implementation example of a transcoder. Table 2 below lists the functions used by the transcoder.

Table 2 - list of transcoder functions

| Term | Description |
| --- | --- |
| AbsAddr(CU, addr) | Absolute address of CU relative to the address of LCU |
| D(CU, absAddr) | Depth of CU at absAddr |

(continued)

| Term | Description |
|------|-------------|
| *Sub(CU, d, absAddr)* | Sub-partition *CU* or *Slice* relative to depth *d* at *absAddr* |
| *Count(CU)* | Number of sub-CUs in *CU* or slice |
| *PartSize(CU, absAddr)* | Partition size of *CU* at *absAddr* |
| *PredMode(CU, absAddr)* | Prediction mode of *CU* at *absAddr* |
| *IntraData(CU, absAddr)* | Intra prediction directions and modes of *CU* at *absAddr* |
| *MV(CU, absAddr)* | Motion vector of *CU* at *absAddr* |
| *SkipFlag(CU, absAddr)* | Skip flag of *CU* at *absAddr* |
| *MergeFlag(CU, absAddr)* | Merge flag of *CU* at *absAddr* |
| *SelectBest(CU, $CU_T$, ...)* | Select the best $CU_T$ based on Rate-Distortion and copy to *CU* |
| *Copy(CU, ...)* | Copy the given CU information into *CU* |
| *EstPredData(CU, PartSize,...)* | Estimate the prediction data for *CU* with *PartSize* |
| *Encode(CU)* | Encode *CU* |

The transcoder takes the data constituting a picture as input. A picture is usually made of one or more slices and each slice is created from collection of CTUs. For simplicity, assume each picture is made of a single slice. The transcoder processes each CTU, i.e. largest CU, of a slice in raster scan order. This is illustrated by the following pseudo-code.

---

**Algorithm 1** Transcoder Main Loop

**Input:** $Slice_I$ = Input bit-stream slice
**Output:** $Slice_O$ = Transcoded slice
1: **function** TRANSCODE($Slice_O, Slice_I$)
2:    $numLCU \leftarrow \text{Count}(Slice_O)$
3:    $i \leftarrow 0$
4:    **while** $i < numLCU$ **do**          ▷ loop over every LCU in the frame
5:        $LCU_I \leftarrow \text{Sub}(Slice_I, 0, i)$
6:        $LCU_O \leftarrow \text{Sub}(Slice_O, 0, i)$
7:        TRANSCODECU($LCU_O, LCU_I, 0$)
8:        $i \leftarrow i + 1$
9:    **end while**
10: **end function**

---

The function *TranscodeCU* recursively traverses the CTU based on quad-tree structure of input picture until a leaf node is reached. This quad-tree structure is a single realization of every possible structure and it is extended by making decisions on other branch possibilities in each tree node.

The implementation example of the transcoder is based on three important observations:

1) Skipped blocks require the least bits to encode;

2) Merging blocks reduces the number of bits;

3) 2N×2N splitting requires one motion vector to be signaled. Hence, it is very possible that it will require less bits to encode the block. The proposed pseudo-code based on these observations is described further below.

On each recursive iteration the transcoder will try to encode the current CU with:

1) 2N×2N intra prediction by re-calculating intra prediction direction;
2) Inter prediction with 2N×2N PU spilt and re-calculating the motion vector;
3) Inter prediction by re-using partitioning mode and re-calculating motion vector;
4) Skip mode on root CU, the CU before leaf node, and leaf node;
5) Re-using partitioning mode on leaf node and re-calculating the intra prediction directions and motion vectors.

The output CU structure will be a sub-set of the input CU structure, i.e. quad-tree structure, meaning there will be no input quad-tree node that will be split further. Therefore, every CU will be shallower or of equal depth compared to input CUs. As it is seen in line 58 of the pseudo-code, the final CU coding will be chosen as the one that is best in regards to Rate-Distortion criteria.

---

**Algorithm 5 AT Model**

```
 1: function TRANSCODECU(CU_O, CU_I, d_O)
 2:     absAddr ← AbsAddr(CU_O, 0)
 3:     d_I ← D(CU_I, absAddr)
 4:     partSize ← PartSize(CU_I, absAddr)
 5:     predMode ← PredMode(CU_I, absAddr)
 6:     if d_O < d_I then
 7:         i ← 0
 8:         d_SO ← d_O + 1
 9:         while i < 4 do                              ▷ current CU is split to four sub-CUs
10:             subCU_O ← Sub(CU_O, d_SO, absAddr)
11:             TRANSCODECU(subCU_O, CU_I, d_SO)
12:             absAddr ← absAddr + Count(SubCU_O)
13:             i ← i + 1
14:         end while
15:         if (predMode = Intra) then                 ▷ try intra mode for non-leaf CU
16:             intraData ← EstPredData(CU_O, Intra, 2N × 2N)
17:             Copy(CU_O, Intra, 2N × 2N, intraData)
18:             CU_T1 ← Encode(CU_O)
19:         end if
20:         if (CU_O not in I-slice) then               ▷ try no split PU for non-leaf CU
21:             interData ← EstPredData(CU_O, Inter, 2N × 2N)
22:             Copy(CU_O, Inter, 2N × 2N, interData)
23:             CU_T2 ← Encode(CU_O)
24:                                          ▷ N × N PU split is only permitted for the smallest CU size
25:             if (partSize ≠ 2N × 2N) && (partSize ≠ N × N) then
26:                 interData ← EstPredData(CU_O, Inter, partSize)
27:                 Copy(CU_O, Inter, partSize, interData)
28:                 CU_T3 ← Encode(CU_O)
29:             end if
30:         end if
31:                       ▷ for none I-slices: at the root and one node before leaf try SKIP mode
32:         if (CU_O not in I-slice)&& ((d_I − 1 = d_O) || (d_I = 0)) then
33:             interData ← EstPredData(CU_O, Inter, skip, merge, 2N × 2N)
34:             Copy(CU_O, Inter, skip, merge, 2N × 2N, interData)
35:             CU_T4 ← Encode(CU_O)
36:         end if
37:     else                                                           ▷ leaf node
38:         if CU_O not in I-slice then                    ▷ try SKIP on every leaf
39:             interData ← EstPredData(CU_O, Inter, skip, merge, 2N × 2N)
40:             Copy(CU_O, Inter, skip, merge, 2N × 2N, interData)
41:             CU_T5 ← Encode(CU_O)
42:         end if
43:         if predMode = Inter then
44:             interData ← EstPredData(CU_O, Inter, partSize)
45:             Copy(CU_O, Inter, partSize, interData)
46:             CU_T6 ← Encode(CU_O)
47:             if partSize ≠ 2N × 2N then                  ▷ try no split PU for leaf
48:                 interData ← EstPredData(CU_O, Inter, 2N × 2N)
49:                 Copy(CU_O, Inter, 2N × 2N, interData)
50:                 CU_T7 ← Encode(CU_O)
51:             end if
52:         else
53:             intraData ← EstPredData(CU_O, Intra, partSize)
54:             Copy(CU_O, Intra, partSize, intraData)
55:             CU_T8 ← Encode(CU_O)
56:         end if
57:     end if
58:     SelectBest(CU_O, CU_T1, CU_T2, ..., CU_T8, subCU_O)
59: end function
```

---

The performance of proposed transcoder is measured using 20 video sequences divided into five classes based on video resolution, see Annex. An example is given here. Class C of the test sequence includes video conferencing sequences with 1280×720 resolution. The performance is measured by defining bit-rate ratio (r) and overhead (O). Bit-rate ratio determines the bit-rate reduction of transcoded bit-stream over input bit-stream:

$$r = \frac{R_S}{R_B}$$

In this equation, Rs is the bit-rate of the input stream and $R_B$ is the base bit-rate. Higher bit-rate ratio means higher compression.

Overhead determines the trade-off between bit-rate and quality:

$$O = \frac{R_T - R_B}{R_B}$$

wherein $R_T$, is the bit-rate of the transcoded stream. Lower overhead is better. Overhead is calculated in comparison to bit-rate of an encoder that has access to original video sequence and has encoded it with PSNR quality equal to transcoded bit-stream.

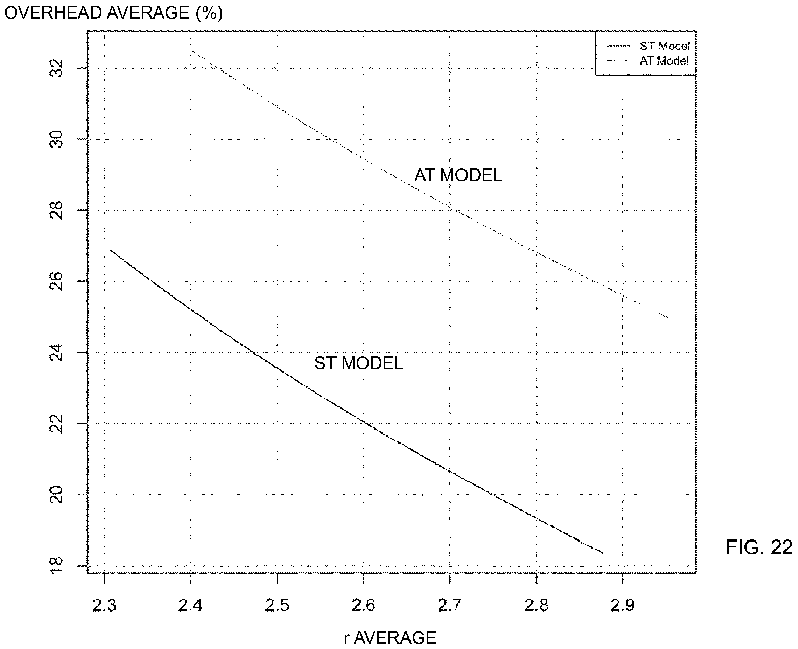

Fig. 22 demonstrates the performance comparison between the transcoder of an embodiment (AT model) and a simple cascaded transcoder (ST model) using average bit-rate ratios and overhead.

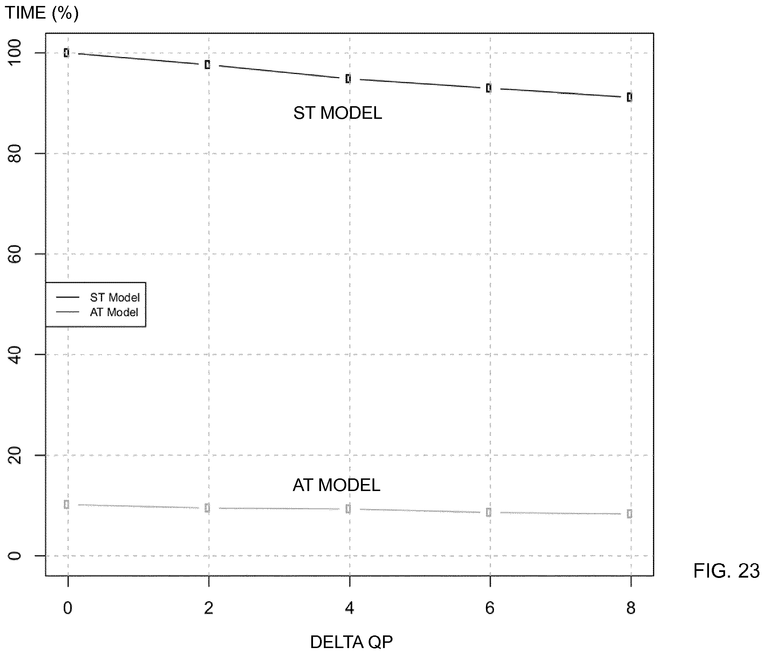

As illustrated in Fig. 23, on average, the transcoder of the embodiment has reduced the transcoding time of class C sequences by 90 % as compared to the simple cascaded transcoder. QP in Fig. 23 denotes quantization parameter.

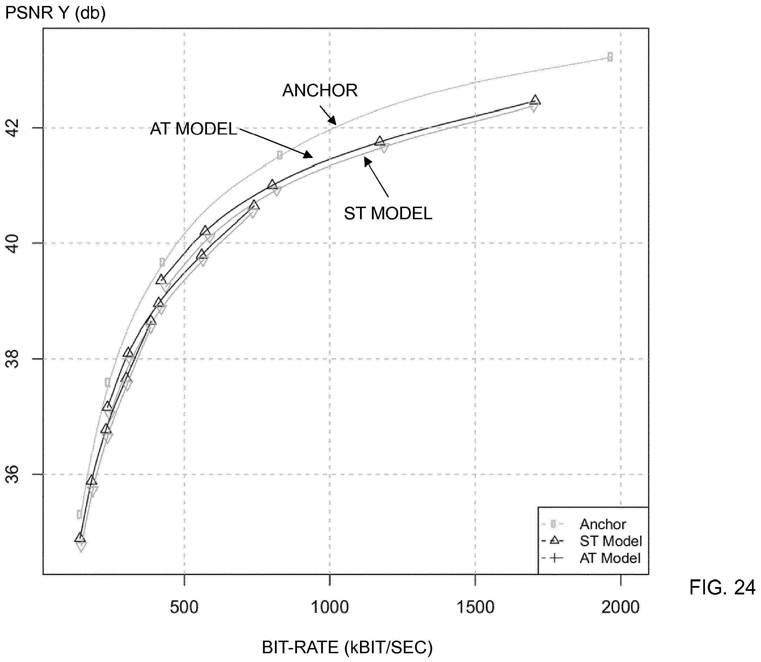

PSNR and bit-rate comparison of the transcoder of the embodiment against the simple cascaded transcoder for sequence KristenAndSara is shown in Fig. 24. As is seen, the transcoder of the embodiments provides similar performance as the SCT but with a much faster transcoding time.

The present embodiments promote inter-operability by enabling, for instance, HEVC to HEVC transcoding. The embodiments provide a fast transcoding that requires low computational power and produces excellent video quality.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

ANNEX

List of Abbreviations

AT Advanced Transcoding.
AVC Advanced Video Coding.
CODEC enCOder and DECoder.
CTB Coding Tree Block.
CTU Coding Tree Unit.
CU Coding Unit.
DCT Discrete Cosine Transform.
FPR Full Prediction Re-use.
GOP Group of Pictures.
HEVC High Efficiency Video Coding.
IPR Intra Prediction Re-use.
ISO International Standards Organization.
ITU International Telecommunication Union .
LCU Largest Coding Unit.
MB Macro Block.
MC Motion Compensation.
ME Motion Estimation.
MPEG Motion Picture Experts Group.
MR MV Re-use.
NAL Network Abstraction Layer.
P Predictive.

PSNR Peak Signal-to-Noise Ratio.
PU Prediction Unit.
Q Quantization.
QP Quantization Parameter.
RDO Rate-Distortion Optimization.
RT Rate Distortion.
SVC Scalable Video Coding.
TU Transform Unit.

Proposed HEVC Transcoding Models

A simple drift free transcoding could be achieved by cascading a decoder and encoder, where at the encoder side the video is encoded with regards to target platform specifications. This solution is computationally expensive, however the video quality is preserved. The preservation of video quality is an important characteristic, since it provides a benchmark for more advanced transcoding methods. This solution is key-worded Simple Cascaded Transcoding (SCT), so to differentiate it from advanced cascaded transcoding methods proposed in this Annex.
The developed transcoding models are designed with two goals:

1) understanding the extend by which the transcoding time is reduced by exploiting the information available from input bit-stream;
2) reducing the bit-rate and producing video quality as close as to the video quality of SCT model while minimizing the transcoding time.

To preserve the video quality closed-loop architecture is used. Closed-loop architectures are drift free and drift is a major quality sink.
Four transcoding models are developed for bit-rate reduction. These models are based on the idea that the input bit-stream contains valuable information for fast re-encoding. Based on how the information is reused, these models are key-worded: Full Prediction Reuse (FPR); Intra Prediction Re-estimation (IPR); MV Re-estimation (MR); and Advanced Transcoding (AT).
FPR is spatial-domain transcoding which reuses all the information available in the spatial-domain. IPR is similar to FPR, with one major difference. Intra-prediction is carried out fully for intra pictures, because in applications with random access requirement there are I-pictures at the beginning of each GOP, and it seems that these I-pictures will have a great impact on the quality of following B-and P-pictures. To measure this impact IPR transcoding model is developed.
MR transcoding model is similar to IPR with the addition of full MV search. This change is made with the goal of understanding how much the video quality could be improved if transcoder were free to search for new MVs at the CU level. AT model is designed to get as close as possible to cascaded transcoding quality and bit-rate with minimum transcoding time.

Full Prediction Reuse (FPR) Transcoding Model

The idea is to recursively traverse the Coding Tree Unit (CTU) and if a leaf node is reached, which is determined by examining the depth of decoded CU from input bit-stream ($CU_I$), the CU is encoded by using the information available in $CU_I$. The input CTU structure is replicated in transcoded CTU.

---

**Algorithm 2 FPR Transcoding Model**

---

**Input:** $CU_I$ = CU from input bit-stream, $d_O = 0$
**Output:** $CU_O$ = Transcoded CU

```
 1: function TRANSCODECU(CU_O, CU_I, d_O)
 2:     absAddr ← AbsAddr(CU_O, 0)
 3:     d_I ← D(CU_I, absAddr)
 4:     if d_I = d_O then                                          ▷ branching continues until leaf node is reached
 5:         predMode ← PredMode(CU_I, absAddr)
 6:         partSize ← PartSize(CU_I, absAddr)
 7:         if predMode = Intra then
 8:             intraData ← IntraData(CU_I, absAddr)
 9:             Copy(CU_O, Intra, intraData, partSize)                          ▷ intra mode CU_O
10:         else
11:             mv ← MV(CU_I, absAddr)
12:             skipFlag ← SkipFlag(CU_I, absAddr)
13:             mergeFlag ← MergeFlag(CU_I, absAddr)
14:             Copy(CU_O, Inter, mv, skipFlag, mergeFlag, partSize)           ▷ inter mode CU_O
15:         end if
16:         ▷ complete encoding including: prediction, transforms, quantization, entropy coding
17:         CU_O ← Encode(CU_O)
18:     else if d_O < d_I then                                     ▷ current CU is split to four sub-CUs
19:         i ← 0
20:         d_O ← d_O + 1
21:         while i < 4 do
22:             subCU_O ← Sub(CU_O, d_O, absAddr)
23:             TRANSCODECU(subCU_O, CU_I, d_O)
24:             absAddr ← absAddr + Count(subCU_O)
25:             i ← i + 1
26:         end while
27:     end if
28: end function
```

---

Intra Prediction Re-estimation (IPR) Transcoding Model

The model structure is same as FPR, however for intra coded pictures intra directions and modes are re-estimated in the same manner as reference encoder. The input CTU structure is replicated in transcoded CTU.

---

**Algorithm 3 IPR Transcoding Model**

---

```
 1: function TRANSCODECU(CU_O, CU_I, d_O)
 2:     absAddr ← AbsAddr(CU_O, 0)
 3:     d_I ← D(CU_I, absAddr)
 4:     if d_I = d_O then                           ▷ branching continues until leaf node is reached
 5:         partSize ← PartSize(CU_I, absAddr)
 6:         if CU_O in I-slice then                 ▷ intra directions are recalculated for I-slices
 7:             intraData ← EstPredData(CU_O, Intra, partSize)
 8:             Copy(CU_O, Intra, intraData, partSize)
 9:         else
10:             predMode ← PredMode(CU_I, absAddr)
11:             if predMode = Intra then
12:                 intraData ← IntraData(CU_I, absAddr)              ▷ intra mode CU_O
13:                 Copy(CU_O, Intra, intraData, partSize)
14:             else
15:                 mv ← MV(CU_I, absAddr)
16:                 skipFlag ← SkipFlag(CU_I, absAddr)
17:                 mergeFlag ← MergeFlag(CU_I, absAddr)
18:                 Copy(CU_O, Inter, mv, skipFlag, mergeFlag, partSize)   ▷ inter mode CU_O
19:             end if
20:         end if
21:         ▷ complete encoding including: prediction, transforms, quantization, entropy coding
22:         CU_O ← Encode(CU_O)
23:     else if d_O < d_I then                      ▷ current CU is split to four sub-CUs
24:         i ← 0
25:         d_O ← d_O + 1
26:         while i < 4 do
27:             subCU_O ← Sub(CU_O, d_O, absAddr)
28:             TRANSCODECU(subCU_O, CU_I, d_O)
29:             absAddr ← absAddr + Count(subCU_O)
30:             i ← i + 1
31:         end while
32:     end if
33: end function
```

---

MV Re-estimation (MR) Transcoding Model

In succession to IPR model, when at the leaf node, MVs are re-estimated by examining all the candidates in the same manner as reference encoder. The input CTU structure is replicated in transcoded CTU.

---

## Algorithm 4 MR Transcoding Model

```
 1: function TRANSCODECU(CU_O, CU_I, d_O)
 2:     absAddr ← AbsAddr(CU_O, 0)
 3:     d_I ← D(CU_I, absAddr)
 4:     skipFlag ← SkipFlag(CU_I, absAddr)
 5:     partSize ← PartSize(CU_I, absAddr)
 6:     if d_I = d_O then                          ▷ branching continues until leaf node is reached
 7:         if skipFlag = true then                              ▷ re-calculate MV index
 8:             interData ← EstPredData(CU_O, Inter, skip, merge, 2N × 2N)
 9:             Copy(CU_O, Inter, skip, merge, partSize, interData)
10:         else if CU_O not in I-Slice then                           ▷ re-calculate MV
11:             mergeFlag ← MergeFlag(CU_I, absAddr)
12:             interData ← EstPredData(CU_O, Inter, partSize)
13:             Copy(CU_O, Inter, mergeFlag, partSize, interData)
14:         else                                           ▷ re-calculate intra directions
15:             intraData ← EstPredData(CU_O, Intra, partSize)
16:             Copy(CU_O, Intra, partSize, intraData)
17:         end if
18:         ▷ complete encoding including: prediction, transforms, quantization, entropy coding
19:         CU_O ← Encode(CU_O)
20:     else if d_O < d_I then                          ▷ current CU is split to four sub-CUs
21:         i ← 0
22:         d_O ← d_O + 1
23:         while i < 4 do
24:             subCU_O ← Sub(CU_O, d_O, absAddr)
25:             TRANSCODECU(subCU_O, CU_I, d_O)
26:             absAddr ← absAddr + Count(subCU_O)
27:             i ← i + 1
28:         end while
29:     end if
30: end function
```

---

Advanced Transcoding (AT) Model

Three observations are important for understanding this model:

1) Skipped blocks require the least bits to encode;
2) Merging blocks reduces the number of bits;
3) 2N x 2N splitting requires one motion vector to be signalled, hence it is very possible that it will require less bits to encode the block.

The heuristics build upon these observations are: 1) Try skip and merge combinations on the root node of the tree and the node before the leaf node; 2) Try Inter-and Intra-coding with the size of 2N x 2N on each node.

---

**Algorithm 5** AT Model

---

```
1: function TRANSCODECU(CU_O, CU_I, d_O)
2:     absAddr ← AbsAddr(CU_O, 0)
3:     d_I ← D(CU_I, absAddr)
4:     partSize ← PartSize(CU_I, absAddr)
5:     predMode ← PredMode(CU_I, absAddr)
6:     if d_O < d_I then
7:         i ← 0
8:         d_SO ← d_O + 1
9:         while i < 4 do                                   ▷ current CU is split to four sub-CUs
10:            subCU_O ← Sub(CU_O, d_SO, absAddr)
11:            TRANSCODECU(subCU_O, CU_I, d_SO)
12:            absAddr ← absAddr + Count(SubCU_O)
13:            i ← i + 1
14:        end while
15:        if (predMode = Intra) then                       ▷ try intra mode for non-leaf CU
16:            intraData ← EstPredData(CU_O, Intra, 2N × 2N)
17:            Copy(CU_O, Intra, 2N × 2N, intraData)
18:            CU_T1 ← Encode(CU_O)
19:        end if
20:        if (CU_O not in I-slice) then                     ▷ try no split PU for non-leaf CU
21:            interData ← EstPredData(CU_O, Inter, 2N × 2N)
22:            Copy(CU_O, Inter, 2N × 2N, interData)
23:            CU_T2 ← Encode(CU_O)
24:                                        ▷ N × N PU split is only permitted for the smallest CU size
25:            if (partSize ≠ 2N × 2N) && (partSize ≠ N × N) then
26:                interData ← EstPredData(CU_O, Inter, partSize)
27:                Copy(CU_O, Inter, partSize, interData)
28:                CU_T3 ← Encode(CU_O)
29:            end if
30:        end if
31:                          ▷ for none I-slices: at the root and one node before leaf try SKIP mode
32:        if (CU_O not in I-slice)&& ((d_I − 1 = d_O) || (d_I = 0)) then
33:            interData ← EstPredData(CU_O, Inter, skip, merge, 2N × 2N)
34:            Copy(CU_O, Inter, skip, merge, 2N × 2N, interData)
35:            CU_T4 ← Encode(CU_O)
36:        end if
37:    else                                                                          ▷ leaf node
38:        if CU_O not in I-slice then                                   ▷ try SKIP on every leaf
39:            interData ← EstPredData(CU_O, Inter, skip, merge, 2N × 2N)
40:            Copy(CU_O, Inter, skip, merge, 2N × 2N, interData)
41:            CU_T5 ← Encode(CU_O)
42:        end if
43:        if predMode = Inter then
44:            interData ← EstPredData(CU_O, Inter, partSize)
45:            Copy(CU_O, Inter, partSize, interData)
46:            CU_T6 ← Encode(CU_O)
47:            if partSize ≠ 2N × 2N then                              ▷ try no split PU for leaf
48:                interData ← EstPredData(CU_O, Inter, 2N × 2N)
49:                Copy(CU_O, Inter, 2N × 2N, interData)
50:                CU_T7 ← Encode(CU_O)
51:            end if
52:        else
53:            intraData ← EstPredData(CU_O, Intra, partSize)
54:            Copy(CU_O, Intra, partSize, intraData)
55:            CU_T8 ← Encode(CU_O)
56:        end if
57:    end if
58:    SelectBest(CU_O, CU_T1, CU_T2, ..., CU_T8, subCU_O)
59: end function
```

---

On each recursive iteration, AT will try to encode the current CU with:

1) 2N x 2N intra prediction by re-calculating intra prediction direction;
2) Inter prediction with 2N x 2N PU spilt and re-calculating the motion vector;
3) Inter prediction by re-using PU split mode and re-calculating motion vector;
4) Skip mode on root CU, the CU before leaf node, and leaf node;
5) re-using PU mode on leaf node and re-calculating the intra prediction directions and motion vectors.

The output CU structure will be a sub-set of input CU structure, meaning, there will be no input tree node that will be split further. Therefore, every CU will be shallow or equal depth compared to input CUs. As it is seen in line 58 of Algorithm 5, the final CU coding will be chosen as the one that is best in regards to Rate-Distortion criteria.

### Performance Evaluation

To test the transcoding performance comprehensive set of simulations are designed. The idea is that SCT model produces the best coding performance, however it is very slow, because it requires and exhaustive search through the space of tree structures with all possible prediction and partitioning modes. In contracts, the proposed transcoding methods minimize the search for optimal coding structure by re-using the information available through the input bit-stream. Comparing the performance of developed transcoding models to SCT model provides evidence towards the gains that are achieved through re-using information available through the input bit-stream.

### Video Quality Measurement

It is generally preferred to compress the video signal as much as possible and keep the video quality close to the original. There are, generally, two categories of methods for measuring video quality: 1) subjective quality: its based on test procedures devised by ITU to quantify the quality using human agents; and 2) objective quality: its a mathematical model to approximate the subjective quality of video. Subjective quality assessment of digital videos requires human agents, which is expensive, hence objective quality is a suitable alternative.

The main mathematical model used by the researchers for developing better encoding methods is the famous Rate-Distortion Optimization (RDO) model. Based on this model, distortion is optimized based on changes in rate which is the amount of data required for encoding the input data. In video coding, every decision usually affects the Rate-Distortion (RD) values, and the challenge is to find the optimal solution. Commonly used RD criteria in video coding is PSNR-Bit-rate pair.

### PSNR

The most common subjective quality measure is Peak Noise-to-Source Ratio (PSNR). It is measured with decibel (dB) as follows:

$$PSNR(\mathrm{Im}\,g_1, \mathrm{Im}\,g_2) = 10\log_{10}\frac{\left(2^n - 1\right)^2}{MSE(\mathrm{Im}\,g_1, \mathrm{Im}\,g_2)}$$

In the equation, PSNR is measured relative to Mean Square Error (MSE) between two images ($\mathrm{Img}_1$ and Img2), of which, one image is the original image and another is the compressed image. n is the number of bits used to specify each pixel, which is normally 8 bits. Higher PSNR means that the input and output images are similar. Typically PSNR values range over 30 dB and 50 dB, where higher is better. In transcoder design, the PSNR is calculated between original picture and the decoded picture of transcoded bit-stream.

Sole use of PSNR is insufficient in quantifying coding performance, since higher PSNR usually requires higher bit-rate and high bit-rate means lower compression rate. For example, if the encoder output is equal to input, no compression, the PSNR will be highest but the bit-rate will stay the same. The challenge is to reduce the bit-rate as much as possible and keep the PSNR highest. To mitigate these issues, it is important to compensate for the changes in bit-rate to get better understanding of transcoding performance.

### Bit-rate

The bit-rate of bit-stream (R) is calculated by averaging the total number of bits in the bit-stream by the length of the bit-stream measured in seconds, the results is usually measured with kilobits per-second (kbps) or megabits per-second (mbps).

### Transcoder Evaluation Concepts

Transcoding performance is measured by calculating bit-rate and PSNR for base sequences and transcoded sequences. Note that only the PSNR for luma channel is measured (Y-PSNR). For illustration purposes two set of plots are created: 1) Rate-Distortion (RD) plots; and 2) Average overhead and bit-rate ratio.

Bit-rate ratio

For bit-rate reduction transcoding, it is convenient to quantify the reduction in inverse fraction of input bit-rate. Denote the bit-rate of input bit-stream by $R_S$ and the base bit-rate $R_B$, then define the bit-rate ratio:

$$r = \frac{R_S}{R_B}$$

which determines the ratio at which bit-rate has been reduced. For example, reducing the input bit-rate by 50 % requires a transcoded bit-rate equal to half of input bit-rate.

Overhead

Reduction in bit-rate will usually cause a reduction in quality. To compensate this loss, one solution is to calculate the overhead. First define transcoding loss ($L_T$) as the difference between base bit-rate ($R_B$) and transcoded bit-rate ($R_T$):

$$L_T = R_B - R_T$$

Then overhead (O) is defined as the ratio between transcoding loss ($L_T$) and the base bit-rate ($R_B$):

$$O = \frac{L_T}{R_B}$$

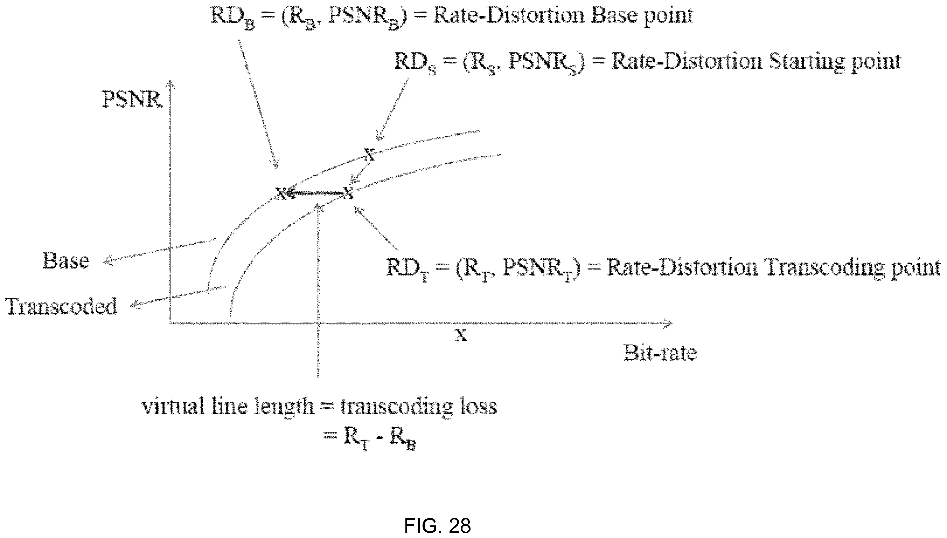

In order to find the base bit-rate (RB) the bit-rate at the location with equal PSNR of the RD point of the transcoded sequence is located, see Fig. 28.

Notice that $PSNR_B = PSNR_T$. Hence to obtain RB it is sufficient to fit a curve to the RD points on the base plot and interpolate it for $PSNR_T$. For example, if there is a set of three RD pairs, polynomial of degree 3 is fit to obtain f($PSNR_B$):

$$R_B = f(PSNR_B) = c_4 PSNR_B^3 + c_3 PSNR_B^2 + c_2 PSNR_B^1 + c_1$$

f($PSNR_B$) is solved using $PSNR_B = PSNR_T$ to obtain RB, in which case, $PSNR_T$ is measured from transcoded sequence. The used algorithm that calculates the coefficients in the equation above is the monotonic piecewise cubic interpolation of Fritsch and Carlson. This interpolation method is chosen since it produces smooth curves due to their monotonic characteristics, and hence they are easier to interpret. The overhead demonstrates the price that has to be paid in bits to maintain the PSNR. Lower overhead shows that the transcoder coding performance, for equal PSNR values, was close to that of first encoder, in other words, if the raw video sequence was available and it has been encoded the RD performance was close to ($R_B$, $PSNR_B$). Hence low overhead is better than high overhead.

Bit-rate Ratio and Overhead Plots

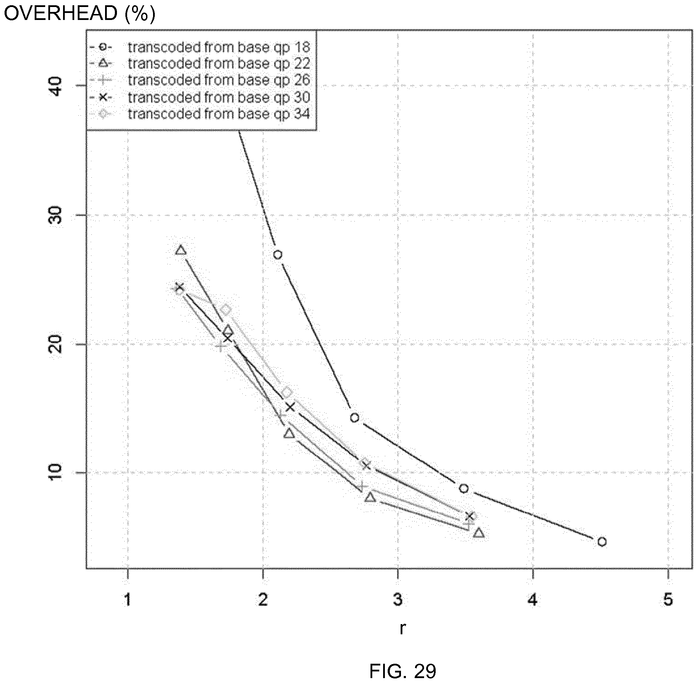

To provide a reliable estimate for r and O, each video sequence is encoded with n different QP values, and then the bit-stream is transcoded with m different QP values. Plotting the pairs (r, O) = $\{(r_{11}, O_{11}), ..., (r_{1m}, O_{1m})\}$ provides a convenient way to summarize the performance of transcoding a single bit-stream. As an example, Fig. 29 shows the SCT model performance for Kimono sequence where the sequence is encoded with n = 5 different QP and later transcoded with m = 5 different QP. It is observed that for bit-rate reduction greater than factor 3 the overhead of SCT model converges. This means for higher QP values transcoding performance reaches that of lower QP. However, even in the best case for base QP of 18, reducing the bit-rate by factor of 4 requires 5 % higher bit-rate compared to direct encoding of original sequence.

From performance perspective, the ideal case is a transcoding model that has no overhead while reducing the bit-rate, which is equal to an encoder that has access to original raw video and the bit-rate reduction is achieved through encoding with higher QP. However in reality this is impossible, since HEVC encoding is lossy and decoding the bit-stream will produce a raw video sequence that is unequal to the original.

Average Bit-rate Ratio and Overhead Plots

Assume there is a video sequence encoded with $QP_1$. Transcoder will produce a set of new bit-streams encoded with $QP_{11}$, ..., $QP_{1m}$. For transcoded bit-streams there is a function fit to RD points, $f(r_1,O_1) = \{(r_{11},O_{11}), ..., (r_{1m},O_{1m})\}$. If the same video sequence is encoded with $QP_2$ and then transcoded with $QP_{21}$, ..., $QP_{2m}$ will create another chain of transcoded bit-streams, and a corresponding bit-rate ratio and overhead curve described by: $f(r_2,O_2) = \{(r_{21},O_{21}), ..., (r_{2m},O_{2m})\}$. Ultimately, for n encoded bit-streams there will be n corresponding $f(r_n,O_n)$.

To provide a suitable way to summarize the transcoder performance using the set of n x m pair of (r, O), a simple solution is to fit a curve to each (r, O) set and average the result. The result is called average bit-rate ratio and overhead, denoted by f(r, O).

In the reported results in this Annex five base and transcoded QP values, as shown in Table 3, are used in simulations. Each row corresponds to an input bit-stream encoded with $QP_n$ and then transcoded with $QP_{nm}$. Base QP values of 38, 42 and 46 are included to extend the PSNR-bit-rate curve so to avoid extrapolation in the RD plots.

Table 3 - QP values used for base encoding and transcoding

| Base QP | Transcoder QP | $(r_{nm}, O_{nm})$ |
|---|---|---|
| $QP_1$=18 | $QP_{1m}$={18,20,22,24,26} | $(r_{1m}, O_{1m})$ |
| $QP_2$=22 | $QP_{2m}$={22,24,26,28,30} | $(r_{2m}, O_{2m})$ |
| $QP_3$=26 | $QP_{3m}$={26,28,30,32,34} | $(r_{3m}, O_{3m})$ |
| $QP_4$=30 | $QP_{4m}$={30,32,34,36,38} | $(r_{4m}, O_{4m})$ |
| $QP_5$=34 | $QP_{5m}$={34,36,38,40,42} | $(r_{5m}, O_{5m})$ |
| 38 | None | None |
| 42 | None | None |
| 46 | None | None |

(r, O) pairs in Table 3 could also be visualized through a matrix:

$$\begin{pmatrix} (r_{11},O_{11}) & ... & (r_{15},O_{15}) \\ \vdots & \ddots & \vdots \\ (r_{51},O_{51}) & ... & (r_{55},O_{55}) \end{pmatrix}$$

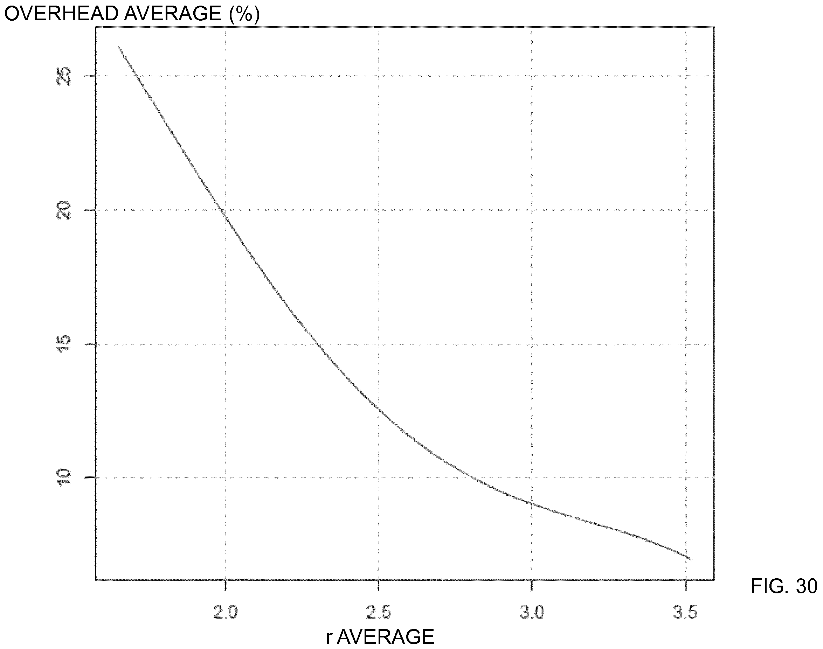

In the matrix, each row corresponds to the input bit-stream encoded with the same QP. It is possible to fit a curve to model f(r, O) in each row. Then averaging the coefficients of these curves gives the average bit-rate ratio and overhead curve, $\overline{f}(r,O)$. For example, averaging the curves in Fig. 29 for Kimon 1920 $\times$ 1080 results in one curve as shown in Fig. 30.

The average curve corresponds to a video sequence created from concatenation of sub-sequences, where each sub-sequence corresponds to concatenation of sequences in each column of the matrix.

f(r, O) corresponds to a single video sequence. It is also possible to group video sequence with similar characteristics and equal spatial resolution and calculate the overall (r, O) presenting the transcoder performance for the group. Assume there is p sequences in class A, hence there is p average bit-rate ratio and overhead functions. It is reasonable to average these functions to provide an overview performance curve of a transcoder. This average is denoted as:

$$\overline{f}_A(r,O) = \frac{\overline{f}_1(r,0) + \cdots + \overline{f}_p(r,O)}{p}$$

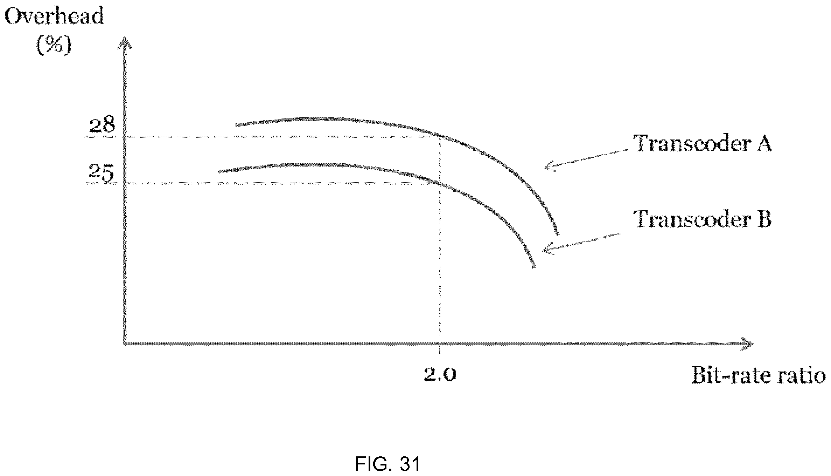

The final curve, shown in the equation above, could be derived for each transcoding method and drawing them in one plot provides a convenient way to compare the transcoding performance over several sequences where each sequence is encoded and transcoded with series of QP values. A hypothetical example of such plot is shown in Fig. 31.

By taking a quick glance at Fig. 31, it is obvious that Transcoder B has performed better than Transcoder A in terms of RD. Using Transcoders A and B to reduce the bit-rate to half the original amount requires 28 % and 25 % increased bit-rate compared to encoding of original video sequence. Therefore transcoder B is more efficient than transcoder A.

Test Sequences and Encoder Configuration

Table 4 details the video sequences used in simulations. Test sequences are chosen from the standard set defined by ITU for evaluating encoder models. In this table, spatial and temporal resolutions are determined by Size and Frames per Second (FPS), respectively. Class is determined by the spatial resolution and could be: A) 2560x1600; B) 1920x1080; C) 1280×720; D) 832x480; or E) 416 x 240. All the sequences use 4:2:0 YUV color sampling.

Table 4 - video sequences for simulations

| Sequence | Size | FPS | Class | # Frames |
|---|---|---|---|---|
| Traffic | 2560 × 1600 | 30 | A | 150 |
| PeopleOnStreet | 2560 × 1600 | 30 | A | 150 |
| StreamLocomotiveTrain | 2560 × 1600 | 60 | A | 300 |
| Kimono | 1920 × 1080 | 24 | B | 240 |
| ParkScene | 1920 × 1080 | 24 | B | 240 |
| Cactus | 1920 × 1080 | 50 | B | 500 |
| BQTerrace | 1920 × 1080 | 60 | B | 600 |
| Basketball Drive | 1920 × 1080 | 50 | B | 500 |
| FourPeople | 1280 × 720 | 60 | C | 600 |
| Johnny | 1280 × 720 | 60 | C | 600 |
| KristenAndSara | 1280 × 720 | 50 | C | 600 |
| Basketball DrillText | 832 × 480 | 60 | D | 500 |
| BQMall | 832 × 480 | 30 | D | 600 |
| PartyScene | 832 × 480 | 50 | D | 500 |
| RaceHorses | 832 × 480 | 30 | D | 300 |
| BasketballDrill | 832 × 480 | 50 | D | 500 |
| BQSquare | 416 × 240 | 30 | E | 600 |
| RaceHorses | 416 × 240 | 30 | E | 300 |
| Basketball Pass | 416 × 240 | 30 | E | 500 |
| BlowingBubbles | 416 × 240 | 30 | E | 500 |

Two main encoder configurations are used with each simulation: Low-Delay Main (LDM) and Random-Access Main (RAM). Important characteristics of these configurations are detailed in Table 5.

Table 5 - Encoder configurations used for encoding and transcoding

| Configuration | MaxCUWidth | MaxCUHeight | MaxTreeDepth | GOP Size | SliceMode |
|---|---|---|---|---|---|
| Random Access Main | 64 | 64 | 4 | 8 | Disabled |
| Low Delay Main | 64 | 64 | 4 | 4 | Disabled |

Results

The result for the performance of the developed video transcoder models, described in the foregoing, is included herein using the reference HEVC encoder model HM-8.2. The developed transcoders are based on this software test model.

Base Bit-stream

Each raw video sequence, shown in Table 3, is encoded and decoded twice (once for each encoder configuration) to produce the base curves of HEVC reference encoder performance. The PSNR and bit-rate for each encoding is measured and denoted as Rate-Distortion (RD) pair:

= {($R_{B1}$, $PSNR_{B1}$), ($R_{B2}$, $PSNR_{B2}$), ..., ($R_{B8}$, $PSNR_{B8}$)},

where each pair corresponds to the following quantization parameters:

QP = {18, 22, 26, 30, 34, 38, 42, 46}.

Total of 20 sequences were encoded twice with each QP value, hence 320 RD points for base curve has been produced. The chosen sequences cover wide range of real world scenarios. These scenarios range over sequences with complex textures, fast motion, video conferencing setup, vibrant colors, and more.

To demonstrate the transcoder performance a sequence is chosen and discussed through this chapter. An important transcoding application is the video conferencing scenario. Popular sequence Johnny demonstrates a case in point. RD values for sequence Johnny encoded with Low Delay Main (LDM) configuration is listed in Table 6. Low delay configuration is mostly used in video conferencing applications to minimize the delay between participants.

Table 6 - Base performance for sequence Johnny with LDM configuration

| RD | QP | Rs (kbps) | PSNRs (dB) |
|----|----|-----------|------------|
| $RD_1$ | 18 | 5848.13 | 44.38 |
| $RD_2$ | 22 | 1508.13 | 42.96 |
| $RD_3$ | 26 | 516.31 | 41.53 |
| $RD_4$ | 30 | 252.09 | 39.89 |
| $RD_5$ | 34 | 143.7 | 38.03 |
| $RD_6$ | 38 | 87.68 | 35.91 |
| $RD_7$ | 42 | 54.19 | 33.7 |
| $RD_8$ | 46 | 34.77 | 31.72 |

QP $\geq$ 38 in Table 5 produces poor quality videos. Such high QP values are included for completeness purposes in the base RD plots, and they are unused in simulations.

SCT Model

Each encoded sequence is sent to the transcoder to reduce the bit-rate. Simple Cascaded Transcoding (SCT) model decodes the sequence and follows the procedure of reference encoder, with only difference being higher QP value. The encoder will code the sequence with the goal of achieving highest coding performance, and since the encoder is not restricted by any means, it is reasonable to assume that the coding performance is the best possible transcoding performance.

Each coded sequence with the base QPB = {18, 22, 26, 30, 34, 38} is decoded and re-encoded with QPB +$\Delta$QP, where $\Delta$QP = {0, 2, 4, 6, 8}. In addition to PSNR and bit-rate, transcoding time (seconds) is also measured.

The SCT model performance for Johnny is shown in Table 7. Base bit-rate, $R_B$, is calculated as described in foregoing by fitting a curve to $RD_1$ through RD5 values from Table 5 and solving it for $PSNR_T$ values from Table 6.

Table 7 - SCT model performance with LDM configuration for sequence Johnny - Base QP:22, Rs:1508.13 (kbps), PSNRs:42.96 (dB)

| $\Delta$QP | RB (kbps) | RT (kbps) | $PSNR_T$ (dB) | r | Overhead % |
|------------|-----------|-----------|---------------|---|------------|
| 0 | 786.4 | 1271.12 | 42.29 | 1.92 | 61.64 |
| 2 | 574.91 | 803.28 | 41.74 | 2.62 | 39.72 |
| 4 | 410.03 | 496.09 | 41.1 | 3.68 | 20.99 |

(continued)

| ΔQP | RB (kbps) | RT (kbps) | PSNR$_T$ (dB) | r | Overhead % |
|---|---|---|---|---|---|
| 6 | 301.37 | 338.16 | 40.4 | 5 | 12.21 |
| 8 | 229.56 | 247.28 | 39.62 | 6.57 | 7.72 |

To achieve higher bit-rate reduction, QP value is increased. For example, as it is noted in Table 7, ΔQP = 6 reduces the bit-rate 5-folds while requiring -12 % overhead. In other words, to reduce the bit-rate to one fifth, SCT model requires -12% higher bit-rate compared to direct encoding of original raw video sequence with matching bit-rate and PSNR.

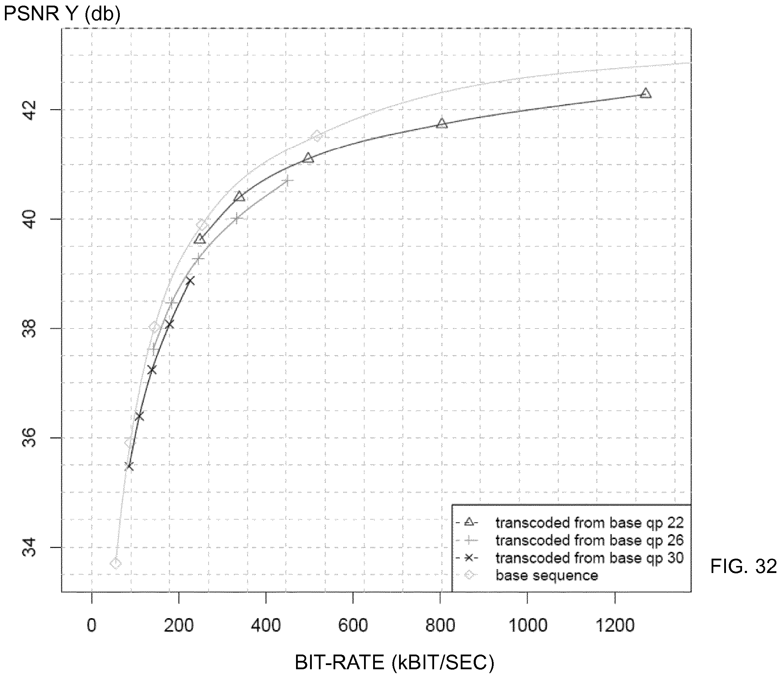

In addition to bit-rate ratio and overhead plots, a common method to illustrate the coding performance in details is through the PSNR-bit-rate curves. The plots illustrating the RD transcoding performance for Johnny sequence is shown in Fig. 32. The line with open triangles in this plot corresponds to ($R_T$, PSNRT) pairs in Table 7.

An observation from Fig. 32 is that the RD performance of SCT model gets closer to base curve as the transcoding QP increases. One explanation for this behaviour could be that the base RD performance is decreasing for high QP values faster than SCT model performance. This is because for high QP values most of the coding information will be lost during quantization and no matter how precise the search for MV and modes is, the residuals will be mostly truncated to zero in quantization stage and it will be very difficult to maintain the original video quality. Hence, SCT model that has access to lower quality video will, nevertheless, produce similar results.

FPR Model

The aim of the Full Prediction Reuse (FPR) model is to re-use all the information available in the input bit-stream about: Coding Tree Unit and Coding Units. In principle this model will be the faster model since most time consuming stages, e.g. motion estimation, of encoding is bypassed. It is also interesting to observe the changes in transcoding performance compared to SCT model. The FPR transcoding performance for Johnny sequence is shown in Table 8.

Table 8 - FPR transcoding performance with LDM configuration for sequence Johnny - Base QP:22, Rs:1508.13 (kbps), PSNRs:42.96 (dB)

| ΔQP | R$_B$ (kbps) | R$_T$ (kbps) | PSNR$_T$ (dB) | r | Overhead % |
|---|---|---|---|---|---|
| 0 | 901.07 | 1367.44 | 42.48 | 1.67 | 51.76 |
| 2 | 605.99 | 983.48 | 41.84 | 2.49 | 62.29 |
| 4 | 418.92 | 727.08 | 41.14 | 3.6 | 73.56 |
| 6 | 303.04 | 606.9 | 40.41 | 4.98 | 100.27 |
| 8 | 228.38 | 542.42 | 39.61 | 6.6 | 137.51 |

A striking observation of Table 8 is the increasing overhead trend of FPR model compared to decreasing overhead trend of SCT model in Table 7.

The results in Table 8 suggests that FPR transcoding achieves better bit-rate ratio performance for lower QP values as compared to higher QP values.

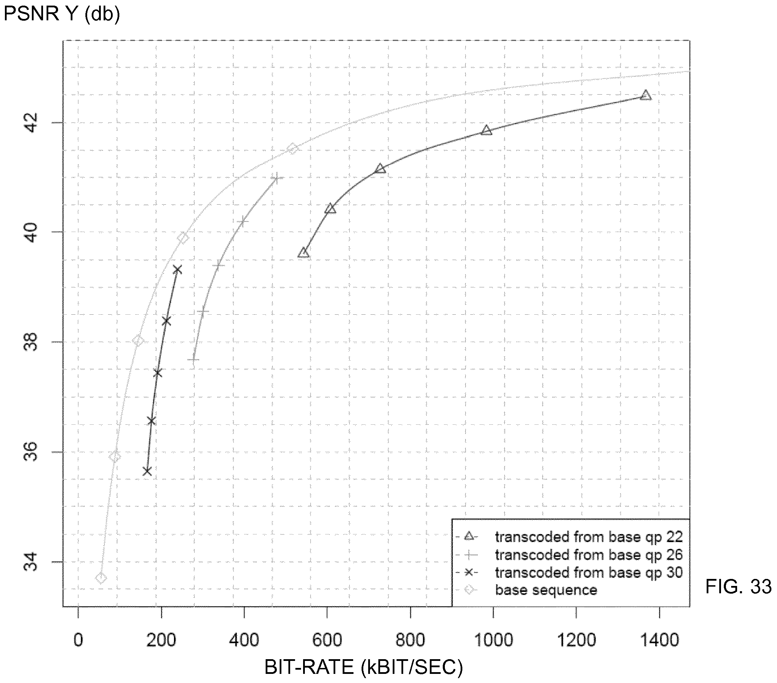

PSNR-bit-rate performance for several base QP values for FPR transcoding is plotted in Fig. 33. As expected, compared to SCT model the RD curves are diverting from the base curve with increase in QP and such behaviour results in higher overhead, since the quality is dropping faster than bit-rate. However notice that the RD performance for higher base QP values is closer to the base curve. This could be better understood by examining Table 9.

Table 9 - FPR transcoding performance with LDM configuration for sequence Johnny - Base QP:34, Rs:143.7 (kbps), PSNRs:38.03 (dB)

| ΔQP | R$_B$ (kbps) | R$_T$ (kbps) | PSNR$_T$ (dB) | r | Overhead % |
|---|---|---|---|---|---|
| 0 | 125.11 | 137.78 | 37.47 | 1.15 | 10.13 |
| 2 | 97.07 | 126.57 | 36.37 | 1.48 | 30.4 |

(continued)

| ∆QP | $R_B$ (kbps) | $R_T$ (kbps) | $PSNR_T$ (dB) | r | Overhead % |
|---|---|---|---|---|---|
| 4 | 77.54 | 116.27 | 35.35 | 1.85 | 49.96 |
| 6 | 64.32 | 109.49 | 34.49 | 2.23 | 70.24 |
| 8 | 52.79 | 104.6 | 33.58 | 2.72 | 98.13 |

Compared to the performance reported in Table 8, FPR transcoding performance is better with base QP = 34. For example, for ∆QP = 6 the overhead is 70.24 % compared to 100.27 %. However it should be noted that the overhead depends both on the base and transcoded RD performance, hence lower overhead could be the result of worse RD performance of the base encoding. This behaviour is also observed for SCT model. RD performance for SCT model from higher base QP values is better than lower base QP.

IPR Model

Intra Prediction Re-estimation (IPR) transcoding model is similar to FPR model. The difference is in the way that I-slices are handled. IPR transcoding model re-estimates the I-slice prediction data. The motivation for developing this method is that I-slices could improve the coding efficiency of other slices by providing accurate prediction data. This is especially true for random access configuration of the transcoder where each GOP is composed of eight pictures and each starting picture is an I-picture.

To evaluate the IPR model, two tests are considered: 1) a sequence is transcoded with FPR model and IPR model using random access configuration; and 2) a sequence is transcoded with FPR model using random access and low delay configurations. Random access configuration is important for video playback and video editing. BQTerrace (1920 x 1080) video sequence is used in these tests since it provides a typical public scene with motion and textures.

Table 10 - FPR (top) and IPR (bottom) transcoding performance with RAM configuration for sequence BQTerrace - Base QP:18, $R_S$: 142335.69 (kbps), PSNRs:42.7 (dB)

| ∆QP | $R_B$ (kbps) | $R_T$ (kbps) | $PSNR_T$ (dB) | r | Overhead % |
|---|---|---|---|---|---|
| 0 | 9432.93 | 10598.96 | 35.42 | 1.18 | 12.36 |
| 2 | 4791.59 | 8163.15 | 34.69 | 2.31 | 70.36 |
| 4 | 3404.71 | 5549.73 | 34.18 | 3.26 | 63 |
| 6 | 2447.37 | 4337.08 | 33.58 | 4.53 | 77.21 |
| 8 | 1874.08 | 3684.29 | 32.98 | 5.92 | 96.59 |
| 0 | 8809.46 | 10519.25 | 35.37 | 1.26 | 19.41 |
| 2 | 4811.96 | 7949.37 | 34.7 | 2.3 | 65.2 |
| 4 | 3492.71 | 5340.21 | 23.21 | 3.17 | 52.9 |
| 6 | 2531.36 | 4115.04 | 33.65 | 4.38 | 62.56 |
| 8 | 1934.59 | 3438.49 | 33.05 | 5.73 | 77.74 |

By comparing the overheads reported in Table 10, it is obvious that IPR transcoding model demonstrates a better performance, since the overheads are lower in every case. IPR model performs even better for higher QP values, 18.82 % overhead difference (∆QP = 8) compared to 5.16 % (∆QP = 2). Which means coding I-slices with better quality is important for higher bit-rate reduction.

To further support the claim that FPR model has higher transcoding performance for random access configuration compared to low delay, transcoding performance of sequence Johnny with both configurations is reported in Table 11.

Table 11 - IPR transcoding performance with LDM (top) and RAM (bottom) configurations sequence Johnny - Base QP:26, Rs:814.77 (kbps), PSNRs:41.83 (dB)

| $\Delta$QP | $R_B$ (kbps) | $R_T$ (kbps) | $PSNR_T$ (dB) | r | Overhead % |
|---|---|---|---|---|---|
| 0 | 376.54 | 476.69 | 40.93 | 1.37 | 26.6 |
| 2 | 279.14 | 394.83 | 40.19 | 1.85 | 41.44 |
| 4 | 213.44 | 336.63 | 39.41 | 2.42 | 57.72 |
| 6 | 165.99 | 298.72 | 38.57 | 3.11 | 79.97 |
| 8 | 133.22 | 275.76 | 37.72 | 3.88 | 106.99 |
| 0 | 702.61 | 788.95 | 41.53 | 1.16 | 12.29 |
| 2 | 514.27 | 673.8 | 40.77 | 1.58 | 31.02 |
| 4 | 401.15 | 539.76 | 40.03 | 2.03 | 34.55 |
| 6 | 320.03 | 446.46 | 39.27 | 2.55 | 39.5 |
| 8 | 267.62 | 390.39 | 38.57 | 3.04 | 45.87 |

LDM configuration has single I-slice for a bit-stream opposed to one I-slice per GOP of RAM configuration. Based on this fact, roughly 50 % lower overhead of IPR transcoding, as noted in Table 10, is due to motion re-estimation for higher number of I-slices.

MR Model

Motion Re-estimation (MR) transcoding model is developed to understand the transcoder performance when the transcoder is granted with the flexibility to re-estimate the motion data for every picture, however constrained by the quad-tree structure that is copied from the input bit-stream.

Naturally one would expect that granting transcoder the ability to optimize the block coding would increase transcoding performance. However it is observed that reusing tree structure and PU splitting of input bit-stream has effected the performance for $\Delta$QP = 0, which is shown in Table 12.

Table 12 - MR transcoding performance with LDM configuration for sequence Johnny - Base QP:22, Rs:5848.13 (kbps), PSNRs:44.38 (dB)

| $\Delta$QP | $R_B$ (kbps) | $R_T$ (kbps) | $PSNR_T$ (dB) | r | Overhead % |
|---|---|---|---|---|---|
| 0 | 754.41 | 1324.5 | 42.22 | 2 | 75.57 |
| 2 | 553.61 | 880.77 | 41.66 | 2.72 | 59.09 |
| 4 | 387.49 | 579.03 | 40.99 | 3.89 | 49.43 |
| 6 | 285.36 | 419.46 | 40.25 | 5.29 | 46.99 |
| 8 | 215.98 | 324.03 | 39.44 | 6.98 | 50.03 |

Overhead for FPR model with $\Delta$QP = 0 was reported 51.76 % in Table 8, whereas the corresponding overhead for MR model has increased by 23.81 %. The reason could be that local optimization of motion data has a negative effect on the global coding performance. The tree structure extracted from input bit-stream has been optimized in conjunction with the appropriate motion data in a global manner, and reusing that structure with different motion data may lead to somewhat lower performance in some applications.

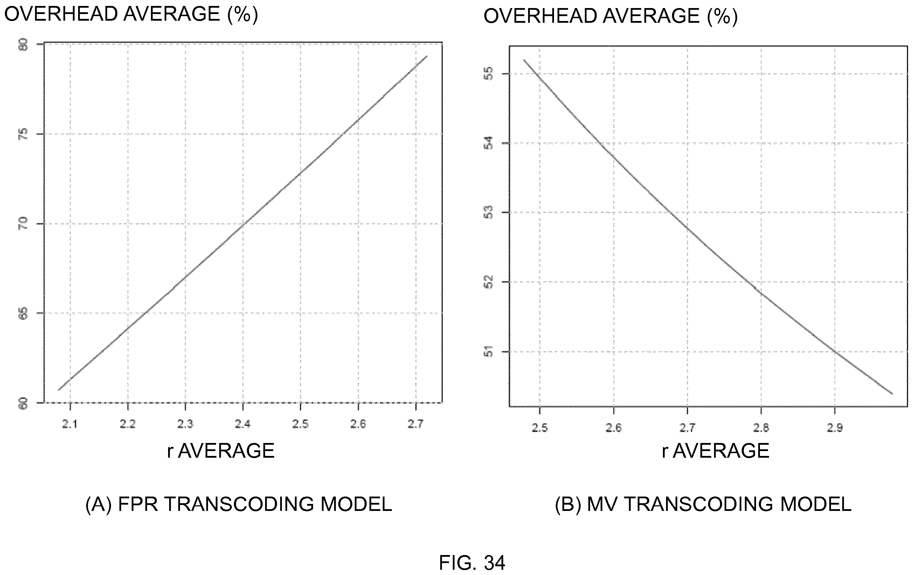

Fig. 34 illustrates the average bit-rate ratio and overhead results for MR and FPR transcoding. It is clear that the rising trend for FPR model has been reversed with MR model. Using RAM and LDM configurations the bulk of pictures are encoded with inter prediction mode, hence correct MV has an important factor in transcoder performance. It is also noted that the main difference between MR and FPR transcoding models is the motion vector re-estimation for MV and motion vector re-use for FPR. By increasing the QP value to achieve higher bit-rate reduction ratios, re-using MV produces somewhat lower quality as it is seen by the increasing trend of overhead for FPR model, whereas re-estimating motion vectors by MV model produces better performance by adapting to the higher QP values.

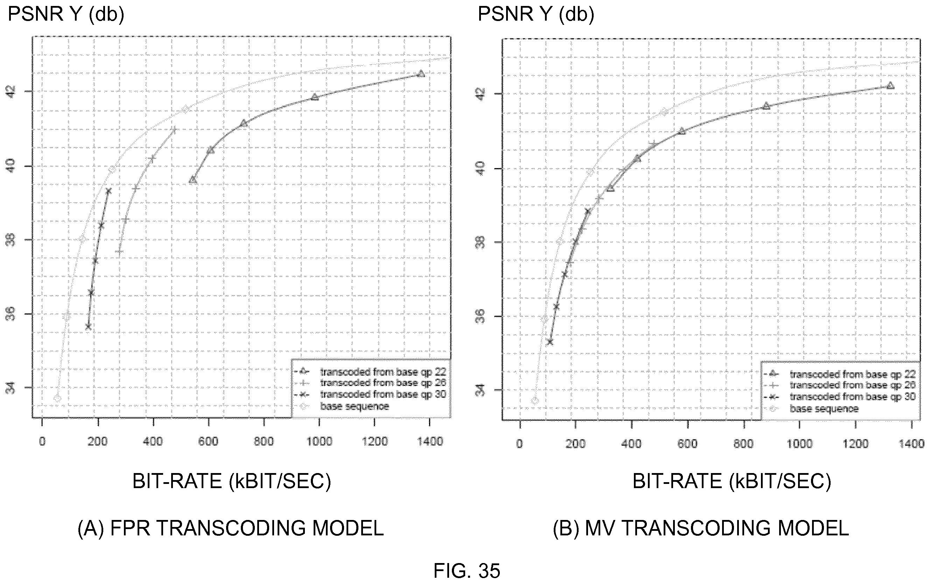

Comparing the PSNR-Bit-rate performance of FPR and MV models also shows a big improvement. It is observed in Fig. 35 that the divergent behaviour of FPR model for higher ΔQP values has been fixed in MV model.

AT Model

Advanced Transcoding model is designed with the goal of reducing the overhead of previous transcoding models while maintaining good time complexity performance. To accomplish such goal it is proposed to extend the search space of CU structures, and try other block encoding combinations that are different from block information of input bit-stream. It is also important to note that the space of possible combinations between CU tree structures, PU splits, and block modes is huge.

To reduce the search space the following observations about HEVC standard are considered:

1) Skipped blocks require least number of bits to encode, hence, for higher QP values it is reasonable to try to transcode as many skipped blocks as possible;
2) $2N \times 2N$ PU spilt requires one MV to be signalled, therefore it has a higher chance of reducing the overhead, since it requires less bits;
3) Having access to the CU tree structure of input bit-stream it is possible to produce a shallow tree structure by pruning the input tree. Pruned tree will have less details and require less bits to be coded.

In foregoing, it was observed that MV model has demonstrated better transcoding performance compared to FPR due to re-estimation of MV for inter blocks and re-estimation of motion directions for I-pictures. Improvement of AT transcoding performance over MV model is shown in Table 12.

Table 12 - SCT model (top) and AT (bottom) model transcoding performance with LDM configuations for sequence Johnny-Base QP:22, Rs:1508.13 (kbps), PSNRs:42.96 (dB)

| ΔQP | $R_B$ (kbps) | $R_T$ (kbps) | $PSNR_T$ (dB) | r | Overhead % |
|---|---|---|---|---|---|
| 0 | 754.41 | 1324.5 | 42.22 | 2 | 75.57 |
| 2 | 553.61 | 880.77 | 41.66 | 2.72 | 59.09 |
| 4 | 387.49 | 579.03 | 40.99 | 3.89 | 49.43 |
| 6 | 285.36 | 419.46 | 40.25 | 5.29 | 46.99 |
| 8 | 215.98 | 324.03 | 39.44 | 6.98 | 50.03 |
| 0 | 746.98 | 1253.78 | 42.21 | 2.02 | 67.85 |
| 2 | 552.65 | 810.49 | 41.66 | 2.73 | 46.66 |
| 4 | 393.5 | 506.68 | 41.02 | 3.83 | 28.76 |
| 6 | 291.48 | 349.99 | 40.31 | 5.17 | 20.08 |
| 8 | 221.77 | 257.8 | 39.52 | 6.8 | 16.25 |

The design goal of AT model was to produce performance close to SCT model. Table 13 demonstrates that the performance of these two models is very close. This is also observed in Fig. 24, where SCT and AT exhibit very close performance.

Table 13 - SCT (top) and AT (bottom) transcoding performance with LDM configurations for sequence Johnny - Base QP:22, Rs:1508.13(kbps), PSNRs:42.96(dB)

| ΔQP | $R_B$ (kbps) | $R_T$ (kbps) | $PSNR_T$ (dB) | r | Overhead % |
|---|---|---|---|---|---|
| 0 | 786.4 | 1271.12 | 42.29 | 1.92 | 61.64 |
| 2 | 574.91 | 803.28 | 41.74 | 2.62 | 39.72 |
| 4 | 410.03 | 496.09 | 41.1 | 3.68 | 20.99 |
| 6 | 301.37 | 338.16 | 40.4 | 5 | 12.21 |
| 8 | 229.56 | 247.28 | 39.62 | 6.57 | 7.72 |
| 0 | 746.98 | 1253.78 | 42.21 | 2.02 | 67.85 |

(continued)

| ΔQP | $R_B$ (kbps) | $R_T$ (kbps) | $PSNR_T$ (dB) | r | Overhead % |
|---|---|---|---|---|---|
| 2 | 552.65 | 810.49 | 41.66 | 2.73 | 46.66 |
| 4 | 393.5 | 506.68 | 41.02 | 3.83 | 28.76 |
| 6 | 291.48 | 349.99 | 40.31 | 5.17 | 20.08 |
| 8 | 221.77 | 257.8 | 39.52 | 6.8 | 16.25 |

Class Average Performance

As described in the foregoing, transcoder performance could be averaged across sequences of the same class. This will provide a better overview of how each transcoding method performs given video sequences with certain characteristics.

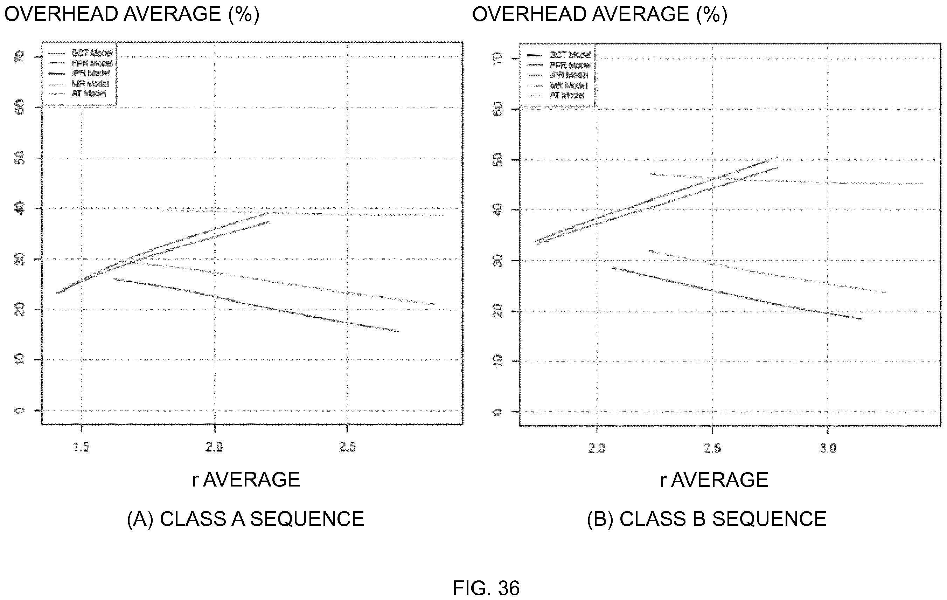

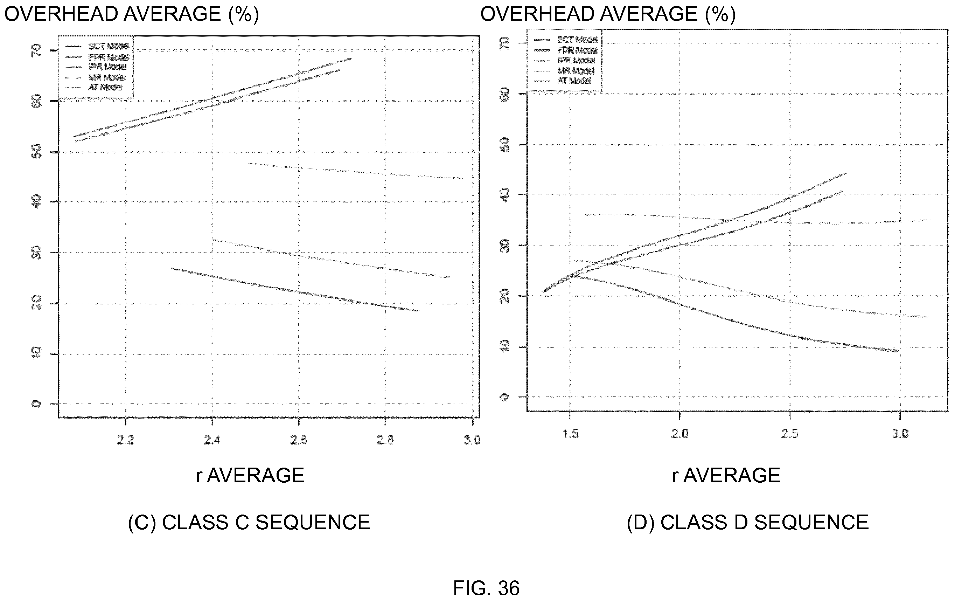

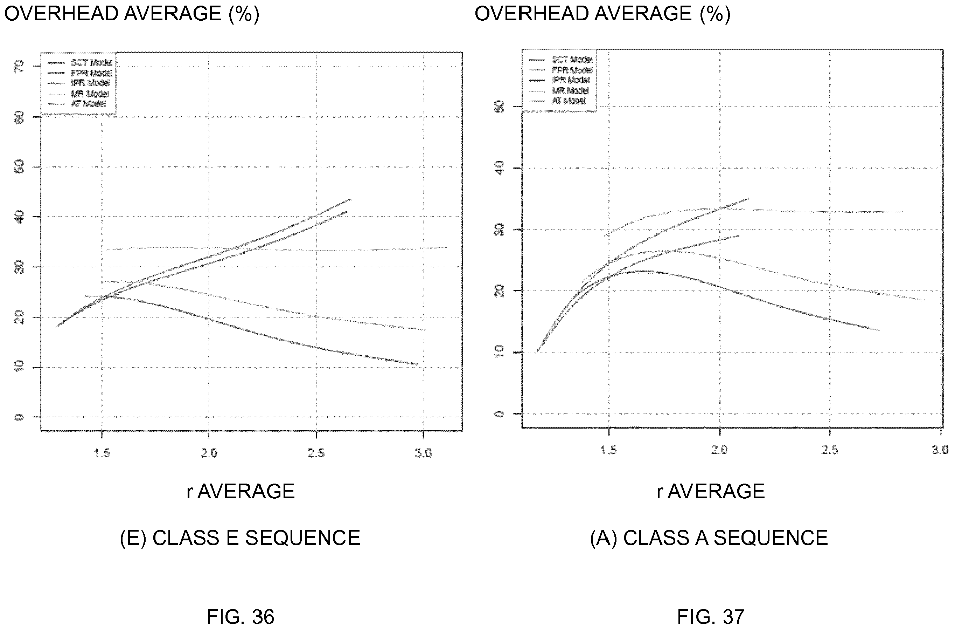

The 20 sequences were classified into five categories de-pending on the spatial resolution. Upper Class sequences have higher spatial resolution, therefore they will contain higher number of CTU. Fig. 36 illustrates the class performance of each developed transcoder model in conjunction with SCT model.

It is observed that using higher QP to reduce the bit-rate, FPR and IPR models are not that efficient to maintain high bit-rate reduction. This is observed for average bit-rate ratio values above 2.0 in the figure. For every sequence class, FPR and IPR has a rising overhead trend, which supports the observations made in the foregoing that the input block information without modification becomes less efficient for reducing bit-rate over half the input bit-rate.

FPR and IPR models have demonstrated somewhat lower performance for class C sequences. For class A, those models have shown better transcoding performance up to average bit-rate ratio of 2.0 compared to MV model. Except the performance of FPR and IPR models for sequence class C, in each case the overhead is below 50 % regardless of bit-rate ratio.

MV model has consistent performance trend through every class, where approximately equal overhead is required for reducing the bit-rate independent from the bit-rate ratio. This trend falls between rising trends of FPR-IPR models and falling trends of SCT-AT models. This is interesting, since the re-use of CU tree structure and re-estimation of MV and intra prediction directions provides an equal trade-off between quality loss due to re-use and quality gain due to re-estimations.

The goal of AT model design was to exhibit a close performance to that of SCT model. It is clear that this goal is achieved by observing and comparing the AT and SCT model performance in Fig. 36. In general, compared to FPR, IPR, and MV models, AT model has performed the best. Across the sequence classes, AT has performed worse for sequence class C and best for class D, with an approximate difference of 4 % in overhead.

As expected, for bit-rate ratios above 2.0, SCT has maintained the best transcoding performance with lowest overhead, whereas, AT model was second. Bit-rate ratio above 2.6 was unachievable with FPR and IPR models.

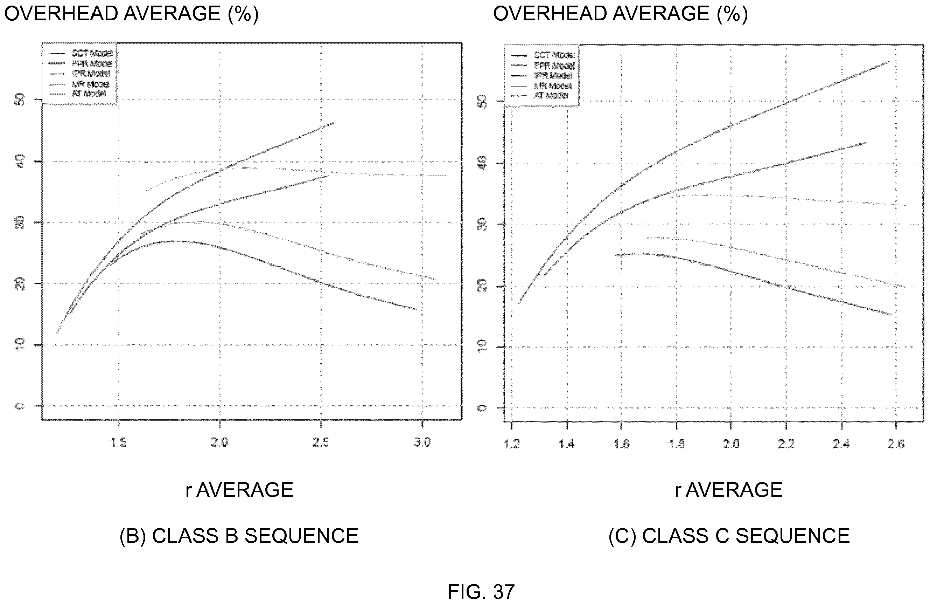

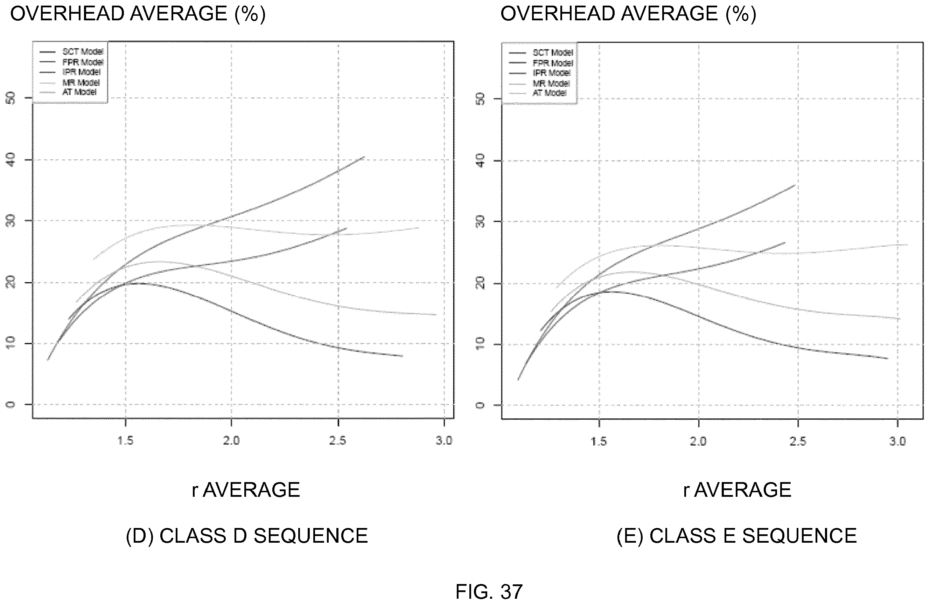

Per sequence class transcoding performance with RAM configuration is illustrated in Fig. 37.

The major difference between transcoder performance with RAM configuration compared to LDM configuration is the lower overhead of IPR model. RAM configuration incorporated an I-picture every eight pictures (one GOP) compared to single I-picture of LDM configuration. These I-pictures are used as reference pictures for inter prediction, and since they are only intra predicted with higher quality, the following pictures will have better reference quality. The effect of such GOP structure for RAM configuration is the lower overhead for IPR model compared to LDM configuration. Since IPR re-calculates the intra prediction directions for I-pictures.

MV model is similar to IPR in a sense that I-pictures are encoded with re-estimated intra prediction directions. Therefore in a similar manner to IPR, as it is observed in Fig. 37, the overhead of MV model for RAM configuration is approximately 10 % lower than LDM configuration. This observation is consistent for every sequence class.

FPR model has lower overhead for lower QP values with RAM configuration compared to LDM, as it is observed for r< 2.0. Overhead for r< 2.0 corresponds to transcoding with equal QP to base encoder. Therefore, reusing block information results in better global coding performance compared to other transcoding models which locally optimize the block structure. For higher QP values, however, similar to RAM configuration the transcoder performance drops significantly.

Time

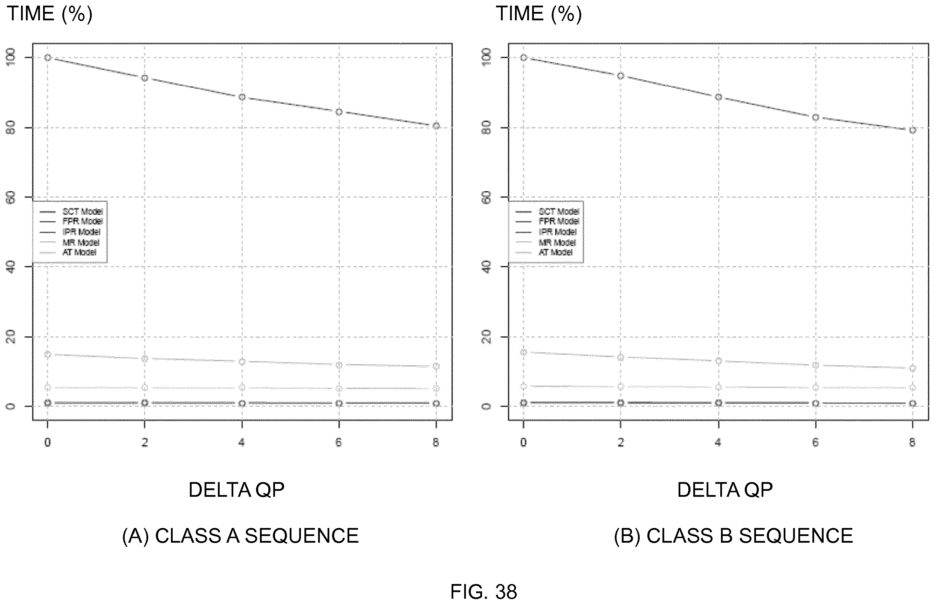

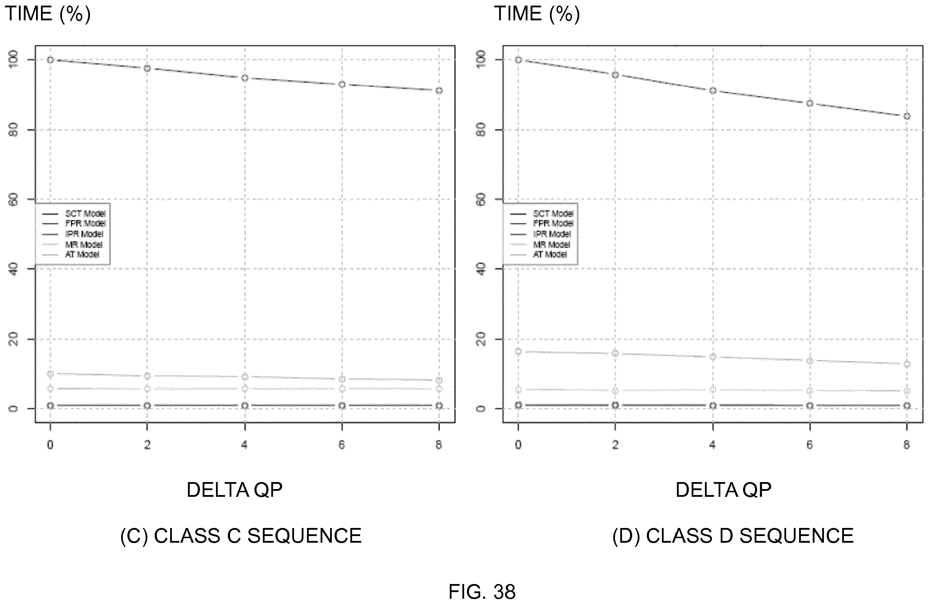

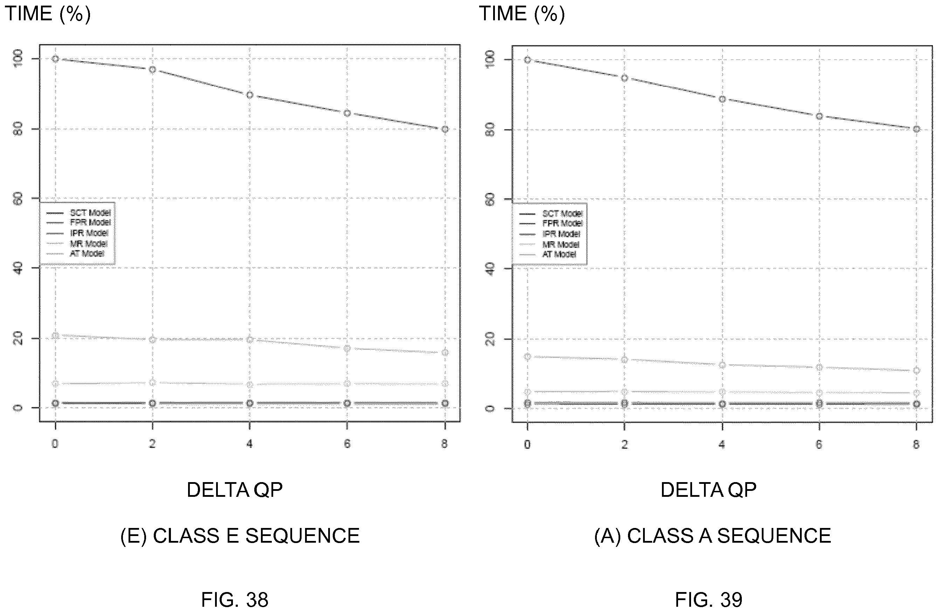

In the previous section, it was observed that SCT model has the best coding performance compared to the other transcoding models, which justifies its use as the reference. The problem with SCT model is the high computational requirements. To further illustrate this point, transcoding time differences are illustrated in Fig. 38 for each sequence classes transcoded with LDM configuration. In each plot, the maximum transcoding time is used to normalize the others into the range 0-100. In every case, the maximum transcoding time corresponds to SCT model with ΔQP = 0.

There is a visible decreasing trend for SCT and AT models for higher QP values. High QP usually produces CU tree structures that are shallow compared to lower QP values, which is due to the fact that higher QP will cause most of the coefficients from prediction stage to be truncated to zero, therefore the encoder will most likely encode more blocks with SKIP mode compared to lower QP, and as a result, the CU will stop splitting to smaller sub-CUs and therefore the final tree will be shallow. Finally, stopping the branching in lower levels of CU structure will make the search space smaller which leads to shorter transcoding time.

As expected, transcoder models with highest information re-use require the least transcoding time. FPR and IPR models require approximately equal transcoding time which is about 1 % of SCT transcoding time. Motion vector re-estimation of MV model increases the transcoding time to 5 %. AT model performs differently based on sequence class. Fastest transcoding time for AT model was recorded for class C with 10 %. Around 20 % transcoding time was observed for highest resolution sequence class for AT model. In general, transcoding time for AT model compared to SCT model has shown a decrease between 80 % to 90 %.

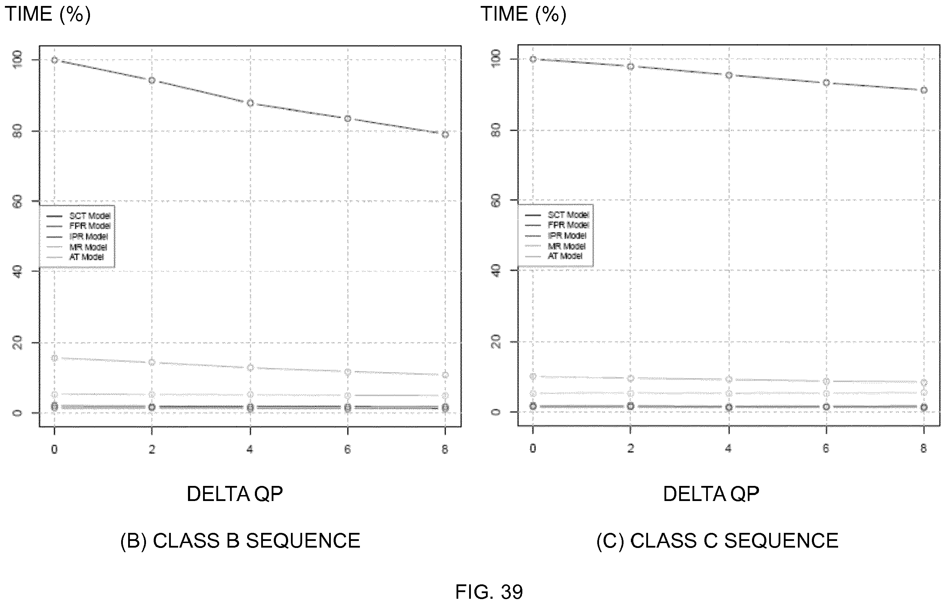

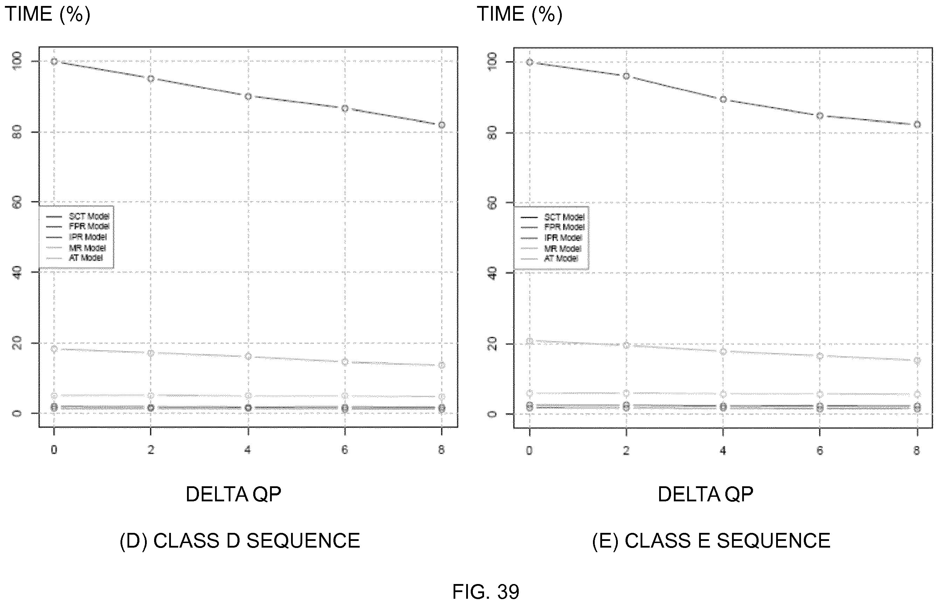

Per sequence class transcoding time with RAM configuration is shown in Fig. 39. There is no visible difference between the transcoding times compared to LDM model in terms of percentage to maximum SCT time. However transcoding RAM configuration is faster than LDM, since RAM incorporates many I-pictures, and intra prediction is faster than inter prediction. For example encoding the video sequence SteamLocomotiveTrain with spatial resolution of 2560x1600 with QP = 22 requires an average of 228 seconds per picture for LDM configuration which is greater compared to 159 seconds per picture of RAM configuration.

Conclusions

Transcoding is necessary to enable interoperability of devices with heterogeneous computational resources. Previously developed transcoding methods are insufficient for transcoding bit-streams compatible with H.265/HEVC video coding standard, which is sought to be an important part of video communication systems in near future.

An important part of H.265/HEVC design is the quad-tree based structure of CUs. This structure provides flexible coding design and higher coding performance, however, searching the space of possible structures is computationally expensive. This Annex has investigated transcoding methods that reduce the search space by reusing the CU structure information available through the input bit-stream.

Overview of Proposed Transcoding Models

This Annex focused on transcoding H.265/HEVC bit-streams for bit-rate reduction and the transcode evaluation methods. In this regard, four transcoding methods were developed:

1) Full Prediction Re-use (FPR) model: this model re-uses CU information for intra-and inter-prediction but re-calculates residuals and coefficients;
2) Intra Prediction Re-estimation (IPR): this model is similar to FPR with the difference of re-estimating prediction data for intra coded picutres;
3) MV Re-estimation (MR): this model is similar to IPR with the difference of re-estimating motion vectors after copying the CU structure from input bit-stream; and
4) Advanced Transcoding (AT): this model is a combination of previous models with specific additions to push the transcoder performance farther by efficiently extending the search space of block coding structure.

Overview of Transcoders Performance

It has been observed that re-using motion data in conjunction to CU structure, FPR an IPR models, has limited performance for bit-rate reduction below half the input bit-rate. However, as it was expected, FPR and IPR models that re-use CU information were very fast. Compared to SCT model they only required 1 % of the transcoding time. It was also noted that motion vector re-estimation based model, MR, has inverted the increasing trend of overhead for FPR and IPR with small addition of computational complexity that is approximately 5 % of SCT model.

Finally, AT model was designed with consideration of the following observations: 1) Using skip mode is likely to reduce the overhead since it requires the least number of bits for encoding; 2) PU split mode with one motion vector (2N x 2N) requires only one motion vector to be signalled; and 3) Merging blocks reduces the number of bits. It was observed that AT has demonstrated competitive performance to that of SCT within margin of 5% difference while requiring at most 80 % of transcoding time.

Originally filed claims:

1. A method of transcoding a coding tree unit (10) of a picture (2) in a video sequence (1), wherein said coding tree unit (10) comprises one or multiple coding units of pixels, said method comprising: decoding (S1) an input encoded representation of said coding tree unit (10) to obtain coding parameters for said input encoded representation, determining (S2), based on said coding parameters, a search sub-space consisting of a subset of all possible combinations of candidate encoded representations of said coding tree unit (10), and encoding (S3) said coding tree unit (10) to get an output encoded representation of said coding tree unit (10) belonging to said search sub-space.

2. The method according to item 1, wherein, decoding (S1) said input encoded representation comprises decoding (S1) said input encoded representation of said coding tree unit (10) to obtain pixel values of said pixels and said coding parameters, encoding (S3) said coding tree unit (10) comprises encoding (S3) said pixel values of said pixels to get said output encoded representation belonging to said search sub-space.

3. The method according to item 1 or 2, wherein encoding (S3) said coding tree unit (10) comprises selecting, as said output encoded representation, a candidate encoded representation i) belonging to said search sub-space and ii) optimizing a rate-distortion quality metric.

4. The method according to any of the items 1 to 3, wherein said at least one coding tree unit (10) is recursively split in a quad-tree structure of coding units, said coding parameters define said quad-tree structure and determining (S2) said search sub-space comprises determining (S2), based on said coding parameters, said search sub-space consisting of candidate encoded representations re-using said quad-tree structure defining said split of said coding tree unit into coding units.

5. The method according to any of the items 1 to 4, wherein said at least one coding tree unit (10) is recursively split in a quad-tree structure of coding units having a respective depth within said quad-tree structure, said coding parameters define said respective depths of said coding units in said quad-tree structure, and determining (S2) said search sub-space comprises determining (S2), based on said coding parameters, said search sub-space consisting of candidate encoded representations in which each coding unit has a same or shallower depth as compared to a coding unit i) defined in said input encoded representation and ii) occupying an area of said picture (2) encompassed by an area occupied by said coding unit.

6. The method according to any of the items 1 to 5, wherein said at least one coding tree unit (10) is recursively split in a quad-tree structure of coding units having a respective prediction mode, said coding parameters define said respective prediction modes, and determining (S2) said search sub-space comprises determining (S2), based on said coding parameters, said search sub-space consisting of candidate encoded representations in which a, preferably each, coding unit has a same prediction mode as a coding unit i) defined in said input encoded representation and ii) occupying an area of said picture (2) encompassing an area occupied by said coding unit.

7. The method according to any of the items 1 to 6, wherein said at least one coding tree unit (10) is recursively split in a quad-tree structure of coding units having a respective partitioning mode, said coding parameters define said respective partitioning modes and determining (S2) said search sub-space comprises (S2) determining, based on said coding parameters, said search sub-space consisting of candidate encoded representations in which a, preferably each, coding unit has a same or shallower partitioning mode as compared to a coding unit ii) defined in said input encoded representation and ii) occupying an area of said picture (2) encompassing an area occupied by said coding unit.

8. The method according to any of the items 1 to 7, said at least one coding tree unit (10) is recursively split in a quad-tree structure of coding units having a respective prediction mode, said coding parameters define at least one respective intra prediction mode of any coding unit having intra prediction as prediction mode and determining (S2) said search sub-space comprises determining (S2), based on said coding parameters, said search sub-space consisting of candidate encoded representations in which a, preferably each, coding unit occupying an area of said picture (2) encompassed by an area occupied by a coding unit i) defined in said input encoded representation and ii) having intra prediction as prediction mode has a same or neighboring intra prediction mode as said coding unit i) defined in said input encoded representation and ii) having intra prediction as prediction mode.

9. The method according to any of the items 1 to 8, wherein said at least one coding tree unit (10) is recursively split in a quad-tree structure of coding units having a respective prediction mode, said coding parameters define at least one motion vector of any coding unit having inter prediction as prediction mode, and determining (S2) said search sub-space comprises determining (S2), based on said coding parameters, said search sub-space consisting of candidate encoded representations in which a, preferably each, coding unit occupying an area of said picture (2) encompassed by an area occupied by a coding unit i) defined in said input encoded representation and ii) having inter prediction as prediction mode has same or neighboring motion vector or vectors as said coding unit i) defined in said input encoded representation and ii) having inter prediction as prediction mode.

10. The method according to any of the items 1 to 9, said at least one coding tree unit (10) is recursively split in a quad-tree structure of coding units having a respective depth within said quad-tree structure, each coding unit has a respective prediction mode and a respective partitioning mode;

said coding parameters define said respective depths, said respective prediction modes, said respective partitioning modes, at least one motion vector for any coding unit having inter prediction as prediction mode and at least one intra prediction mode for any coding unit having intra prediction as prediction mode;
determining (S2) said search sub-space comprises determining (S2), based on said coding parameters, said search sub-space consisting of candidate encoded representations in which a, preferably each, coding unit has

a) a same depth, a same prediction mode and a same partitioning mode as a coding unit i) defined in said input encoded representation and ii) occupying a same area of said picture (2) as said coding unit, and
b) same or, optionally neighboring, motion vector or vectors as a coding unit i) defined in said input encoded representation, ii) having inter prediction as prediction mode and iii) occupying a same area of said picture (2) as said coding unit, or
c) a same or, optionally neighboring, intra prediction mode as a coding unit i) defined in said input encoded representation, ii) having intra prediction as prediction mode and iii) occupying a same area of said picture (2) as said coding unit.

11. The method according to any of the items 1 to 10, wherein said at least one coding tree unit (10) is recursively split in a quad-tree structure of coding units comprising one or more transform units for which a block transform is applied during decoding; said coding parameters define said transform unit sizes; determining (S2) said search sub-space comprises determining (S2), based on said coding parameters, said search sub-space consisting of candidate encoded representations in which one or more transform units of a, preferably each, coding unit has a same or larger size in terms of number of pixels as compared to a coding unit i) defined in said input encoded representation and ii) occupying a same area of said picture (2) as said coding unit.

12. A transcoder (100) configured to transcode a coding tree unit (10) of a picture (2) in a video sequence (1), said coding tree unit (10) comprises one or multiple coding units of pixels, wherein said transcoder (100) comprises: a decoder (110) configured to decode an input encoded representation of said coding tree unit (10) to obtain coding parameters for said input encoded representation; a search-sub space determiner (120) configured to determine, based on said coding parameters, a search sub-space consisting of a subset of all possible combinations of candidate encoded representations of said coding tree unit (10); and an encoder (130) configured to encode said coding tree unit (10) to get an output encoded representation of said coding tree unit (10) belonging to said search sub-space.

13. The transcoder according to item 12, wherein said decoder (110) is configured to decode said input encoded representation of said coding tree unit (10) to obtain pixel values of said pixels and said coding parameters; and said encoder (130) is configured to encode said pixel values of said pixels to get said output encoded representation belonging to said search sub-space.

14. The transcoder according to item 12 or 13, said encoder (130) is configured to select, as said output encoded representation, a candidate encoded representation i) belonging to said search sub-space and ii) optimizing a rate-distortion quality metric.

15. The transcoder according to any of the items 12 to 14, wherein said at least one coding tree unit (10) is recursively split in a quad-tree structure of coding units; said coding parameters define said quad-tree structure; said search sub-space determiner (120) is configured to determine, based on said coding parameters, said search sub-space consisting of candidate encoded representations re-using said quad-tree structure defining said split of said coding tree unit (10) into coding units.

16. The transcoder according to any of the items 12 to 15, wherein said at least one coding tree unit (10) is recursively split in a quad-tree structure of coding units having a respective depth within said quad-tree structure; said coding parameters define said respective depths of said coding units in said quad-tree structure; said search sub-space determiner (120) is configured to determine, based on said coding parameters, said search sub-space consisting of candidate encoded representations in which each coding unit has a same or shallower depth as compared to a coding unit i) defined in said input encoded representation and ii) occupying an area of said picture (2) encompassed by an area occupied by said coding unit.

17. The transcoder according to any of the items 12 to 16, wherein said at least one coding tree unit (10) is recursively split in a quad-tree structure of coding units having a respective prediction mode; said coding parameters define said respective prediction modes; said search sub-space determiner (120) is configured to determine, based on said coding parameters, said search sub-space consisting of candidate encoded representations in which a, preferably each, coding unit has a same prediction mode as a coding unit i) defined in said input encoded representation and ii) occupying an area of said picture (2) encompassing an area occupied by said coding unit.

18. The transcoder according to any of the items 12 to 17, wherein said at least one coding tree unit (10) is recursively split in a quad-tree structure of coding units having a respective partitioning mode; said coding parameters define said respective partitioning modes; said search sub-space determiner (120) is configured to determine, based on said coding parameters, said search sub-space consisting of candidate encoded representations in which a, preferably each, coding unit has a same or shallower partitioning mode as compared to a coding unit ii) defined in said input encoded representation and ii) occupying an area of said picture (2) encompassing an area occupied by said coding unit.

19. The transcoder according to any of the items 12 to 18, wherein said at least one coding tree unit (10) is recursively split in a quad-tree structure of coding units having a respective prediction mode, said coding parameters define at least one respective intra prediction mode of any coding unit having intra prediction as prediction mode; said search sub-space determiner (120) is configured to determine, based on said coding parameters, said search sub-space consisting of candidate encoded representations in which a, preferably each, coding unit occupying an area of said picture (2) encompassed by an area occupied by a coding unit i) defined in said input encoded representation and ii) having intra prediction as prediction mode has a same or neighboring intra prediction mode as said coding unit i) defined in said input encoded representation and ii) having intra prediction as prediction mode.

20. The transcoder according to any of the items 12 to 19, wherein said at least one coding tree unit (10) is recursively split in a quad-tree structure of coding units having a respective prediction mode; said coding parameters define at least one motion vector of any coding unit having inter prediction as prediction mode; said search sub-space determiner (120) is configured to determine, based on said coding parameters, said search sub-space consisting of candidate encoded representations in which a, preferably each, coding unit occupying an area of said picture (2) encompassed by an area occupied by a coding unit i) defined in said input encoded representation and ii) having inter prediction as prediction mode has same or neighboring motion vector or vectors as said coding unit i) defined in said input encoded representation and ii) having inter prediction as prediction mode.

21. The transcoder according to any of the items 12 to 20, said at least one coding tree unit (10) is recursively split in a quad-tree structure of coding units having a respective depth within said quad-tree structure, each coding unit has a respective prediction mode and a respective partitioning mode; said coding parameters define said respective depths, said respective prediction modes, said respective partitioning modes, at least one motion vector for any coding unit having inter prediction as prediction mode and at least one intra prediction mode for any coding units having intra prediction as prediction mode; said search sub-space determiner (102) is configured to determine, based on said coding parameters, said search sub-space consisting of candidate encoded representations in which a, preferably each, coding unit has

    a) a same depth, a same prediction mode and a same partitioning mode as a coding unit i) defined in said input encoded representation and ii) occupying a same area of said picture (2) as said coding unit, and
    b) same or, optionally neighboring, motion vector or vectors as a coding unit i) defined in said input encoded representation, ii) having inter prediction as prediction mode and iii) occupying a same area of said picture (2) as said coding unit, or
    c) a same or, optionally neighboring, intra prediction mode as a coding unit i) defined in said input encoded representation, ii) having intra prediction as prediction mode and iii) occupying a same area of said picture (2) as said coding unit.

22. The transcoder according to any of the items 12 to 21, wherein said at least one coding tree unit (10) is recursively split in a quad-tree structure of coding units comprising one or more transform units for which a block transform is applied during decoding; said coding parameters define said transform unit sizes; said search sub-space determiner (120) is configured to determine, based on said coding parameters, said search sub-space consisting of candidate encoded representations in which one or more transform units of a, preferably each, coding unit has a same or larger size in terms of number of pixels as compared to a coding unit i) defined in said input encoded representation and ii) occupying a same area of said picture (2) as said coding unit.

23. A transcoder (200) configured to transcode a coding tree unit (10) of a picture (2) in a video sequence (1), said coding tree unit (10) comprises one or multiple coding units of pixels, wherein said transcoder (200) comprises: a processor (210); and a memory (220), said memory (120) containing instructions executable by said processor (110), wherein said processor (210) is operable to: decode an input encoded representation of said coding tree unit (10) to obtain coding parameters for said input encoded representation; determine, based on said coding parameters, a search sub-space consisting of a subset of all possible combinations of candidate encoded representations of said coding tree unit (10); and encode said coding tree unit (10) to get an output encoded representation of said coding tree unit (10) belonging to said search sub-space.

24. A transcoder (300) for transcoding a coding tree unit (10) of a picture (2) in a video sequence (1), said coding tree unit (10) comprises one or multiple coding units of pixels, wherein said transcoder (300) comprises: a decoding module (310) for decoding an input encoded representation of said coding tree unit (10) to obtain coding parameters for said input encoded representation; a search-sub space determining module (320) for determining, based on said coding parameters, a search sub-space consisting of a subset of all possible combinations of candidate encoded representations of said coding tree unit (10); and an encoding module (330) for encoding said coding tree unit (10) to get an output encoded representation of said coding tree unit (10) belonging to said search sub-space.

25. A user equipment or terminal (80) comprising a transcoder (100, 200, 300) according to any of the items 12 to 24.

26. A network device (30) being or configured to be arranged in a network node in a communication network (32), said network device (30) comprises a transcoder (100, 200, 300) according to any of the items 12 to 24.

27. A computer program (14) configured to transcode a coding tree unit (10) of a picture (2) in a video sequence (2), said coding tree unit (10) comprises one or multiple coding units of pixels, wherein said computer program (14) comprises code means which when run on a computer (10) causes said computer (10) to: decode an input encoded representation of said coding tree unit (10) to obtain coding parameters for said input encoded representation; determine, based on said coding parameters, a search sub-space consisting of a subset of all possible combinations of candidate encoded representations of said coding tree unit (10); and encode said coding tree unit (10) to get an output encoded representation of said coding tree unit (10) belonging to said search sub-space.

28. A computer program product (13) comprising computer readable code means and a computer program (14) according to item 27 stored on said computer readable code means.

29. A carrier comprising a computer program (14) according to item 27, wherein said carrier is one of an electronic signal, an optical signal, an electromagnetic signal, a magnetic signal, an electric signal, a radio signal, a microwave signal, or a computer-readable storage medium (13).

**Claims**

1. A method of transcoding a coding tree unit (10) of a picture (2) in a video sequence (1), wherein said video sequence is High Efficiency Video Coding ,HEVC, video sequence and wherein said coding tree unit (10) comprises one or multiple coding units of pixels, said method comprising
decoding (S1) an input encoded representation of said coding tree unit (10) to obtain coding parameters for said input encoded representation, wherein said input encoded representation is an HEVC encoded representation and wherein said coding tree unit (10) is recursively split in a quad-tree structure of coding units based on said coding parameters;
determining (S2), based on said coding parameters, a search sub-space consisting of a subset of all possible combinations of candidate encoded representations of said coding tree unit (10), wherein determining (S2) said search sub-space comprises determining, based on said coding parameters, said search sub-space consisting of the candidate encoded representation in which each coding unit has:

a) a same depth, a same prediction mode and a same partitioning mode as a coding unit i) defined in said input encoded representation and ii) occupying a same area of said picture (2) as said coding unit, and
b) same or neighboring motion vector or vectors as a coding unit i) defined in said input encoded representation, ii) having inter prediction as prediction mode and iii) occupying a same area of said picture (2) as said coding unit, or
c) a same or neighboring intra prediction mode as a coding unit i) defined in said input encoded representation, ii) having intra prediction as prediction mode and iii) occupying a same area of said picture (2) as said coding unit; and

encoding (S3) said coding tree unit (10) to get an output encoded representation of said coding tree unit (10) belonging to said search sub-space.

2. The method according to claim 1, wherein
decoding (S1) said input encoded representation comprises decoding (S1) said input encoded representation of said coding tree unit (10) to obtain pixel values of said pixels and said coding parameters;
encoding (S3) said coding tree unit (10) comprises encoding (S3) said pixel values of said pixels to get said output encoded representation belonging to said search sub-space.

3. The method according to claim 1 or 2, wherein encoding (S3) said coding tree unit (10) further comprises selecting, as said output encoded representation, a candidate encoded representation i) belonging to said search sub-space and ii) optimizing a rate-distortion quality metric.

4. The method according to any of the claims 1 to 3, wherein:

said coding parameters define said quad-tree structure;
determining (S2) said search sub-space comprises determining (S2), based on said coding parameters, said search sub-space consisting of candidate encoded representations re-using said quad-tree structure defining said split of said coding tree unit into coding units.

5. The method according to any of the claims 1 to 4, wherein:

said coding units of said quad-tree structure having a respective depth within said quad-tree structure, each coding unit has a respective prediction mode and a respective partitioning mode; and
said coding parameters further define said respective depths, said respective prediction modes, said respective partitioning modes, at least one motion vector for any coding unit having inter prediction as prediction mode and at least one intra prediction mode for any coding unit having intra prediction as prediction mode.

6. An apparatus comprising means of performing the method according to at least one of claims 1-5.

7. A user equipment or terminal (80) comprising the apparatus according to claim 6.

8. A network device (30) being or configured to be arranged in a network node in a communication network (32), wherein said network device (30) comprises the apparatus according to claim 6.

9. A transcoder (100) configured to transcode a coding tree unit (10) of a picture (2) in a video sequence (1), wherein said video sequence is High Efficiency Video Coding, HEVC, video sequence and said coding tree unit (10) comprises one or multiple coding units of pixels, wherein said transcoder (100) comprises:

a decoder (110) configured to decode an input encoded representation of said coding tree unit (10) to obtain coding parameters for said input encoded representation wherein said input encoded representation is an HEVC encoded representation and wherein said coding tree unit (10) is recursively split in a quad-tree structure of coding units based on said coding parameters;
a search-sub space determiner (120) configured to determine, based on said coding parameters, a search sub-space consisting of a subset of all possible combinations of candidate encoded representations of said coding tree unit (10),
wherein to determine said search sub-space, said computer program (14) further comprises code means which, when run on the computer (10) causes said computer (10) to determine, based on said coding parameters, said search sub-space consisting of the candidate encoded representation in which each coding unit has:

> a) a same depth, a same prediction mode and a same partitioning mode as a coding unit i) defined in said input encoded representation and ii) occupying a same area of said picture (2) as said coding unit, and
> b) same or neighboring motion vector or vectors as a coding unit i) defined in said input encoded representation, ii) having inter prediction as prediction mode and iii) occupying a same area of said picture (2) as said coding unit, or
> c) a same or neighboring intra prediction mode as a coding unit i) defined in said input encoded representation, ii) having intra prediction as prediction mode and iii) occupying a same area of said picture (2) as said coding unit; and

an encoder (130) configured to encode said coding tree unit (10) to get an output encoded representation of said coding tree unit (10) belonging to said search sub-space.

10. A computer program (14) configured to transcode a coding tree unit (10) of a picture (2) in a video sequence (1), wherein said video sequence is High Efficiency Video Coding, HEVC, video sequence and said coding tree unit (10) comprises one or multiple coding units of pixels, wherein said computer program (14) comprises code means which when run on a computer (10) causes said computer (10) to

decode an input encoded representation of said coding tree unit (10) to obtain coding parameters for said input encoded representation wherein said input encoded representation is an HEVC encoded representation and wherein said coding tree unit (10) is recursively split in a quad-tree structure of coding units based on said coding parameters; determine, based on said coding parameters, a search sub-space consisting of a subset of all possible combinations of candidate encoded representations of said coding tree unit (10),

wherein to determine said search sub-space, said computer program (14) further comprises code means which, when run on the computer (10) causes said computer (10) to determine, based on said coding parameters, said search sub-space consisting of the candidate encoded representation in which each coding unit has:

> a) a same depth, a same prediction mode and a same partitioning mode as a coding unit i) defined in said input encoded representation and ii) occupying a same area of said picture (2) as said coding unit, and
> b) same or neighboring motion vector or vectors as a coding unit i) defined in said input encoded representation, ii) having inter prediction as prediction mode and iii) occupying a same area of said picture (2) as said coding unit, or
> c) a same or neighboring intra prediction mode as a coding unit i) defined in said input encoded representation, ii) having intra prediction as prediction mode and iii) occupying a same area of said picture (2) as said coding unit; and

encode said coding tree unit (10) to get an output encoded representation of said coding tree unit (10) belonging to said search sub-space.

11. A computer program product (13) comprising computer readable code means and a computer program (14) according to claim 10 stored on said computer readable code means.

FIG. 1

FIG. 2

FIG. 3

FIG. 4

Video Source → HEVC Encoder → HEVC Bit-stream 1

HEVC Bit-stream 1 → Input → HEVC Transcoder → Output → HEVC Bit-stream 2

HEVC Bit-stream 2 → HEVC Decoder → Video Sink

FIG. 5

*Simple Cascaded Transcoder*

Bit-stream₁ → Input → Decoder → Pixel Data → Encoder → Output → Bit-stream₂

Decoder → CODING PARAMETERS → Discarded

FIG. 6

D_0 64x64
D_1 32x32
D_2 16x16
D_3 8x8

Root

FIG. 7

FIG. 8

CU Split Information

CU Structure

FIG. 9

EP 3 886 433 A2

FIG. 10

FIG. 11

FIG. 12

0

D_?
?

1

D_2
INTER
2Nx2N

4

D_1
INTER
2Nx2N

2

D_2
INTER
2Nx2N

3

D_?
?

5

D_?
?

6

D_2
INTER
NxN

7

D_2
INTER
2Nx2N

8

D_2
INTER
nLx2N

9

D_?
?

CODING PARAMETERS

FIG. 13

Root

D_0
64x64

2Nx2N

?

D_1
32x32

?
2Nx2N

?

2Nx2N

NxN
2Nx2N

?

nLx2n

D_2
16x16

D_3
8x8

FIG. 14

EP 3 886 433 A2

FIG. 15

FIG. 16

FIG. 17

EP 3 886 433 A2

FIG. 18

FIG. 20

FIG. 19

FIG. 21

FIG. 22

FIG. 23

EP 3 886 433 A2

FIG. 24

EP 3 886 433 A2

EP 3 886 433 A2

```
┌─────────────────┐                    ┌─────────────────┐
│ Video Conference│ ────────────────▶  │     Encoder     │
│  Source Video   │                    │                 │
└─────────────────┘                    └─────────────────┘
                                                │
                                                ▼
┌─────────────────┐      ╭─────────────╮      ┌─────────────────────┐
│    Bit-rate     │ ◀──  │ Transmission │ ──▶  │ Temporal Resolution │
│   Transcoder    │      ╰─────────────╯      │     Transcoder      │
└─────────────────┘             │              └─────────────────────┘
         │                      │                         │
      Reduced                   ▼                     Redcued
      Bit-rate          ┌─────────────────┐           Number of
         │              │ Spatial Resolution│           Frames
         ▼              │    Transcoder    │              │
┌─────────────────┐     └─────────────────┘              ▼
│    Wireless     │              │              ┌─────────────────┐
│      Hub        │          Reduced            │   TV Network    │
└─────────────────┘         Resolution          └─────────────────┘
         │                      │                         │
         ▼                      ▼                         ▼
┌─────────────────┐     ┌─────────────────┐      ┌─────────────────┐
│     Decoder     │     │       LAN       │      │     Decoder     │
└─────────────────┘     └─────────────────┘      └─────────────────┘
         │                      │                         │
         ▼                      ▼                         ▼
┌─────────────────┐     ┌─────────────────┐      ┌─────────────────┐
│   Cell-phone    │     │     Decoder     │      │   Television    │
└─────────────────┘     └─────────────────┘      └─────────────────┘
                                │
                                ▼
                        ┌─────────────────┐
                        │     Monitor     │
                        └─────────────────┘
```

FIG. 25

FIG. 26

FIG. 27

FIG. 28

FIG. 29

FIG. 30

FIG. 31

FIG. 32

PSNR Y (db)

BIT-RATE (kBIT/SEC)

transcoded from base qp 22
transcoded from base qp 26
transcoded from base qp 30
base sequence

FIG. 33

OVERHEAD AVERAGE (%)

OVERHEAD AVERAGE (%)

r AVERAGE

r AVERAGE

(A) FPR TRANSCODING MODEL

(B) MV TRANSCODING MODEL

FIG. 34

EP 3 886 433 A2

PSNR Y (db)

(A) FPR TRANSCODING MODEL

PSNR Y (db)

(B) MV TRANSCODING MODEL

FIG. 35

(A) CLASS A SEQUENCE

(B) CLASS B SEQUENCE

FIG. 36

OVERHEAD AVERAGE (%)

OVERHEAD AVERAGE (%)

r AVERAGE

r AVERAGE

(C) CLASS C SEQUENCE

(D) CLASS D SEQUENCE

FIG. 36

OVERHEAD AVERAGE (%)

r AVERAGE

(E) CLASS E SEQUENCE

FIG. 36

OVERHEAD AVERAGE (%)

r AVERAGE

(A) CLASS A SEQUENCE

FIG. 37

EP 3 886 433 A2

OVERHEAD AVERAGE (%)

OVERHEAD AVERAGE (%)

(B) CLASS B SEQUENCE

(C) CLASS C SEQUENCE

FIG. 37

OVERHEAD AVERAGE (%)

OVERHEAD AVERAGE (%)

SCT Model
FPR Model
IPR Model
MR Model
AT Model

SCT Model
FPR Model
IPR Model
MR Model
AT Model

r AVERAGE

r AVERAGE

(E) CLASS E SEQUENCE

(D) CLASS D SEQUENCE

FIG. 37

79

TIME (%)

TIME (%)

DELTA QP

DELTA QP

(A) CLASS A SEQUENCE

(B) CLASS B SEQUENCE

FIG. 38

EP 3 886 433 A2

(C) CLASS C SEQUENCE

(D) CLASS D SEQUENCE

FIG. 38

EP 3 886 433 A2

TIME (%)

DELTA QP

(E) CLASS E SEQUENCE

FIG. 38

TIME (%)

DELTA QP

(A) CLASS A SEQUENCE

FIG. 39

FIG. 39

(B) CLASS B SEQUENCE

(C) CLASS C SEQUENCE

EP 3 886 433 A2

(D) CLASS D SEQUENCE

(E) CLASS E SEQUENCE

FIG. 39

## FIG. 40

**TRANSCODER** 200

BIT-STREAM₁ → **I/O UNIT** 230 → BIT-STREAM₂

**PROCESSOR** 210

**MEMORY** 220

## FIG. 41

**TRANSCODER** 300

**DECODING MODULE** 310

**SEARCH SUBSPACE DETERMINING MODULE** 320

**ENCODING MODULE** 330